# EUROPEAN PATENT SPECIFICATION

(11) **EP 4 496 361 B1**
(45) Date of publication and mention of the grant of the patent: **28.10.2026**
(21) Application number: 23806832.4
(22) Date of filing: 12.05.2023
(51) Int. Cl.: H04W 4/80, H04W 84/18

(54) **COMMUNICATION METHOD AND SYSTEM, AND RELATED DEVICE**
KOMMUNIKATIONSVERFAHREN UND -SYSTEM SOWIE ZUGEHÖRIGE VORRICHTUNG
PROCÉDÉ ET SYSTÈME DE COMMUNICATION, ET DISPOSITIF ASSOCIÉ

(30) Priority: 17.05.2022 CN 202210537177
(43) Date of publication of application: 22.01.2025
(73) Proprietor: Huawei Technologies Co., Ltd., Shenzhen, Guangdong 518129 (CN)
(72) Inventor: YUAN, Jiang, Shenzhen, Guangdong 518129 (CN); LIU, Kaizhao, Shenzhen, Guangdong 518129 (CN); LUO, Cheng, Shenzhen, Guangdong 518129 (CN)
(74) Representative: Isarpatent
(86) International application number: PCT/CN2023/093746
(87) International publication number: WO 2023/221880

(56) References cited:
- WO-A1-2021/082829
- WO-A1-2022/055415
- WO-A1-2022/055415
- CN-A- 105 846 864
- CN-A- 110 198 534
- US-A1- 2012 083 209
- US-A1- 2016 110 302
- US-A1- 2022 027 000
- US-A1- 2022 030 403
- US-A1- 2022 039 179
- US-A1- 2022 394 794

## Description

### TECHNICAL FIELD

This application relates to the field of communication technologies, and in particular, to a communication method and system, and a related device.

### BACKGROUND

With the development of terminal technologies, there are more accessory devices (for example, Bluetooth accessory devices such as a Bluetooth mouse, a Bluetooth keyboard, a stylus, and a Bluetooth speaker) in a current market. These accessory devices may establish communication connections (for example, Bluetooth communication connections) with a host device (for example, a tablet, a personal computer, or a large screen) to implement data exchange. However, currently, use scenarios of the accessory devices are still limited, and user experience is poor.

US 2022/027000 A1 describes a method that includes determining a physical location of each of a plurality of peripheral devices communicatively coupled to a host computing device, the each of the plurality of peripheral devices including a computer mouse; generating a lighting sequence configured to activate visual output elements on the each of the plurality of peripheral devices; and modifying the lighting sequence based on the physical location of the computer mouse relative to at least one of the other plurality of peripheral devices. In some aspects, the plurality of peripheral devices further includes a mouse pad, and modifying the lighting sequence for the computer mouse is based on the location of the computer mouse relative to its position on the mouse pad. In some cases, modifying the lighting sequence for the computer mouse is based on the location of the computer mouse relative to its position to the other plurality of peripheral devices.
US 2016/110302 A1 describes embodiments that provide a method and system of switching a wireless connection between a plurality of input devices and a first host device to at least a second host device. Embodiments of the disclosure are directed to systems and methods for switching multiple, independently connected data input devices from a first host computing device to a second host computing device together based on a single command or operation.
US 2012/083209 A1 describes a wireless communications system that includes an accessory device and multiple host devices. A host device pairs wirelessly with an accessory device using a unique link key, detects a primary trigger event and responds by transferring automatically its pairing with the accessory device to a second host device while all devices remain within wireless range of each other. The pairing transfer involves communicating the link key to the second host device, unpairing the accessory device from the first host device, and establishing a wireless pairing of the accessory device to the second host device. The primary trigger event can involve establishing a ported connection between host devices. A secondary trigger event results in the first host device automatically reclaiming its pairing with the accessory device. An accessory device can also select and pair with one of multiple host devices in response to a specific user gesture detected by the accessory device.
WO 2022/055415 A1 describes methods and devices for facilitating the seamless handover of Bluetooth communications of a Bluetooth accessory device from a first Bluetooth host to a second Bluetooth host. A first host identifier uniquely identifies the first Bluetooth host for its Bluetooth communications, and a second host identifier uniquely identifies the second Bluetooth host for its Bluetooth communications. The host identifiers are stored in the Bluetooth accessory device, and they are provided to an application on the mobile device that allows a user to select either the first or the second host as the selected host for the Bluetooth accessory device, without having to repair the host device to the accessory device. Because re-pairing is not necessary, the user can quickly and seamlessly switch the Bluetooth accessory's communications among multiple different host devices.
WO 2021/082829 A1 describes a Bluetooth connection method and a related apparatus, which relate to the technical field of short-range wireless communications. The method comprises: a first electronic device establishing BLE connection with a second electronic device, and exchanging data with the second electronic device by means of a first connection interval; the first electronic device further establishing BR/EDR connection with a third electronic device; and when device type information of the second electronic device is the same as device type information pre-stored in a memory, the first electronic device exchanging data with the second electronic device by means of a second connection interval, wherein the second connection interval is greater than the first connection interval.

### SUMMARY

An object of the present invention is to provide a communication method, a system, and a related device, so that a plurality of accessory devices can implement differentiated functions in collaboration in corresponding scenarios, to simplify a user operation and improve user experience. This object is solved by the subject-matter of the appended independent claims. Further embodiments are defined in the dependent claims.

According to a first aspect, an embodiment of this application provides a communication method, applied to a communication system, where the communication system includes a first host device, a first accessory device, and a second accessory device. The method includes: The first accessory device establishes a first communication connection with the first host device; the second accessory device establishes a second communication connection with the first host device; the first accessory device detects a first event triggered by a user, and in response to the first event, the first accessory device sends first data to the first host device through the first communication connection, where the first data includes information about the first event; the first host device sends the information about the first event to the second accessory device through the second communication connection; and the second accessory device receives the information about the first event sent by the first host device, and performs a response operation based on the information about the first event.

According to the method provided in the first aspect, when a plurality of accessory devices establish communication connections (for example, Bluetooth communication connections) with a host device, a data communication channel may be provided for the plurality of accessory devices based on a routing function (for example, a Bluetooth routing function) of the host device. In this way, data communication may be performed between the plurality of accessory devices, so that the plurality of accessory devices can implement differentiated functions in collaboration in corresponding scenarios, to simplify user operations and improve user experience.

The first data further includes device information of one or more accessory devices, the device information of the one or more accessory devices includes device information of the second accessory device, and the device information of the second accessory device is used by the first host device to determine to send the information about the first event to the second accessory device.

In this way, the first host device may determine, based on the device information of the second accessory device, to send the information about the first event to the second accessory device.

In a possible implementation, the communication system further includes a second host device. The first event is an event of changing a focus host device from the first host device to the second host device. The information about the first event includes device information of the second host device. That the second accessory device performs a response operation based on the information about the first event specifically includes: The second accessory device sends a first direct advertising message based on the device information of the second host device; and when the second host device receives the first direct advertising message, the second accessory device changes the focus host device from the first host device to the second host device, and the second accessory device establishes a third communication connection with the second host device.

In this way, the user may change the focus host device of all the accessory devices from the first host device to the second host device by one click, which is convenient and quick.

In a possible implementation, the first accessory device is a keyboard, the second accessory device is a mouse, and the first event is an event of pressing a button for adjusting dots per inch (DPI). The information about the first event includes a button value of the button for adjusting the DPI. That the second accessory device performs a response operation based on the information about the first event specifically includes: The second accessory device adjusts DPI of the second accessory device based on the button value of the button for adjusting the DPI.

In this way, the user may adjust the DPI of the mouse through the keyboard.

In a possible implementation, the button for adjusting the DPI includes a DPI button, a button combination for increasing the DPI, or a button combination for decreasing the DPI. That the second accessory device adjusts DPI of the second accessory device based on the button value of the button for adjusting the DPI specifically includes: When the button for adjusting the DPI is the DPI button, the second accessory device increases or decreases the DPI of the second accessory device based on the button value of the DPI button; when the button for adjusting the DPI is the button combination for increasing the DPI, the second accessory device increases the DPI of the second accessory device based on the button value of the button combination for increasing the DPI; or when the button for adjusting the DPI is the button combination for decreasing the DPI, the second accessory device decreases the DPI of the second accessory device based on the button value of the button combination for decreasing the DPI.

In this way, the user may increase or decrease the DPI of the mouse through the DPI button or a button combination for the DPI on the keyboard.

In a possible implementation, the first accessory device is a keyboard, the second accessory device is a mouse, and the first event is an event of pressing a button for adjusting a light effect. The information about the first event includes a button value of the button for adjusting the light effect. That the second accessory device performs a response operation based on the information about the first event specifically includes: The second accessory device adjusts a light effect of the second accessory device based on the button value of the button for adjusting the light effect.

In this way, the user may adjust the light effect (for example, brightness and a mode of the light effect) of the mouse through the keyboard.

In a possible implementation, the button for adjusting the light effect includes a light up button for increasing brightness, a light down button for decreasing brightness, a button combination for increasing brightness, or a button combination for decreasing brightness. That the second accessory device adjusts a light effect of the second accessory device based on the button value of the button for adjusting the light effect specifically includes: When the button for adjusting the light effect is the light up button or the button combination for increasing the brightness, the second accessory device increases brightness of the light effect of the second accessory device based on a button value of the light up button or a button value of the button combination for increasing the brightness; or when the button for adjusting the light effect is the light down button or the button combination for decreasing the brightness, the second accessory device decreases brightness of the light effect of the second accessory device based on a button value of the light down button or a button value of the button combination for decreasing the brightness.

In this way, the user may adjust the brightness of the light effect of the mouse through the button for adjusting the light effect on the keyboard.

In a possible implementation, the button for adjusting the light effect includes a single button or a button combination for switching a mode of the light effect. That the second accessory device adjusts a light effect of the second accessory device based on the button value of the button for adjusting the light effect specifically includes: The second accessory device switches a mode of the light effect of the second accessory device based on a button value of the single button or the button combination for switching the mode of the light effect.

In this way, the user may adjust the mode of the light effect of the mouse through the button for adjusting the light effect on the keyboard.

In a possible implementation, the first accessory device is a mouse, the second accessory device is a keyboard, and the first event is an event of pressing a first button by the user. That the second accessory device performs a response operation based on the information about the first event specifically includes: The second accessory device converts the event of pressing the first button by the user and an event of pressing a second button by the user into an event of pressing a third button by the user, where the event of pressing the second button by the user is detected by the second accessory device after receiving the information about the first event sent by the first host device; the second accessory device sends a button value of the third button to the first host device; and the first host device responds to a function corresponding to the button value of the third button.

In this way, the user may form a button combination through collaboration between the mouse and the keyboard, to reduce a quantity of buttons of the keyboard. This reduces a size of the keyboard and meets a requirement of the user.

In a possible implementation, after the second accessory device sends the button value of the third button to the first host device, the method further includes: The first accessory device detects a second event, where the second event is an event of releasing the first button by the user; in response to the second event, the first accessory device sends second data to the first host device through the first communication connection, where the second data includes information about the second event; the first host device sends the information about the second event to the second accessory device through the second communication connection; and the second accessory device receives the information about the second event sent by the first host device, and determines, based on the information about the second event, that the user releases the first button.

In this way, a function of forming a button combination through the mouse and the keyboard in collaboration may be canceled.

The device information of the second accessory device includes a device type of the second accessory device. Before the first accessory device detects the first event triggered by the user, the method further includes: The second accessory device sends a first message to the first host device, where the first message includes the device type of the second accessory device; and the first host device stores a mapping relationship between the second communication connection and the device type of the second accessory device. Before the first host device sends the information about the first event to the second accessory device through the second communication connection, the method further includes: The first host device determines, based on the device type of the second accessory device and the mapping relationship between the second communication connection and the device type of the second accessory device, to send the information about the first event to the second accessory device through the second communication connection.

In this way, an accessory device may perform device registration with a host device, so that the host device stores a mapping relationship between a communication connection and a device type of the accessory device.

In a possible implementation, after the second accessory device performs the response operation based on the information about the first event, the method further includes: The second accessory device sends a second message to the first accessory device through the first host device, where the second message is used to notify the first accessory device of a result of performing the response operation by the second accessory device.

In this way, the second accessory device may notify, through the first host device, the first accessory device of the result of performing the response operation by the second accessory device.

In a possible implementation, both the first communication connection and the second communication connection are Bluetooth communication connections.

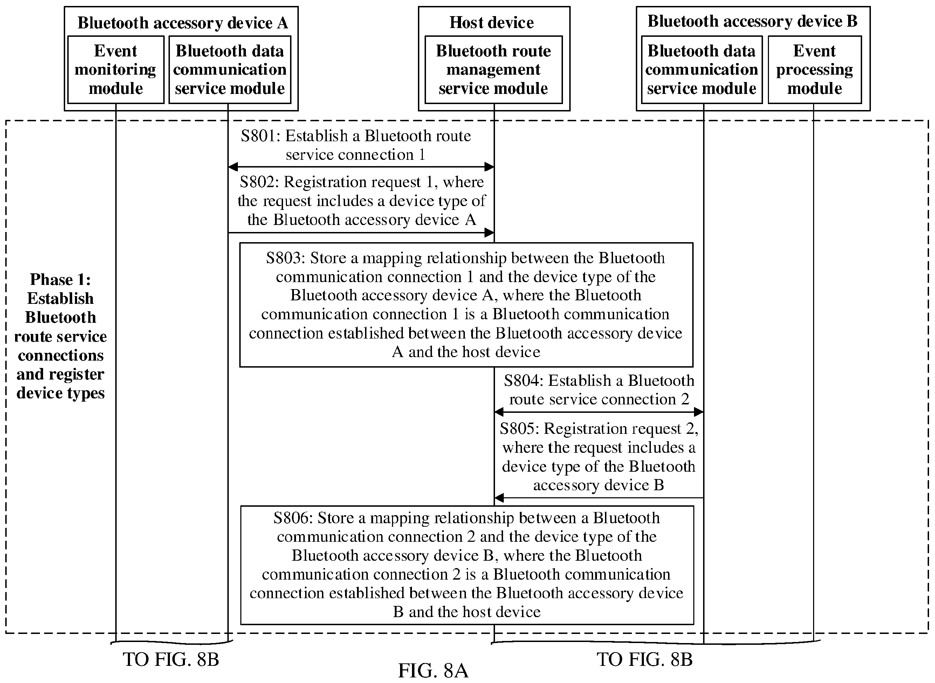

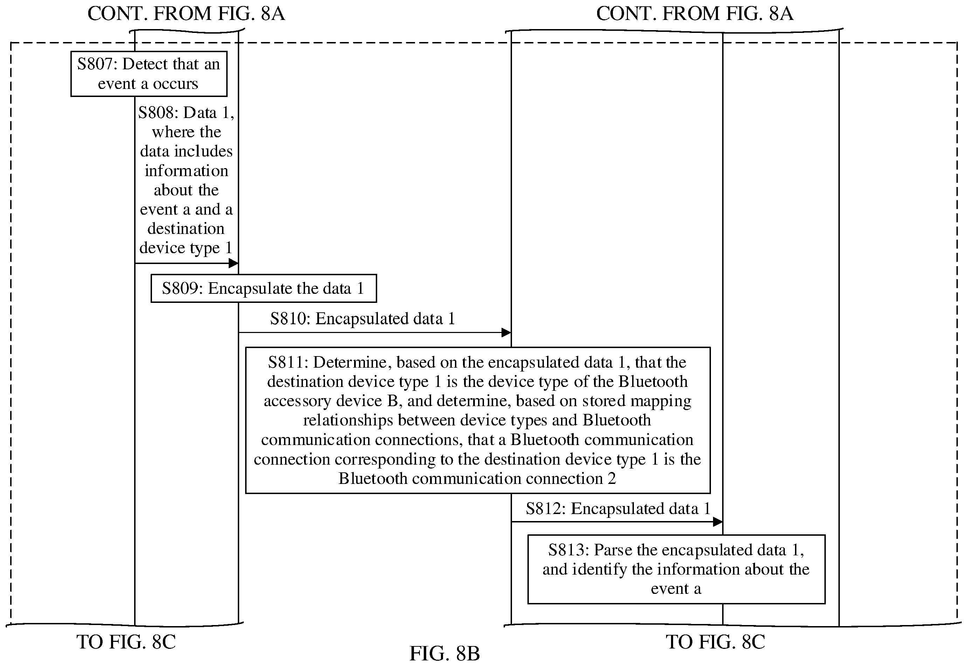

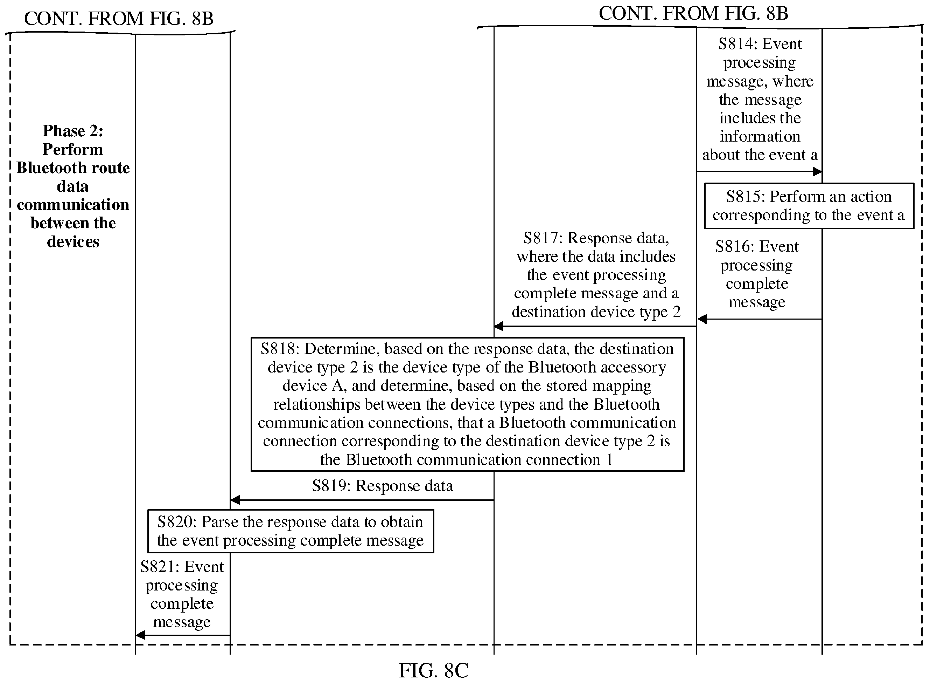

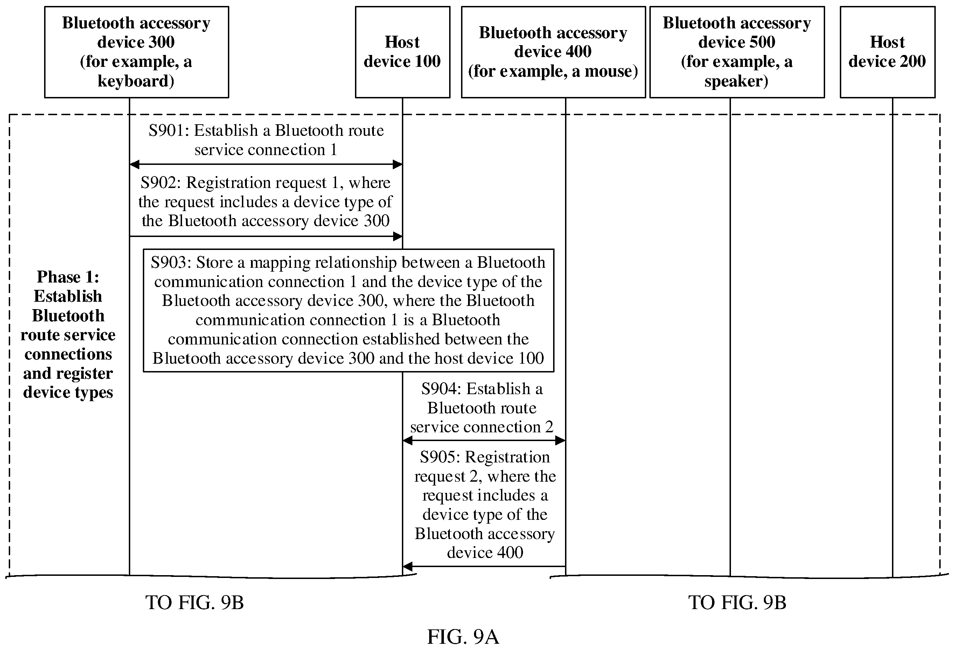

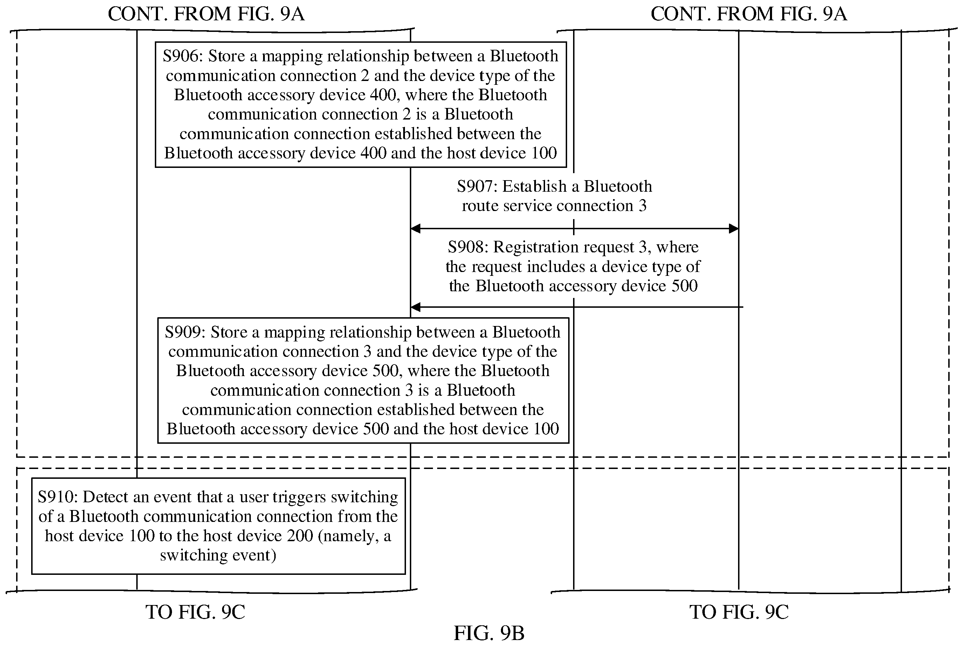

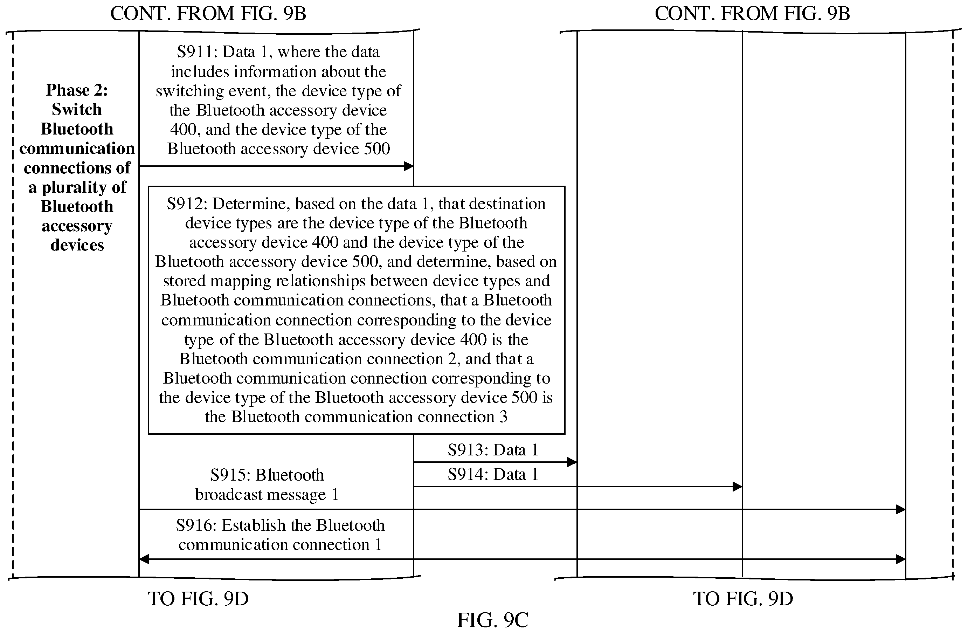

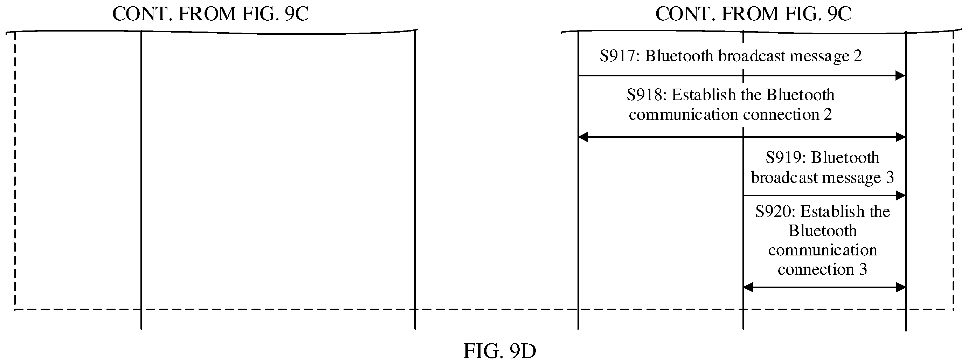

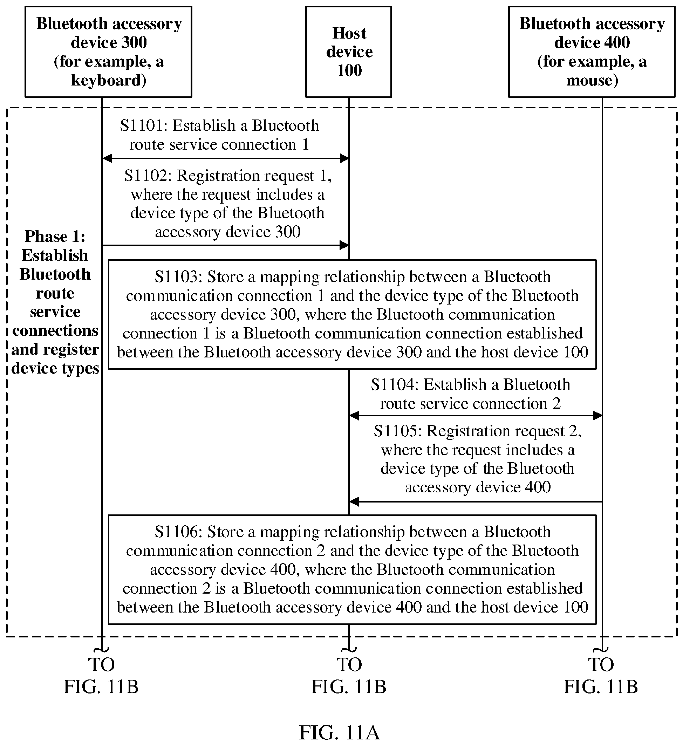

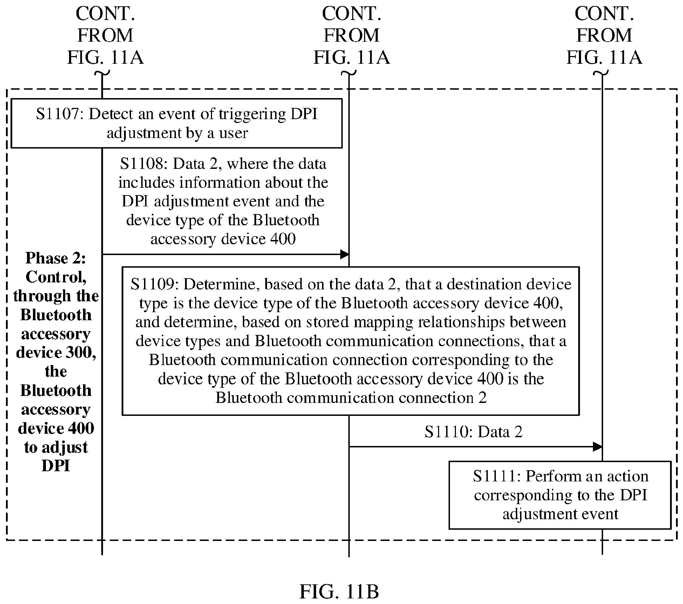

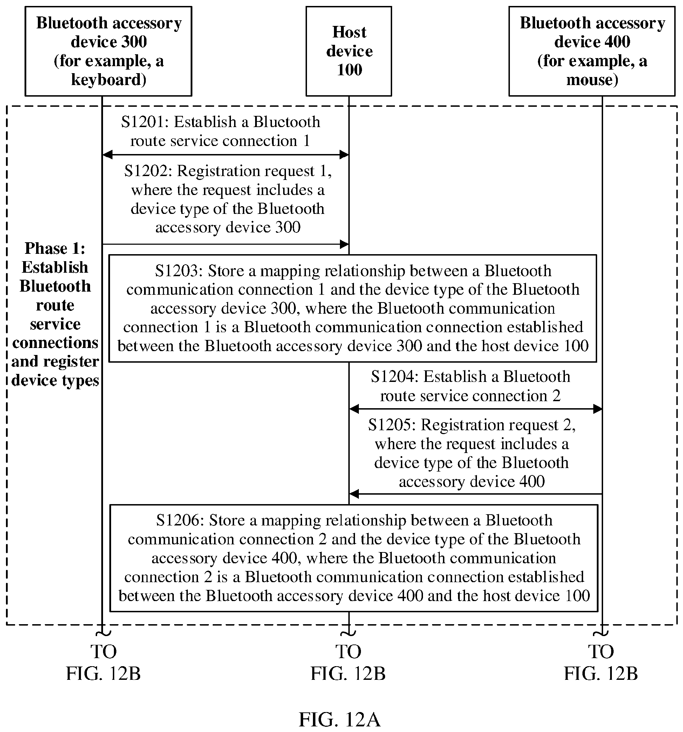

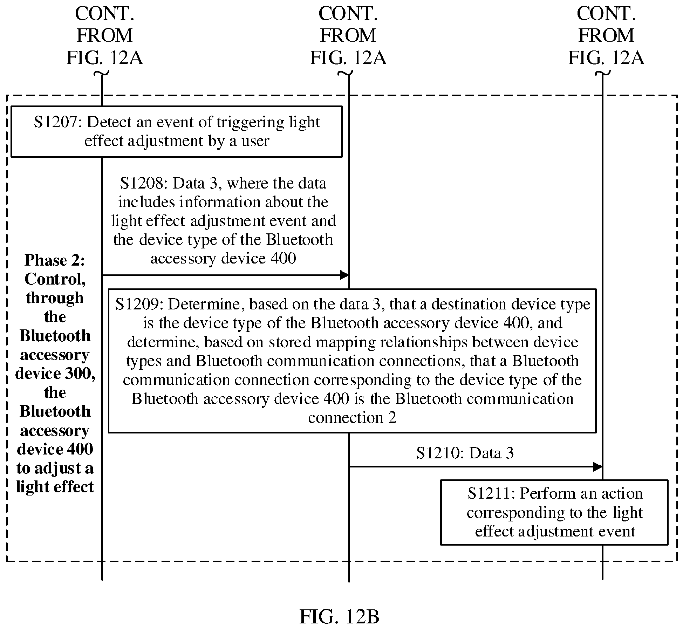

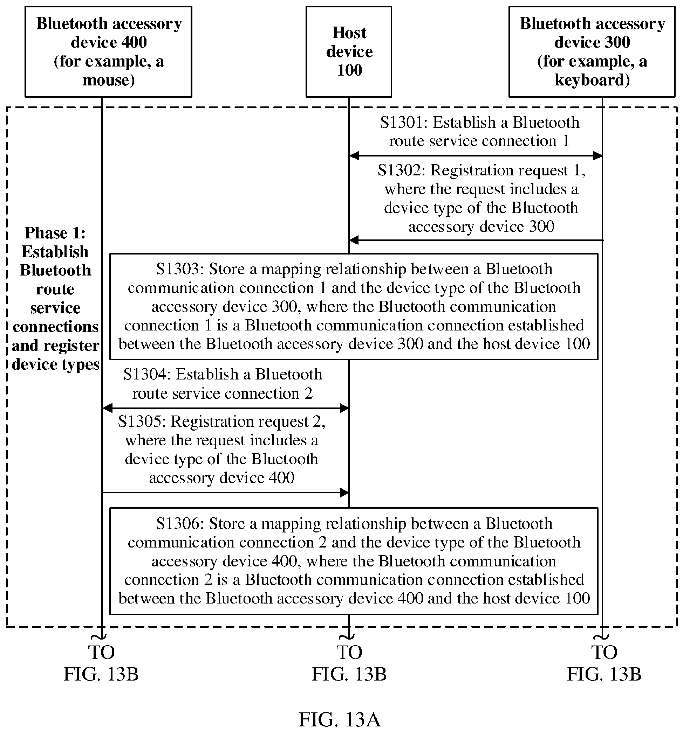

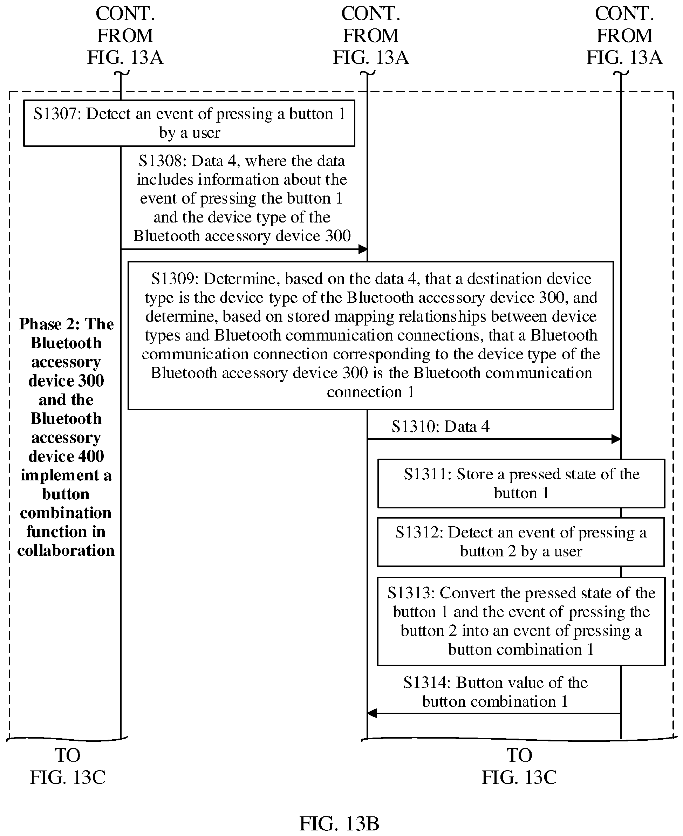

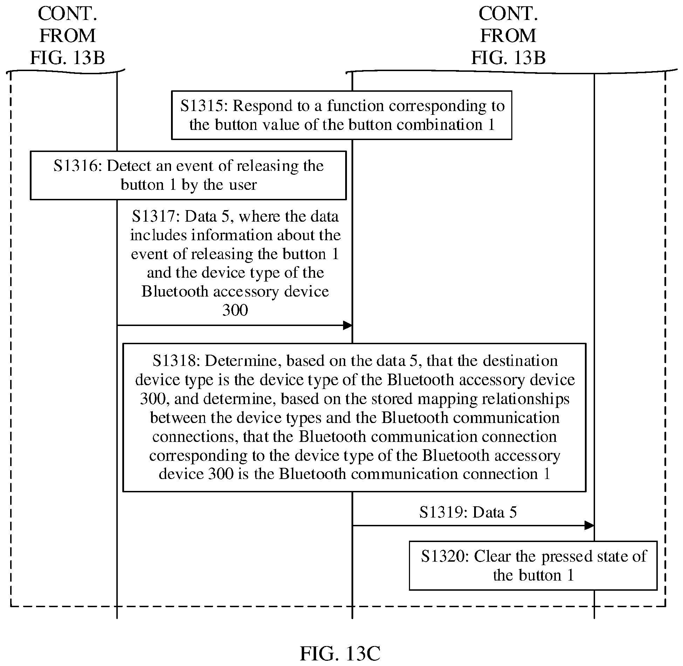

In the first aspect, the first host device may be a host device 100. The second host device may be a host device 200. The first accessory device and the second accessory device may separately establish a first communication connection (for example, a Bluetooth communication connection) and a second communication connection (for example, a Bluetooth communication connection) with the first host device. The first event may be an event (for example, a switching event, an event of adjusting DPI, an event of adjusting a light effect, or an event of pressing a button) triggered by the user. The first data may be data including the information about the first event and the device information of the one or more accessory devices (for example, data 1 in FIG. 9A to FIG. 9D, data 2 in FIG. 11A and FIG. 11B, data 3 in FIG. 12A and FIG. 12B, and data 4 in FIG. 13A to FIG. 13C). The first direct advertising message may be a Bluetooth broadcast message 2 sent by a Bluetooth accessory device 400 in FIG. 9A to FIG. 9D. The third communication connection may be a Bluetooth communication connection 2 established between the Bluetooth accessory device 400 and the host device 200. The first button may be a button 1 in FIG. 13A to FIG. 13C, the second button may be a button 2 in FIG. 13A to FIG. 13C, and the third button may be a button combination 1 in FIG. 13A to FIG. 13C. The second data may be data 5 in FIG. 13A to FIG. 13C. The first message may be a registration request sent by the second accessory device to the first host device, and the second message may be an event processing complete message in FIG. 8A to FIG. 8C.

According to a second aspect, an embodiment of this application provides a communication method, applied to a first accessory device. The method includes: The first accessory device detects a first event triggered by a user; and in response to the first event, the first accessory device sends first data to a second accessory device through a first host device, where the first data includes information about the first event. The information about the first event is used by the second accessory device to perform a response operation based on the information about the first event, the first accessory device establishes a first communication connection with the first host device, and the second accessory device establishes a second communication connection with the first host device.

In a possible implementation, the first data further includes device information of one or more accessory devices, the device information of the one or more accessory devices includes device information of the second accessory device, and the device information of the second accessory device is used by the first host device to determine to send the information about the first event to the second accessory device.

In a possible implementation, the first event is an event of changing a focus host device from the first host device to a second host device. The information about the first event is used by the second accessory device to change the focus host device from the first host device to the second host device based on the information about the first event. The second accessory device establishes a third communication connection with the second host device.

In a possible implementation, the first accessory device is a keyboard, the second accessory device is a mouse, the first event is an event of pressing a button for adjusting dots per inch (DPI), and the information about the first event is used by the second accessory device to adjust DPI of the second accessory device based on the information about the first event.

In a possible implementation, the button for adjusting the DPI includes a DPI button, a button combination for increasing the DPI, or a button combination for decreasing the DPI. When the button for adjusting the DPI is the DPI button, the information about the first event is used by the second accessory device to increase or decrease the DPI of the second accessory device based on the information about the first event. Alternatively, when the button for adjusting the DPI is the button combination for increasing the DPI, the information about the first event is used by the second accessory device to increase the DPI of the second accessory device based on the information about the first event. Alternatively, when the button for adjusting the DPI is the button combination for decreasing the DPI, the information about the first event is used by the second accessory device to decrease the DPI of the second accessory device based on the information about the first event.

In a possible implementation, the first accessory device is a keyboard, the second accessory device is a mouse, the first event is an event of pressing a button for adjusting a light effect, and the information about the first event is used by the second accessory device to adjust a light effect of the second accessory device based on the information about the first event.

In a possible implementation, the button for adjusting the light effect includes a light up button for increasing brightness, a light down button for decreasing brightness, a button combination for increasing brightness, or a button combination for decreasing brightness. When the button for adjusting the light effect is the light up button or the button combination for increasing the brightness, the information about the first event is used by the second accessory device to increase brightness of the light effect of the second accessory device based on the information about the first event. Alternatively, when the button for adjusting the light effect is the light down button or the button combination for decreasing the brightness, the information about the first event is used by the second accessory device to decrease brightness of the light effect of the second accessory device based on the information about the first event.

In a possible implementation, the first accessory device is a mouse, the second accessory device is a keyboard, the first event is an event of pressing a first button by the user, and the information about the first event is used by the second accessory device to convert the event of pressing the first button by the user and an event of pressing a second button by the user into an event of pressing a third button by the user. The event of pressing the second button by the user is detected by the second accessory device after receiving the information about the first event sent by the first host device.

In a possible implementation, after the first accessory device sends the information about the first event to the second accessory device through the first host device, the method further includes: The first accessory device detects a second event, where the second event is an event of releasing the first button by the user; in response to the second event, the first accessory device sends information about the second event to the second accessory device through the first host device, where the information about the second event is included in second data, and the information about the second event is used by the second accessory device to determine, based on the information about the second event, that the user releases the first button.

The device information of the second accessory device includes a device type of the second accessory device. Before the first accessory device detects the first event triggered by the user, the method further includes: The first accessory device sends a first message to the first host device, where the first message includes a device type of the first accessory device, and the first message is used by the first host device to store, based on the first message, a mapping relationship between the first communication connection and the device type of the first accessory device.

In the second aspect, the first host device may be a host device 100. The second host device may be a host device 200. The first accessory device and the second accessory device may separately establish a first communication connection (for example, a Bluetooth communication connection) and a second communication connection (for example, a Bluetooth communication connection) with the first host device. The first event may be an event (for example, a switching event, an event of adjusting DPI, an event of adjusting a light effect, or an event of pressing a button) triggered by the user. The first data may be data including the information about the first event and the device information of the one or more accessory devices (for example, data 1 in FIG. 9A to FIG. 9D, data 2 in FIG. 11A and FIG. 11B, data 3 in FIG. 12A and FIG. 12B, and data 4 in FIG. 13A to FIG. 13C). The third communication connection may be a Bluetooth communication connection 2 established between a Bluetooth accessory device 400 and the host device 200. The first button may be a button 1 in FIG. 13A to FIG. 13C, the second button may be a button 2 in FIG. 13A to FIG. 13C, and the third button may be a button combination 1 in FIG. 13A to FIG. 13C. The second data may be data 5 in FIG. 13A to FIG. 13C. The first message may be a registration request sent by the first accessory device to the first host device.

According to a third aspect, an embodiment of this application provides a communication method, applied to a second accessory device. The method includes: The second accessory device establishes a first communication connection with a first host device; the second accessory device receives, through the first communication connection, information about a first event sent by the first host device, where the information about the first event may be included in first data, the information about the first event is sent by a first accessory device to the first host device through a second communication connection after the first accessory device detects the first event triggered by a user and the second communication connection may be established between the first accessory device and the first host device; and the second accessory device performs a response operation based on the information about the first event.

In a possible implementation, the first data further includes device information of one or more accessory devices, the device information of the one or more accessory devices includes device information of the second accessory device, and the device information of the second accessory device is used by the first host device to determine to send the information about the first event to the second accessory device.

In a possible implementation, the first event is an event of changing a focus host device from the first host device to a second host device. The information about the first event includes device information of the second host device. That the second accessory device performs a response operation based on the information about the first event specifically includes: The second accessory device sends a first direct advertising message based on the device information of the second host device; and when the second host device receives the first direct advertising message, the second accessory device changes the focus host device from the first host device to the second host device, and the second accessory device establishes a third communication connection with the second host device.

In a possible implementation, the first accessory device is a keyboard, the second accessory device is a mouse, and the first event is an event of pressing a button for adjusting dots per inch (DPI). The information about the first event includes a button value of the button for adjusting the DPI. That the second accessory device performs a response operation based on the information about the first event specifically includes: The second accessory device adjusts DPI of the second accessory device based on the button value of the button for adjusting the DPI.

In a possible implementation, the button for adjusting the DPI includes a DPI button, a button combination for increasing the DPI, or a button combination for decreasing the DPI. That the second accessory device adjusts DPI of the second accessory device based on the button value of the button for adjusting the DPI specifically includes: When the button for adjusting the DPI is the DPI button, the second accessory device increases or decreases the DPI of the second accessory device based on the button value of the DPI button; when the button for adjusting the DPI is the button combination for increasing the DPI, the second accessory device increases the DPI of the second accessory device based on the button value of the button combination for increasing the DPI; or when the button for adjusting the DPI is the button combination for decreasing the DPI, the second accessory device decreases the DPI of the second accessory device based on the button value of the button combination for decreasing the DPI.

In a possible implementation, the first accessory device is a keyboard, the second accessory device is a mouse, and the first event is an event of pressing a button for adjusting a light effect. The information about the first event includes a button value of the button for adjusting the light effect. That the second accessory device performs a response operation based on the information about the first event specifically includes: The second accessory device adjusts a light effect of the second accessory device based on the button value of the button for adjusting the light effect.

In a possible implementation, the button for adjusting the light effect includes a light up button for increasing brightness, a light down button for decreasing brightness, a button combination for increasing brightness, or a button combination for decreasing brightness. That the second accessory device adjusts a light effect of the second accessory device based on the button value of the button for adjusting the light effect specifically includes: When the button for adjusting the light effect is the light up button or the button combination for increasing the brightness, the second accessory device increases brightness of the light effect of the second accessory device based on a button value of the light up button or a button value of the button combination for increasing the brightness; or when the button for adjusting the light effect is the light down button or the button combination for decreasing the brightness, the second accessory device decreases brightness of the light effect of the second accessory device based on a button value of the light down button or a button value of the button combination for decreasing the brightness.

In a possible implementation, the first accessory device is a mouse, the second accessory device is a keyboard, and the first event is an event of pressing a first button by the user. That the second accessory device performs a response operation based on the information about the first event specifically includes: The second accessory device converts the event of pressing the first button by the user and an event of pressing a second button by the user into an event of pressing a third button by the user, where the event of pressing the second button by the user is detected by the second accessory device after receiving the information about the first event sent by the first host device; and the second accessory device sends a button value of the third button to the first host device, where the button value of the third button is used by the first host device to respond to a function corresponding to the button value of the third button based on the button value of the third button.

In a possible implementation, after the second accessory device sends the button value of the third button to the first host device, the method further includes: The second accessory device receives, through the first communication connection, information about a second event sent by the first host device, where the information about the second event is included in second data, the second event is an event of releasing the first button by the user, and the second data is sent by the first accessory device to the first host device after the first accessory device detects the second event; and the second accessory device determines, based on the information about the second event, that the user releases the first button.

The device information of the second accessory device includes a device type of the second accessory device. Before the second accessory device receives, through the first communication connection, the first data sent by the first host device, the method further includes: The second accessory device sends a first message to the first host device, where the first message includes the device type of the second accessory device, and the first message is used by the first host device to store, based on the first message, a mapping relationship between the first communication connection and the device type of the second accessory device.

In a possible implementation, after the second accessory device performs the response operation based on the information about the first event, the method further includes: The second accessory device sends a second message to the first accessory device through the first host device, where the second message is used to notify the first accessory device of a result of performing the response operation by the second accessory device.

In the third aspect, the first host device may be a host device 100. The second host device may be a host device 200. The first accessory device and the second accessory device may separately establish a second communication connection (for example, a Bluetooth communication connection) and a first communication connection (for example, a Bluetooth communication connection) with the first host device. The first event may be an event (for example, a switching event, an event of adjusting DPI, an event of adjusting a light effect, or an event of pressing a button) triggered by the user. The first data may be data including the information about the first event and the device information of the one or more accessory devices (for example, data 1 in FIG. 9A to FIG. 9D, data 2 in FIG. 11A and FIG. 11B, data 3 in FIG. 12A and FIG. 12B, and data 4 in FIG. 13A to FIG. 13C). The first direct advertising message may be a Bluetooth broadcast message 2 sent by a Bluetooth accessory device 400 in FIG. 9A to FIG. 9D. The third communication connection may be a Bluetooth communication connection 2 established between the Bluetooth accessory device 400 and the host device 200. The first button may be a button 1 in FIG. 13A to FIG. 13C, the second button may be a button 2 in FIG. 13A to FIG. 13C, and the third button may be a button combination 1 in FIG. 13A to FIG. 13C. The second data may be data 5 in FIG. 13A to FIG. 13C. The first message may be a registration request sent by the second accessory device to the first host device, and the second message may be an event processing complete message in FIG. 8A to FIG. 8C.

According to a fourth aspect, an embodiment of this application provides a communication method, applied to a first host device. The method includes: The first host device establishes a first communication connection with a first accessory device; the first host device establishes a second communication connection with a second accessory device; the first host device receives, through the first communication connection, first data sent by the first accessory device, where the first data includes information about a first event, and the first data is sent by the first accessory device after the first accessory device detects a first event triggered by a user; and the first host device sends the information about the first event to the second accessory device through the second communication connection, where the information about the first event is used by the second accessory device to perform a response operation based on the information about the first event.

In a possible implementation, the first data further includes device information of one or more accessory devices, the device information of the one or more accessory devices includes device information of the second accessory device, and the device information of the second accessory device is used by the first host device to determine to send the information about the first event to the second accessory device.

The device information of the second accessory device includes a device type of the second accessory device. Before the first host device receives, through the first communication connection, the first data sent by the first accessory device, the method further includes: The first host device receives a first message sent by the second accessory device, where the first message includes the device type of the second accessory device; and the first host device stores a mapping relationship between the second communication connection and the device type of the second accessory device. Before the first host device sends the information about the first event to the second accessory device through the second communication connection, the method further includes: The first host device determines, based on the device type of the second accessory device and the mapping relationship between the second communication connection and the device type of the second accessory device, to send the information about the first event to the second accessory device through the second communication connection.

In the fourth aspect, the first host device may be a host device 100. The second host device may be a host device 200. The first accessory device and the second accessory device may separately establish a first communication connection (for example, a Bluetooth communication connection) and a second communication connection (for example, a Bluetooth communication connection) with the first host device. The first event may be an event (for example, a switching event, an event of adjusting DPI, an event of adjusting a light effect, or an event of pressing a button) triggered by the user. The first data may be data including the information about the first event and the device information of the one or more accessory devices (for example, data 1 in FIG. 9A to FIG. 9D, data 2 in FIG. 11A and FIG. 11B, data 3 in FIG. 12A and FIG. 12B, and data 4 in FIG. 13A to FIG. 13C). The first message may be a registration request sent by the second accessory device to the first host device.

According to a fifth aspect, an embodiment of this application provides a communication method, applied to a communication system. The communication system includes a first host device, a second host device, a first accessory device, and a second accessory device, and the second accessory device establishes Bluetooth communication connections with both the first host device and the second host device. The method includes: The first accessory device establishes a first Bluetooth communication connection with the first host device; the first host device sends a first message to the first accessory device through the first Bluetooth communication connection, where the first message indicates the first accessory device to send a pairing broadcast message; the first accessory device sends the pairing broadcast message after receiving the first message; the first host device sends a second message to the second accessory device, where the second message includes a Bluetooth media access control (MAC) address of the first accessory device, the second message indicates the second accessory device to send the Bluetooth MAC address of the first accessory device to one or more host devices, and the one or more host devices include the second host device; the second accessory device sends the Bluetooth MAC address of the first accessory device to the second host device; and the second host device receives the pairing broadcast message and the Bluetooth MAC address of the first accessory device, performs, based on the pairing broadcast message and the Bluetooth MAC address of the first accessory device, Bluetooth pairing with the first accessory device, and establishes a second Bluetooth communication connection.

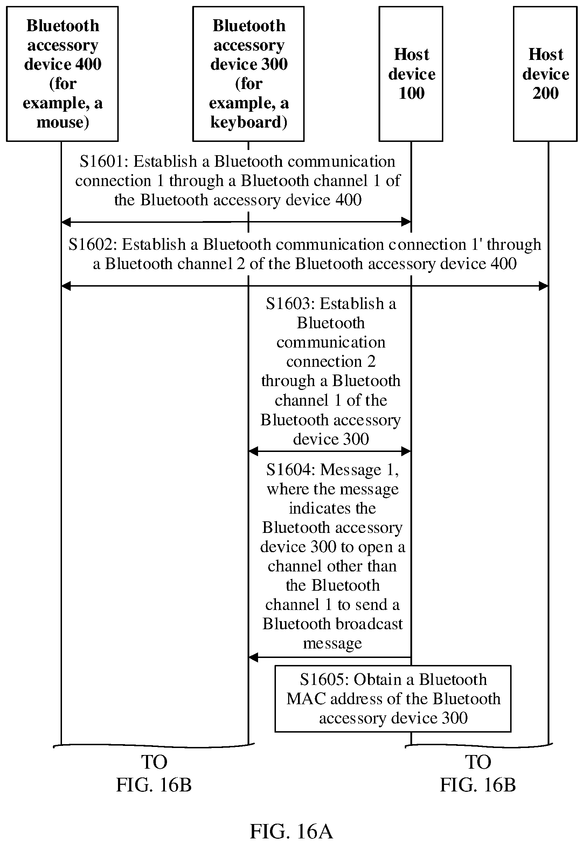

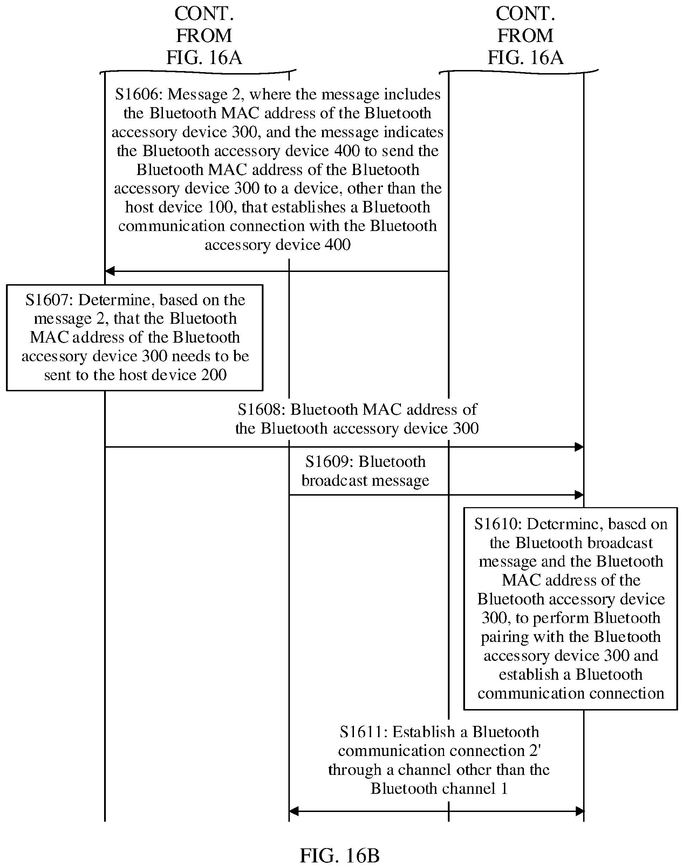

In the fifth aspect, the first host device may be a host device 100. The second host device may be a host device 200. The first accessory device may be a Bluetooth accessory device 300 in FIG. 16A and FIG. 16B. The second accessory device may be a Bluetooth accessory device 400 in FIG. 16A and FIG. 16B. The first Bluetooth communication connection may be a Bluetooth communication connection 2 in FIG. 16A and FIG. 16B. The first message may be a message 1 in FIG. 16A and FIG. 16B, and the second message may be a message 2 in FIG. 16A and FIG. 16B. The second Bluetooth communication connection may be a Bluetooth communication connection 2' in FIG. 16A and FIG. 16B.

According to a sixth aspect, an embodiment of this application provides a communication method, applied to a first accessory device. The method includes: The first accessory device establishes a first Bluetooth communication connection with a first host device; the first accessory device sends a pairing broadcast message after receiving, through the first Bluetooth communication connection, a first message sent by the first host device; and when a second host device determines, based on the pairing broadcast message and a Bluetooth media access control MAC address of the first accessory device, to perform Bluetooth pairing with the first accessory device and establish a second Bluetooth communication connection, the first accessory device establishes the second Bluetooth communication connection with the second host device, where the Bluetooth MAC address of the first accessory device is sent by the first host device to the second host device through the second accessory device, and the second accessory device establishes Bluetooth communication connections with both the first host device and the second host device.

In the sixth aspect, the first host device may be a host device 100. The second host device may be a host device 200. The first accessory device may be a Bluetooth accessory device 300 in FIG. 16A and FIG. 16B. The second accessory device may be a Bluetooth accessory device 400 in FIG. 16A and FIG. 16B. The first Bluetooth communication connection may be a Bluetooth communication connection 2 in FIG. 16A and FIG. 16B. The first message may be a message 1 in FIG. 16A and FIG. 16B. The second Bluetooth communication connection may be a Bluetooth communication connection 2' in FIG. 16A and FIG. 16B.

According to a seventh aspect, an embodiment of this application provides a communication method, applied to a second accessory device, where the second accessory device establishes Bluetooth communication connections with both a first host device and a second host device. The method includes: The second accessory device receives a first message sent by the first host device, where the first message includes a Bluetooth media access control MAC address of the first accessory device, the first message is used by the second accessory device to send the Bluetooth MAC address of the first accessory device to one or more host devices based on the first message, and the one or more host devices include the second host device; and the second accessory device sends the Bluetooth MAC address of the first accessory device to the second host device based on the first message, where the Bluetooth MAC address of the first accessory device is used by the second host device to establish a Bluetooth communication connection with the first accessory device.

In the seventh aspect, the first host device may be a host device 100. The second host device may be a host device 200. The first accessory device may be a Bluetooth accessory device 300 in FIG. 16A and FIG. 16B. The second accessory device may be a Bluetooth accessory device 400 in FIG. 16A and FIG. 16B. The first message may be a message 2 in FIG. 16A and FIG. 16B.

According to an eighth aspect, an embodiment of this application provides a communication method, applied to a first host device. The method includes: The first host device establishes a first Bluetooth communication connection with a first accessory device; the first host device sends a first message to the first accessory device through the first Bluetooth communication connection, where the first message indicates the first accessory device to send a pairing broadcast message; and the first host device sends a second message to a second accessory device, where the second message includes a Bluetooth media access control (MAC) address of the first Bluetooth accessory device, the second message indicates the second accessory device to send the Bluetooth MAC address of the first accessory device to one or more host devices, and the one or more host devices include a second host device. The second accessory device establishes Bluetooth communication connections with both the first host device and the second host device, and the pairing broadcast message and the Bluetooth MAC address of the first accessory device are used by the second host device to establish a second Bluetooth communication connection with the first accessory device.

In the eighth aspect, the first host device may be a host device 100. The second host device may be a host device 200. The first accessory device may be a Bluetooth accessory device 300 in FIG. 16A and FIG. 16B. The second accessory device may be a Bluetooth accessory device 400 in FIG. 16A and FIG. 16B. The first Bluetooth communication connection may be a Bluetooth communication connection 2 in FIG. 16A and FIG. 16B. The first message may be a message 1 in FIG. 16A and FIG. 16B, and the second message may be a message 2 in FIG. 16A and FIG. 16B. The second Bluetooth communication connection may be a Bluetooth communication connection 2' in FIG. 16A and FIG. 16B.

According to a ninth aspect, an embodiment of this application provides a communication system, where the communication system includes a first host device, a first accessory device, and a second accessory device. The first accessory device is configured to establish a first communication connection to the first host device. The second accessory device is configured to establish a second communication connection to the first host device. The first accessory device is further configured to detect a first event triggered by a user, and in response to the first event, send first data to the first host device through the first communication connection, where the first data includes information about the first event. The first host device is configured to send the information about the first event to the second accessory device through the second communication connection. The second accessory device is further configured to receive the information about the first event sent by the first host device, and perform a response operation based on the information about the first event.

According to a tenth aspect, an embodiment of this application provides a communication system. The communication system includes a first host device, a second host device, a first accessory device, and a second accessory device. The second accessory device establishes Bluetooth communication connections with both the first host device and the second host device. The first accessory device is configured to establish a first Bluetooth communication connection with the first host device. The first host device is configured to send a first message to the first Bluetooth accessory device through the first Bluetooth communication connection, where the first message indicates the first accessory device to send a pairing broadcast message. The first accessory device is further configured to send the pairing broadcast message after receiving the first message. The first host device is further configured to send a second message to the second accessory device, where the second message includes a Bluetooth media access control (MAC) address of the first accessory device, the second message indicates the second accessory device to send the Bluetooth MAC address of the first accessory device to one or more host devices, and the one or more host devices include the second host device. The second accessory device is configured to send the Bluetooth MAC address of the first accessory device to the second host device. The second host device is configured to receive the pairing broadcast message and the Bluetooth MAC address of the first accessory device, perform Bluetooth pairing with the first accessory device based on the pairing broadcast message and the Bluetooth MAC address of the first accessory device, and establish a second Bluetooth communication connection.

According to an eleventh aspect, an embodiment of this application provides an electronic device, where the electronic device includes one or more processors and one or more memories. The one or more memories are coupled to the one or more processors. The one or more memories are configured to store computer program code. The computer program code includes computer instructions. When the one or more processors execute the computer instructions, the electronic device is enabled to perform the method according to the second aspect, the third aspect, the fourth aspect, the sixth aspect, the seventh aspect, or the eighth aspect.

According to a twelfth aspect, an embodiment of this application provides a computer storage medium. The computer storage medium stores a computer program. The computer program includes program instructions. When the program instructions are run on an electronic device, the electronic device is enabled to perform the method according to the second aspect, the third aspect, the fourth aspect, the sixth aspect, the seventh aspect, or the eighth aspect.

According to a thirteenth aspect, an embodiment of this application provides a computer program product. When the computer program product runs on a computer, the computer is enabled to perform the method according to the second aspect, the third aspect, the fourth aspect, the sixth aspect, the seventh aspect, or the eighth aspect.

### BRIEF DESCRIPTION OF DRAWINGS

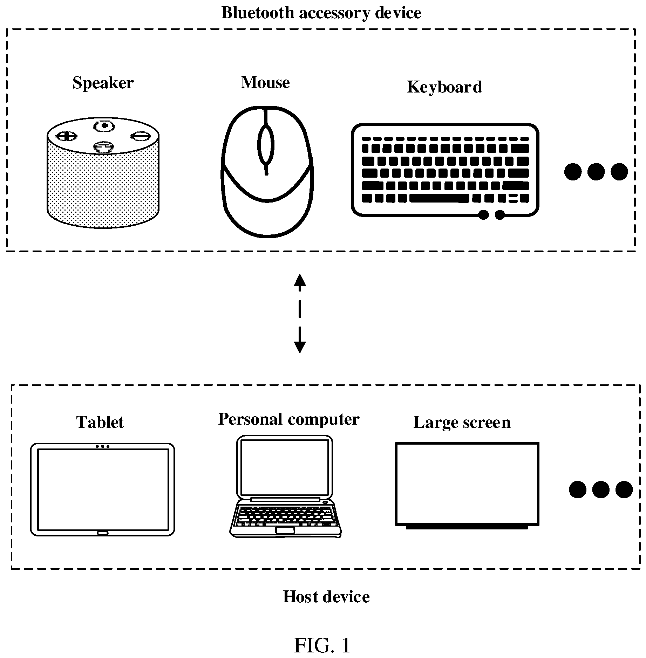

FIG. 1 is a diagram of an architecture of a communication system according to an embodiment of this application;

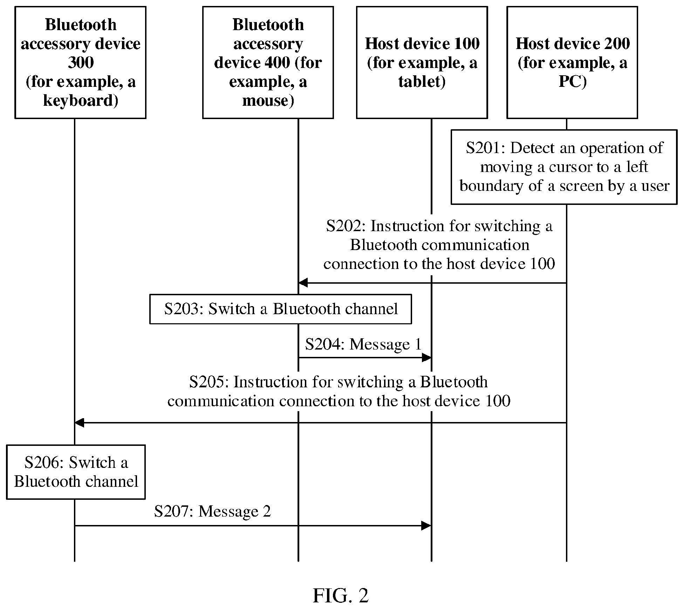

FIG. 2 is a schematic flowchart of switching Bluetooth communication connections of a Bluetooth accessory device 300 and a Bluetooth accessory device 400 from a host device 200 to a host device 100 according to an embodiment of this application;

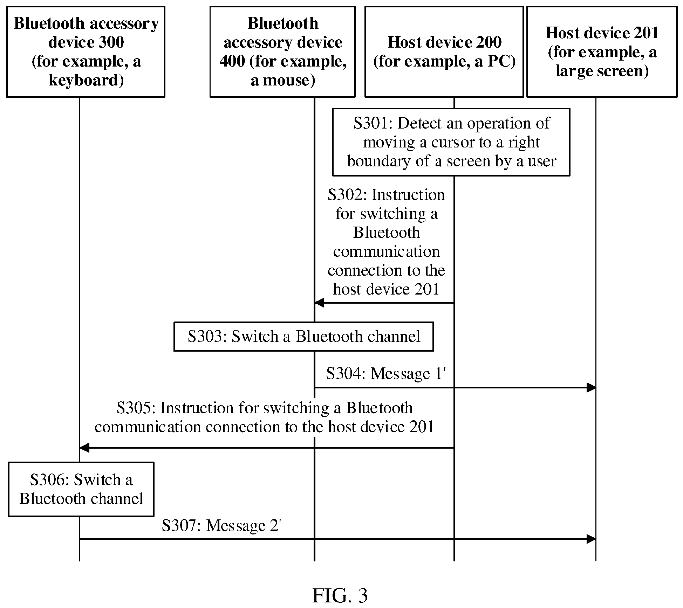

FIG. 3 is a schematic flowchart of switching Bluetooth communication connections of a Bluetooth accessory device 300 and a Bluetooth accessory device 400 from a host device 200 to a host device 201 according to an embodiment of this application;

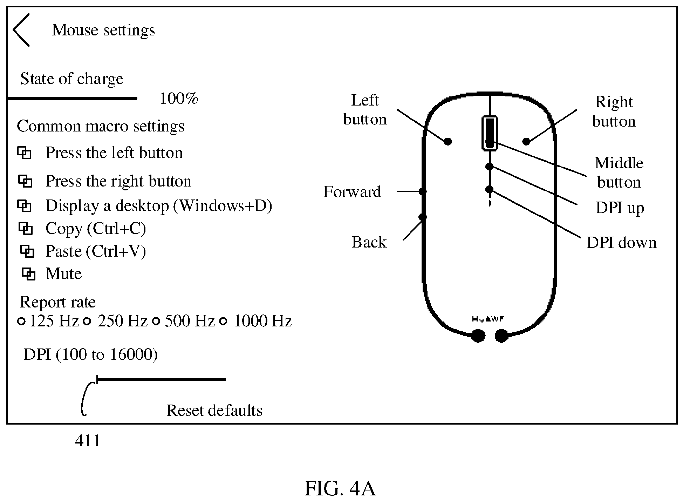

FIG. 4A is a diagram of a user interface for setting a mouse on a host device according to an embodiment of this application;

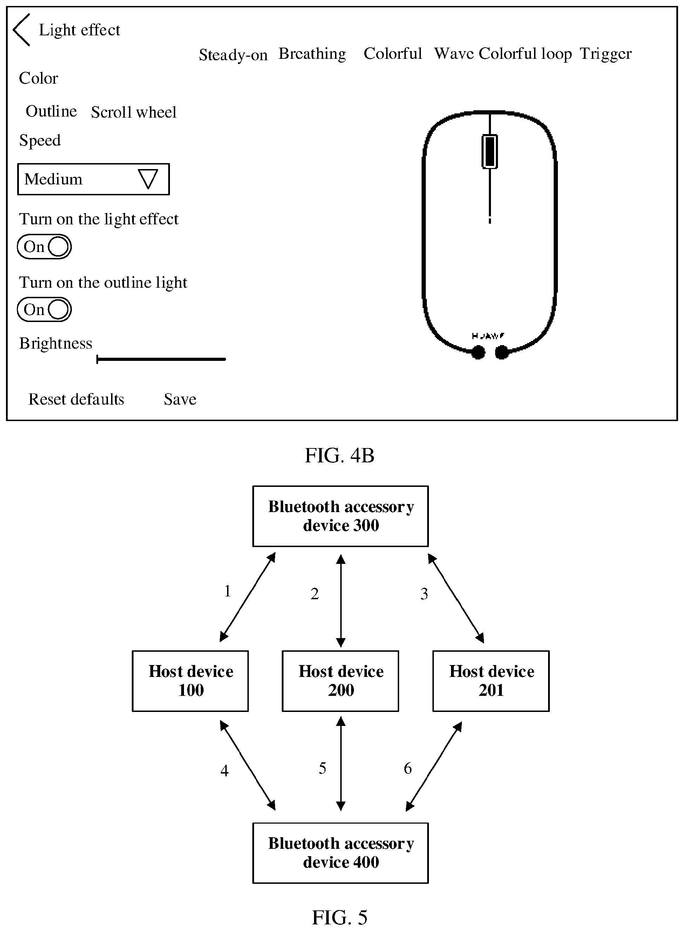

FIG. 4B is a diagram of a user interface for adjusting a light effect of a mouse on a host device according to an embodiment of this application;
FIG. 5 is a diagram of separately establishing Bluetooth communication connections between a plurality of Bluetooth accessory devices and a plurality of host devices according to an embodiment of this application;

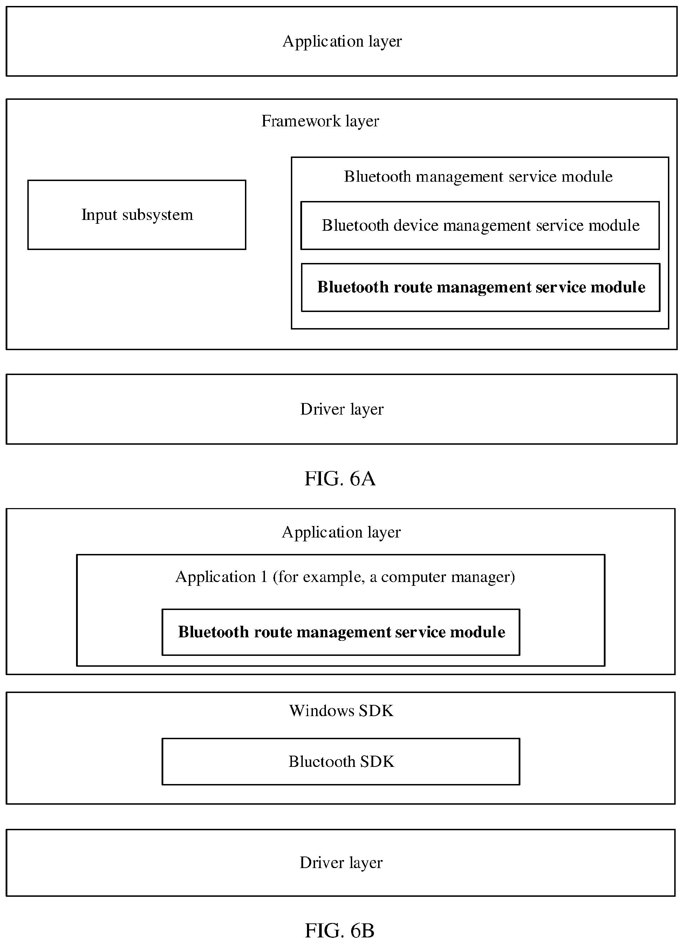

FIG. 6A is a diagram of a software architecture of a host device according to an embodiment of this application;
FIG. 6B is a diagram of a software architecture of another host device according to an embodiment of this application;

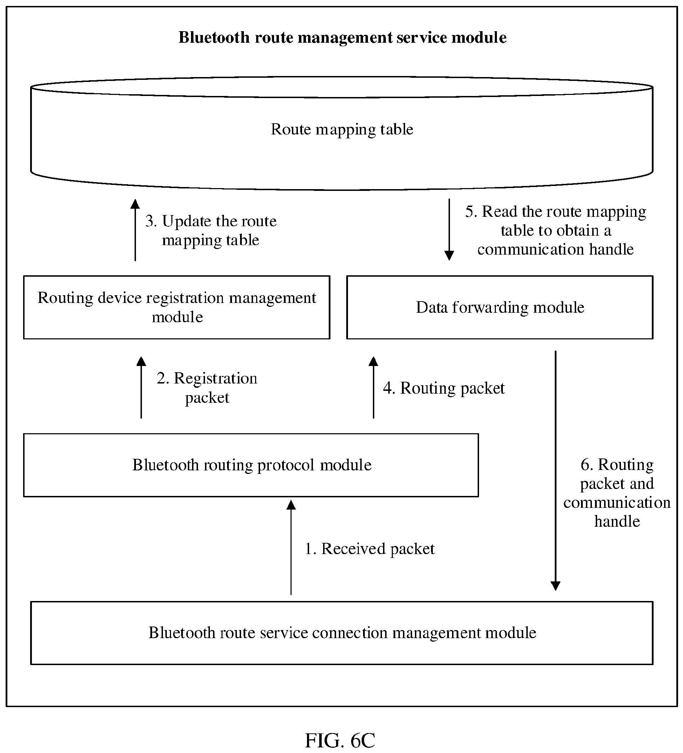

FIG. 6C is a diagram of an architecture of a Bluetooth route management service module according to an embodiment of this application;

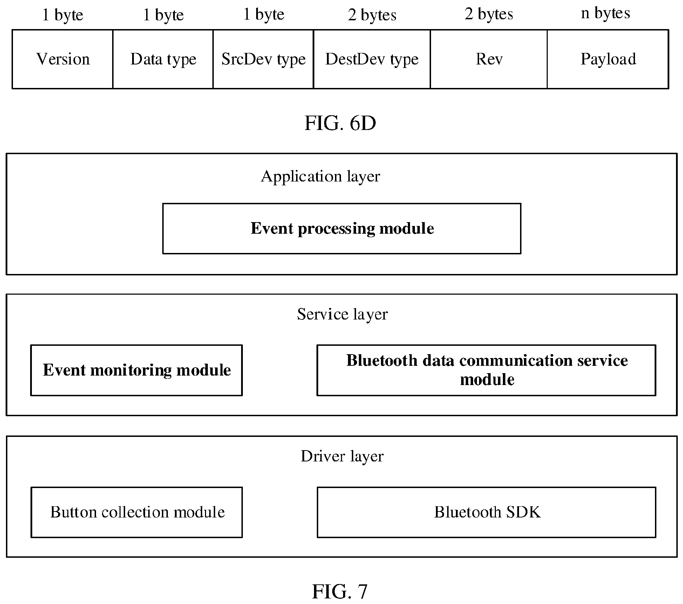

FIG. 6D is a diagram of a structure of a Bluetooth routing protocol packet according to an embodiment of this application;
FIG. 7 is a diagram of a software architecture of a Bluetooth accessory device according to an embodiment of this application;
FIG. 8A to FIG. 8C are a schematic flowchart of a Bluetooth routing method according to an embodiment of this application;
FIG. 9A to FIG. 9D are a schematic flowchart of a communication method according to an embodiment of this application in an application scenario of switching Bluetooth communication connections of a plurality of Bluetooth accessory devices;

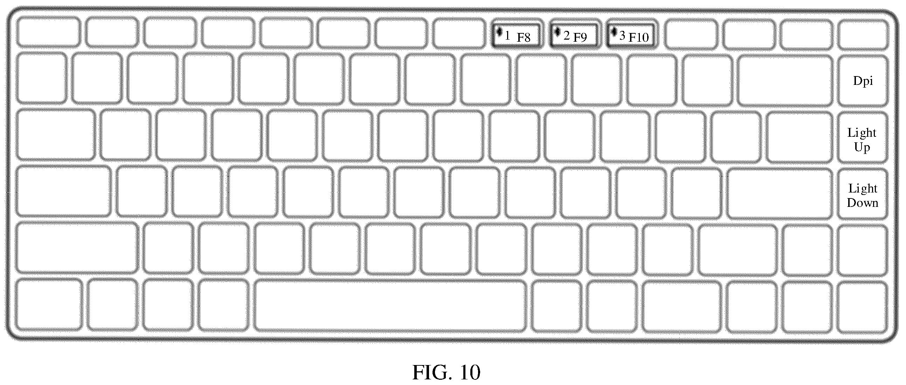

FIG. 10 is a diagram of an appearance structure of a keyboard according to an embodiment of this application;
FIG. 11A and FIG. 11B are a schematic flowchart of a communication method according to an embodiment of this application in an application scenario in which one Bluetooth accessory device (for example, a keyboard) is used to control another Bluetooth accessory device (for example, a mouse) to adjust DPI;
FIG. 12A and FIG. 12B are a schematic flowchart of a communication method according to an embodiment of this application in an application scenario in which one Bluetooth accessory device (for example, a keyboard) is used to control another Bluetooth accessory device (for example, a mouse) to adjust a light effect;
FIG. 13A to FIG. 13C are a schematic flowchart of a communication method according to an embodiment of this application in an application scenario in which one Bluetooth accessory device (for example, a keyboard) and another Bluetooth accessory device (for example, a mouse) implement a button combination function in collaboration;

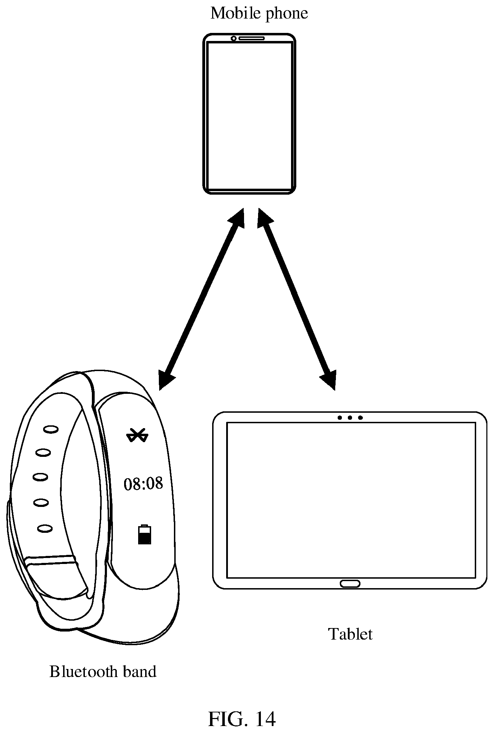

FIG. 14 is a diagram of performing communication through an intermediate host device (for example, a mobile phone) when a Bluetooth accessory device (for example, a Bluetooth band) does not directly establish a Bluetooth communication connection with a host device (for example, a tablet) according to an embodiment of this application;

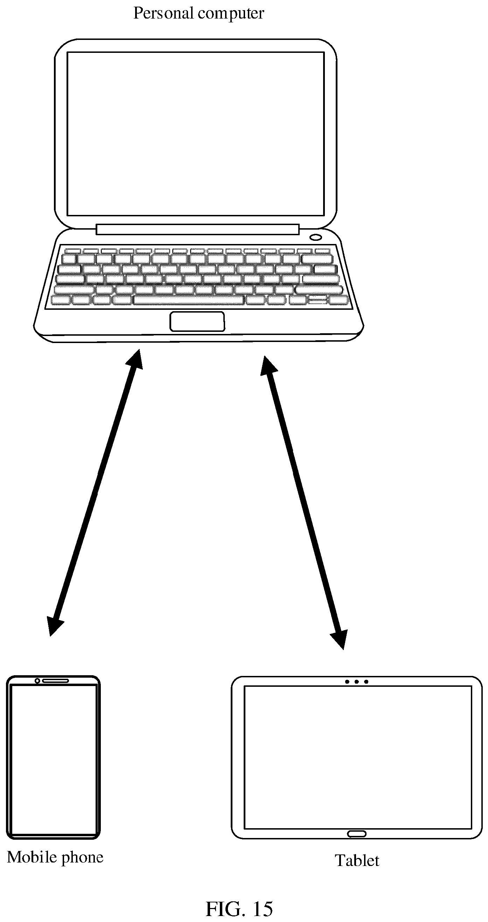

FIG. 15 is a diagram of performing communication through an intermediate host device (for example, a personal computer) when a host device (for example, a mobile phone) does not directly establish a Bluetooth communication connection to another host device (for example, a tablet) according to an embodiment of this application; and
FIG. 16A and FIG. 16B are a schematic flowchart of a communication method according to an embodiment of this application in an application scenario in which a plurality of Bluetooth accessory devices separately establish Bluetooth communication connections with a plurality of host devices.

### DESCRIPTION OF EMBODIMENTS

The following clearly and completely describes the technical solutions in embodiments of this application with reference to the accompanying drawings in embodiments of this application. In the descriptions of embodiments of this application, unless otherwise stated, "/" represents "or". For example, A/B may represent A or B. In this specification, "and/or" merely describes an association relationship between associated objects and represents that three relationships may exist. For example, A and/or B may represent the following three cases: Only A exists, both A and B exist, and only B exists. In addition, in the descriptions of embodiments of this application, "a plurality of" means two or more.

It should be understood that terms "first", "second", and the like in the specification, the claims, and the accompanying drawings of this application are intended to distinguish between different objects, but are not intended to describe a specific order. In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

An "embodiment" mentioned in this application means that a particular feature, structure, or characteristic described with reference to an embodiment may be included in at least one embodiment of this application. The phrase shown in various positions in the specification may not necessarily indicate a same embodiment, and is not an independent or optional embodiment exclusive from another embodiment. It is explicitly and implicitly understood by persons skilled in the art that embodiments described in this application may be combined with another embodiment.

A term "user interface (UI)" in the following embodiments of this application is a medium interface for interaction and information exchange between an application or an operating system and a user, and implements conversion between an internal form of information and a form that can be accepted by the user. The user interface is source code written in a specific computer language like Java or an extensible markup language (XML). Interface source code is parsed and rendered on an electronic device, and is finally presented as content that can be identified by the user. A frequently-used representation form of the user interface is a graphical user interface (GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

A communication system provided in an embodiment of this application is first described.

FIG. 1 shows an example of a communication system according to an embodiment of this application.

As shown in FIG. 1, the communication system may include a plurality of Bluetooth accessory devices (also referred to as Bluetooth accessories, accessories, accessory devices, or secondary devices) and a plurality of host devices.

Both the Bluetooth accessory devices and the host devices are intelligent terminal devices, and may be of various types. This is not limited in embodiments of this application.

For example, the Bluetooth accessory devices may include a speaker, a mouse, and a keyboard, and may further include a stylus, an earphone, and the like.

For example, the host devices may include a tablet, a personal computer (PC), and a large screen, and may further include a desktop computer, a laptop computer, a handheld computer, a head unit, a mobile phone, and the like.

In embodiments of this application, both the host devices and the Bluetooth accessory devices may be devices that support Bluetooth multi-connection.

The plurality of Bluetooth accessory devices in the communication system may establish Bluetooth (BT) communication connections (or referred to as Bluetooth connections) with the host devices, so as to communicate with each other through the established Bluetooth communication connections.

Not limited to the foregoing Bluetooth communication connections, the plurality of Bluetooth accessory devices in the communication system may further establish wired connections or other wireless connections with the host devices. For example, the wireless connections are wireless local area network (WLAN) connections such as wireless fidelity point-to-point (Wi-Fi P2P) connections, near field communication (NFC) connections, and infrared (IR) technology connections.

The plurality of host devices in the communication system may be configured with different software operating systems (OSs), including but not limited to HarmonyOS^{®}, Android^{®}, iOS^{®}, Windows^{®}, and Linux^{®}. HarmonyOS^{®} is Huawei HarmonyOS. The plurality of host devices may also be configured with a same software operating system, for example, HarmonyOS^{®}.

It may be understood that, when the communication connections established between the host devices and the accessory devices are not Bluetooth communication connections, the accessory devices may alternatively not be Bluetooth accessory devices.

With the development of terminal technologies, there are more Bluetooth accessory devices (such as a Bluetooth mouse, a Bluetooth keyboard, a stylus, and a Bluetooth speaker) in a current market. These Bluetooth accessory devices may establish Bluetooth communication connections with a host device (for example, a tablet, a personal computer, and a large screen). However, after the Bluetooth communication connections are established, these Bluetooth accessory devices are still independent of each other, cannot perform data exchange, and cannot cooperatively complete a task or implement a function. This brings great limitation to a product design, and results in poor user experience.

The following provides descriptions with reference to different application scenarios.

Application scenario 1: Switch Bluetooth communication connections of a plurality of Bluetooth accessory devices.

Each Bluetooth accessory device (for example, a mouse, a keyboard, or a speaker) may perform Bluetooth pairing with one or more host devices (such as a tablet, a PC, or a large screen) and establish a Bluetooth communication connection. It is assumed that a plurality of Bluetooth accessory devices have performed Bluetooth pairing with a host device 100 and a host device 200, and currently, the plurality of Bluetooth accessory devices all maintain established Bluetooth communication connections with the host device 100. If a user wants to switch the Bluetooth communication connections of the plurality of Bluetooth accessory devices from the host device 100 to the host device 200 (that is, the plurality of Bluetooth accessory devices all establish Bluetooth communication connections with the host device 200 to exchange data with the host device 200), the following two possible implementations are available.

In one possible implementation, the plurality of Bluetooth accessory devices may separately support the user to implement switching of the Bluetooth communication connections from the host device 100 to the host device 200 through a switching button. In other words, the user needs to operate the switching button on each of the plurality of Bluetooth accessory devices once, so as to implement switching of the Bluetooth communication connections of the plurality of Bluetooth accessory devices from the host device 100 to the host device 200. In this case, the operation is complex, and user experience is poor.

In the other possible implementation, an independent application is developed on a host device to perform separate management on all the Bluetooth accessory devices. For example, a keyboard-and-mouse traversal solution is as follows: The host device detects a switching condition of a Bluetooth communication connection, and separately controls a mouse and a keyboard when it is determined that the switching condition is met. The following separately describes an execution process of the solution with reference to FIG. 2 and FIG. 3.

It is assumed that the host device 100 is a tablet, the host device 200 is a PC, and the host device 201 is a large screen. Positions of the three host devices may be shown in FIG. 1. The host device 200 is located in a middle position, the host device 100 is located on a left side of the host device 200, and the host device 201 is located on a right side of the host device 200. Position information of the three host devices is already configured on the three host devices in advance. A Bluetooth accessory device 300 is a keyboard, and a Bluetooth accessory device 400 is a mouse. The Bluetooth accessory device 300 and the Bluetooth accessory device 400 each establish a Bluetooth communication connection with the host device 200. In this way, the host device 200 may establish a control service channel with the Bluetooth accessory device 300 and the Bluetooth accessory device 400, so as to perform data exchange.

Refer to FIG. 2. FIG. 2 shows an example of a specific procedure of switching Bluetooth communication connections of the Bluetooth accessory device 300 and the Bluetooth accessory device 400 from the host device 200 to the host device 100. Specific steps are described below.

S201: The host device 200 detects an operation of moving a cursor to a left boundary of a screen by the user.

Specifically, the host device 200 may monitor a position of the cursor and a movement direction of the cursor of the Bluetooth accessory device 400 in real time. When it is detected that the cursor is located at a boundary of the screen and moves towards the boundary of the screen, position information of another host device is already configured on the host device 200 in advance. Therefore, when the host device 200 may determine that the cursor is located at the left boundary of the screen and moves towards the left boundary of the screen, the user intends to switch a Bluetooth communication connection of the Bluetooth accessory device to the host device 100. For example, after the host device 200 detects the operation of moving the cursor to the left boundary of the screen by the user, in response to the operation, the host device 200 may separately send, to the Bluetooth accessory device 300 and the Bluetooth accessory device 400, an instruction for switching a Bluetooth communication connection to the host device 100 (that is, perform the following steps S202 and S205).

S202 to S204: The host device 200 sends, to the Bluetooth accessory device 400, the instruction for switching the Bluetooth communication connection to the host device 100; after receiving the instruction, the Bluetooth accessory device 400 may switch a Bluetooth channel; and after switching is complete, the Bluetooth accessory device 400 may send a message 1 to the host device 100.

Specifically, after receiving the instruction sent by the host device 200 for switching the Bluetooth communication connection to the host device 100, the Bluetooth accessory device 400 may switch the Bluetooth channel to the host device 100. After switching is complete, the Bluetooth accessory device 400 establishes a Bluetooth communication connection with the host device 100. Then, the Bluetooth accessory device 400 may send the message 1 to the host device 100 to exchange data with the host device 100.

The message 1 may include a cursor movement message and a button message of the Bluetooth accessory device 400. In this way, the host device 100 may perform a related task (for example, displaying a position of the cursor and responding to a button operation) based on the message 1.

S205 to S207: The host device 200 sends, to the Bluetooth accessory device 300, the instruction for switching the Bluetooth communication connection to the host device 100; after receiving the instruction, the Bluetooth accessory device 300 may switch a Bluetooth channel; and after switching is complete, the Bluetooth accessory device 300 may send a message 2 to the host device 100.

Specifically, after receiving the instruction sent by the host device 200 for switching the Bluetooth communication connection to the host device 100, the Bluetooth accessory device 300 may switch the Bluetooth channel to the host device 100. After switching is complete, the Bluetooth accessory device 300 establishes a Bluetooth communication connection with the host device 100. Then, the Bluetooth accessory device 300 may send the message 2 to the host device 100 to exchange data with the host device 100.

The message 2 may include a button message of the Bluetooth accessory device 300. In this way, the host device 100 may perform a related task (for example, responding to a button operation) based on the message 2.

Refer to FIG. 3. FIG. 3 shows an example of a specific procedure of switching Bluetooth communication connections of the Bluetooth accessory device 300 and the Bluetooth accessory device 400 from the host device 200 to the host device 201. Specific steps are described below.

S301: The host device 200 detects an operation of moving a cursor to a right boundary of a screen by the user.

Specifically, the host device 200 may monitor a position of the cursor and a movement direction of the cursor of the Bluetooth accessory device 400 in real time. When it is detected that the cursor is located at a boundary of the screen and moves towards the boundary of the screen, position information of another host device is already configured on the host device 200 in advance. Therefore, when the host device 200 may determine that the cursor is located at the right boundary of the screen and moves towards the right boundary of the screen, the user intends to switch a Bluetooth communication connection of the Bluetooth accessory device to the host device 201. For example, after the host device 200 detects the operation of moving the cursor to the right boundary of the screen by the user, in response to the operation, the host device 200 may separately send, to the Bluetooth accessory device 300 and the Bluetooth accessory device 400, an instruction for switching a Bluetooth communication connection to the host device 201 (that is, perform the following steps S302 and S305).

S302 to S304: The host device 200 sends, to the Bluetooth accessory device 400, the instruction for switching the Bluetooth communication connection to the host device 201; after receiving the instruction, the Bluetooth accessory device 400 may switch a Bluetooth channel; and after switching is complete, the Bluetooth accessory device 400 may send a message 1' to the host device 201.

Specifically, after receiving the instruction sent by the host device 200 for switching the Bluetooth communication connection to the host device 201, the Bluetooth accessory device 400 may switch the Bluetooth channel to the host device 201. After switching is complete, the Bluetooth accessory device 400 establishes a Bluetooth communication connection with the host device 201. Then, the Bluetooth accessory device 400 may send the message 1' to the host device 201 to exchange data with the host device 201.

The message 1' may include a cursor movement message and a button message of the Bluetooth accessory device 400. In this way, the host device 201 may perform a related task (for example, displaying a position of the cursor and responding to a button operation) based on the message 1'.

S305 to S307: The host device 200 sends, to the Bluetooth accessory device 300, the instruction for switching the Bluetooth communication connection to the host device 201; after receiving the instruction, the Bluetooth accessory device 300 may switch a Bluetooth channel; and after switching is complete, the Bluetooth accessory device 300 may send a message 2' to the host device 201.

Specifically, after receiving the instruction sent by the host device 200 for switching the Bluetooth communication connection to the host device 201, the Bluetooth accessory device 300 may switch the Bluetooth channel to the host device 201. After switching is complete, the Bluetooth accessory device 300 establishes a Bluetooth communication connection with the host device 201. Then, the Bluetooth accessory device 300 may send the message 2' to the host device 201 to exchange data with the host device 201.

The message 2' may include a button message of the Bluetooth accessory device 300. In this way, the host device 201 may perform a related task (for example, responding to a button operation) based on the message 2'.

It can be learned from FIG. 2 and FIG. 3 that, in the foregoing implementation, a complex application needs to be developed on a host device, which has strong customization and cannot cover a plurality of scenarios. A plurality of Bluetooth accessory devices cannot exchange data with each other, and can only passively receive a control instruction from the host device. Function evolution needs to strongly depend on the application on the host device, and the plurality of Bluetooth accessory devices cannot implement some scenario-based functions in collaboration. In addition, the user needs to configure position information of host devices in advance. In this case, the solution is complex, and the user needs to participate heavily, resulting in poor experience.

### Application scenario 2: Control a Bluetooth accessory device to adjust a related configuration

Generally, the Bluetooth accessory device has some configuration functions, for example, dots per inch (DPI) adjustment and light effect adjustment of a mouse. A button may be added to the mouse or a related application may be developed on a host device to support a manual configuration by a user.

Refer to FIG. 4A. FIG. 4A shows an example of a user interface for setting a mouse on a host device. The user interface may include a DPI adjustment drag bar 411, and a user may adjust DPI of the mouse by dragging the DPI adjustment drag bar 411.

Still refer to FIG. 4A. It can be learned that the mouse has DPI plus and DPI minus buttons, and the user may alternatively adjust the DPI of the mouse by operating the two buttons on the mouse. Generally, to pursue a better appearance of the mouse and reduce hardware costs, it is not expected to add too many control buttons to the mouse. Therefore, a common solution in the current market is to develop a related application on a host device for configuration.

Still refer to FIG. 4A. The user interface may further support a specific function of configuring a button on the mouse as a button combination on the keyboard by the user.

Refer to FIG. 4B. FIG. 4B shows an example of a user interface for adjusting a light effect of the mouse on the host device. The user interface may support the user in turning on/off a light effect, turning on/off an outline light, setting a light color, setting a speed, setting brightness, and the like for the mouse.

It can be learned from FIG. 4A and FIG. 4B that, the related application is developed on the host device to implement adjustment of configurations such as the DPI and the light effect on the mouse, each adjustment requires the user to start the application, and operations are complex. The button is added to the mouse to implement the specific function of the button combination on the keyboard. Because a quantity of buttons of the mouse is limited, a requirement of common button combinations cannot be covered. In addition, software and hardware costs are increased, and an appearance design and an ID design of the mouse are restricted.

### Application scenario 3: Button combination

When a user uses a keyboard and a mouse, in many scenarios, the user uses a left hand to operate the keyboard and a right hand to operate the mouse. However, it is difficult for the user to perform a one-hand operation on some button combinations on the keyboard, for example, a button combination of Fn+Fx. In this case, the user needs to separate the right hand from the mouse, and press Fn and Fx respectively by using the left hand and the right hand to implement a function of the button combination.

In this way, the right hand of the user needs to frequently switch between the keyboard and the mouse, which easily increases fatigue of the user.

### Application scenario 4: One-hand operated keyboard

For a keyboard, from two perspectives of space occupied during carrying and space occupied during use, a user has a requirement for reducing a size of the keyboard. However, for a current one-hand operated keyboard in the market, when a size of the keyboard is reduced, many button functions of the keyboard are also reduced, which cannot meet a user requirement.

Application scenario 5: A plurality of Bluetooth accessory devices separately establish Bluetooth communication connections with a plurality of host devices

When using a Bluetooth accessory device (for example, a keyboard or a mouse) with a Bluetooth multi-connection function, a user may separately trigger each Bluetooth channel of the Bluetooth accessory device to send a Bluetooth broadcast message. The host devices may discover the corresponding Bluetooth accessory device based on the Bluetooth broadcast message, and may further perform Bluetooth pairing with the Bluetooth accessory devices one by one and establish Bluetooth communication connections.

FIG. 5 is an example of a diagram of separately establishing Bluetooth connections between a plurality of Bluetooth accessory devices and a plurality of host devices.

Refer to FIG. 5. For example, two Bluetooth accessory devices (for example, a Bluetooth accessory device 300 and a Bluetooth accessory device 400) separately establish Bluetooth communication connections with three host devices (for example, a host device 100, a host device 200, and a host device 201). If a user wants to establish Bluetooth communication connections between the Bluetooth accessory device 300 and the three host devices, the user needs to separately trigger the Bluetooth accessory device 300 to perform Bluetooth pairing with the three host devices in sequence, that is, the user needs to perform three Bluetooth pairing operations to establish the Bluetooth communication connections between the Bluetooth accessory device 300 and the three host devices. Similarly, if the user wants to establish Bluetooth communication connections between the Bluetooth accessory device 400 and the three host devices, the Bluetooth pairing operation needs to be performed three times to implement the establishment of the Bluetooth communication connections between the Bluetooth accessory device 300 and the three host devices.

It can be seen that, to separately establish Bluetooth communication connections between two Bluetooth accessory devices and three host devices, the user needs to perform six operations. In addition, after the Bluetooth communication connections are established, the user needs to confirm whether host devices connected to the two Bluetooth accessory devices are a same host device. The operations are extremely complex, and user experience is poor.

An embodiment of this application provides a communication method. When a plurality of Bluetooth accessory devices establish Bluetooth communication connections with a host device, a data communication channel may be provided for the plurality of Bluetooth accessory devices based on a Bluetooth routing function of the host device. In this way, data communication may be performed between the plurality of Bluetooth accessory devices, so that the plurality of Bluetooth accessory devices can implement differentiated functions in collaboration in corresponding scenarios, to simplify user operations and improve user experience.

The communication method provided in an embodiment of this application mainly includes the following four solutions.

Solution 1 (namely, the following Embodiment 1, which is used to resolve the problem existing in the foregoing application scenario 1):
based on the Bluetooth routing function of the host device, an information synchronization function of the plurality of Bluetooth accessory devices is implemented (for example, information of a Bluetooth switching event performed by the Bluetooth accessory devices is synchronized). In this way, the Bluetooth communication connections of the plurality of Bluetooth accessory devices may be automatically switched from one host device to another host device by operating one Bluetooth accessory device (for example, pressing a Bluetooth switching button of one Bluetooth accessory device). Automatic collaboration of a plurality of devices is implemented with one operation.

Solution 2 (namely, the following Embodiment 2 and Embodiment 3, which are used to resolve the problem existing in the foregoing application scenario 2):
based on the Bluetooth routing function of the host device, an information synchronization function of the plurality of Bluetooth accessory devices is implemented (for example, information of a button state of a Bluetooth accessory device is synchronized). In this way, a button (for example, a DPI button and a light effect adjustment button on a keyboard) on one Bluetooth accessory device may be used to configure another Bluetooth accessory device (for example, the DPI button and the light effect adjustment button on the keyboard are used to implement DPI adjustment and light effect adjustment on a mouse), so as to share hardware resources, reduce costs, and optimize a product appearance.

Solution 3 (namely, the following Embodiment 4, which is used to resolve the problem existing in the foregoing application scenario 3 and application scenario 4):
based on the Bluetooth routing function of the host device, an information synchronization function of the plurality of Bluetooth accessory devices is implemented (for example, button state information of a Bluetooth accessory device is synchronized). In this way, button state information of one Bluetooth accessory device may be synchronized to another Bluetooth accessory device. On the one hand, a button on one Bluetooth accessory device and a button on another Bluetooth accessory device may form a button combination (for example, a side button on a mouse and a button Fx on a keyboard may form a button combination having a same function as that of Fn+Fx on the keyboard), and the user does not need to frequently switch between two Bluetooth accessory devices (for example, the mouse and the keyboard), so as to reduce fatigue of the user. On the other hand, buttons on one Bluetooth accessory device may implement different functions based on different button states of another Bluetooth accessory device. For example, when a button on the mouse is pressed, a function of a button on the keyboard may be changed (for example, Q, W, E, R, and T on the keyboard is respectively converted into Y, U, I, O, and P). One-button-based multi-function is implemented. A quantity of buttons on the keyboard is reduced, and a size of the keyboard is reduced. In this way, user requirements can still be met.

Solution 4 (namely, the following Embodiment 5, which is used to resolve the problem existing in the foregoing application scenario 5):
the host device may send, through a Bluetooth accessory device that establishes a Bluetooth communication connection with the host device, device information (such as a Bluetooth MAC address) of another Bluetooth accessory device to another host device that establishes a Bluetooth communication connection with the Bluetooth accessory device. In this way one or more host devices obtain device information of a Bluetooth accessory device that does not establish a Bluetooth communication connection with the host devices. The one or more host devices may actively perform Bluetooth pairing with the Bluetooth accessory device based on the device information of the Bluetooth accessory device and establish a Bluetooth communication connection, to simplify user operations, and improve user experience.

The foregoing four solutions are described in detail in subsequent embodiments. Details are not described herein.

The following describes diagrams of two software architecture of a host device according to an embodiment of this application.

An operating system configured for the host device provided in embodiments of this application may include but is not limited to HarmonyOS^{®}, Android^{®}, macOS^{®}, and Windows^{®}.

When the operating system configured for the host device is HarmonyOS^{®} (namely, the HarmonyOS^{®} operating system), a software architecture of the host device may be an architecture shown in FIG. 6A as an example.

As shown in FIG. 6A, the host device may include an application layer, a framework layer, and a driver layer.

The application layer may include a series of applications.

The framework layer may provide an application programming interface (API) and a programming framework for applications at the application layer. The framework layer includes some predefined functions.

As shown in FIG. 6A, the framework layer may include an input subsystem and a Bluetooth management service module.

The input subsystem may be configured to receive input events such as a button and a touch, may process these original input events, and may further dispatch these events. The input subsystem may further provide an interface for injecting an event. An application may generate an input event by invoking the interface, and then inject the input event into the input subsystem for processing.

The Bluetooth management service module may include a Bluetooth device management service module and a Bluetooth route management service module.

The Bluetooth device management service module may be configured to query whether a Bluetooth device exists nearby, establish a Bluetooth communication connection with a Bluetooth accessory device, be responsible for that a local device can be discovered or connected by another device, and the like.

The Bluetooth route management service module is a core module of embodiments of this application, and may be configured to be responsible for route registration management, data forwarding, and the like of a Bluetooth accessory device.

The driver layer may be configured to detect and enable hardware. The driver layer may include one or more drivers, for example, a display driver, a camera driver, an audio driver, a sensor driver, and a Bluetooth driver.

When the operating system configured for the host device is an operating system other than HarmonyOS^{®}, using Windows^{®} as an example, a software architecture of the host device may be an architecture shown in FIG. 6B as an example.

As shown in FIG. 6B, the host device may include an application layer, a Windows software development kit (SDK), and a driver layer.

The application layer may include a series of applications, for example, an application 1 (for example, a computer manager). The application 1 may include a Bluetooth route management service module.

It can be seen that, different from the embodiment shown in FIG. 6A, the Bluetooth route management service module shown in FIG. 6B is integrated in the application layer, and a function of the Bluetooth route management service module may be similar to that of the Bluetooth route management service module shown in FIG. 6A.

The Windows SDK may include a Bluetooth SDK. The Bluetooth SDK may provide a related interface for the Bluetooth route management service module in the upper-layer application to implement the method provided in embodiments of this application.

The driver layer may be configured to detect and enable hardware. The driver layer may include one or more drivers, for example, a display driver, a camera driver, an audio driver, a sensor driver, and a Bluetooth driver.

It may be understood that FIG. 6A and FIG. 6B are merely examples, and should not impose any limitation on the software architecture of the host device in embodiments of this application. For example, in some other embodiments of this application, the software architecture of the host device may alternatively use a layered structure different from that in the examples shown in FIG. 6A and FIG. 6B, or each layer may further include more or fewer modules, a combination of a plurality of different modules, or the like. This is not limited in embodiments of this application.

Refer to FIG. 6C. FIG. 6C is an example of a diagram of an architecture of the foregoing Bluetooth route management service module according to an embodiment of this application.

As shown in FIG. 6C, the Bluetooth route management service module may include a Bluetooth route service connection management module, a Bluetooth routing protocol module, a routing device registration management module, a data forwarding module, and a route mapping table.

The Bluetooth route service connection management module may be configured to: establish a specific universally unique identifier (UUID) service connection and device authentication based on a Bluetooth protocol; send a received packet to the Bluetooth routing protocol module; provide a data transmitting/receiving interface; send a routing packet to a corresponding Bluetooth accessory device based on the routing packet and a communication handle that are sent by the data forwarding module; and the like.

The received packet may be a packet (for example, a registration packet or a routing packet) from the Bluetooth accessory device.

The Bluetooth routing protocol module may be configured to be responsible for parsing the packet sent by Bluetooth route service connection management, sending the registration packet to the routing device registration management module, sending the routing packet to the data forwarding module, and the like.

The routing device registration management module may be configured to: receive the registration packet sent by the Bluetooth routing protocol module, update the route mapping table, and the like.

For example, after receiving the registration packet sent by the Bluetooth routing protocol module, the routing device registration management module may write the communication handle into the corresponding route mapping table based on a registered device type in the registration packet.

The communication handle may include information about a Bluetooth communication connection corresponding to the registered device type (for example, information about a Bluetooth channel).

The route mapping table may be used to record and store a mapping relationship between the registered device type and the communication handle, namely, a mapping relationship between the registered device type and the Bluetooth communication connection.

The data forwarding module may be configured to receive the routing packet sent by the Bluetooth routing protocol module; may further read the route mapping table based on a destination device type carried in the routing packet, to obtain a communication handle corresponding to the destination device type; may further send the routing packet and the communication handle to the Bluetooth route service connection management module; and the like.

It may be understood that FIG. 6C is merely an example, and should not impose any limitation on an architecture of the Bluetooth route management service module in embodiments of this application. For example, in some other embodiments of this application, the architecture of the Bluetooth route management service module may further include more or fewer modules, a combination of a plurality of different modules, or the like. This is not limited in embodiments of this application.

Refer to FIG. 6D. FIG. 6D is an example of a diagram of a structure of a Bluetooth routing protocol packet according to an embodiment of this application.

As shown in FIG. 6D, the Bluetooth routing protocol packet may include the following fields: version information (Version), a data type, a source device type (SrcDevType), a destination device type (DestDevType), a reserved (Rev) field, and a payload.

The version information (Version) may have a field length of 1 byte, may include information such as a version of a routing protocol, and may be used to perform protocol matching check between devices.

The data type (Data Type) may have a field length of 1 byte, and may indicate a data type of a packet.

For example, 0×01 may indicate that a data type of a packet is a registration type, that is, the packet is a registration packet (which may also be referred to as a device registration packet), and 0×02 may indicate that a data type of a packet is a routing type, that is, the packet is a routing packet (namely, a packet that needs to be routed to another device).

The source device type (SrcDevType) may have a field length of 1 byte, and may indicate a device type of a packet sender.

For example, 0×00 may indicate a host device, 0×01 may indicate a mouse device, 0×02 may indicate a keyboard device, 0×03 may indicate a stylus device, and 0×04 may indicate a speaker device.

The destination device type (DestDevType) may have a field length of 2 bytes, and may indicate a device type of a packet receiver. Each bit may indicate a device type. For example, bit 0 may indicate a host device, bit 1 may indicate a mouse device, bit 2 may indicate a keyboard device, bit 3 may indicate a stylus device, and bit 4 may indicate a speaker device.

If one or more bits are set to 1, a destination device type may be a device type indicated by the one or more bits. For example, if bit 1 is set to 1, a destination device type is a mouse device. For another example, if bit 1 and bit 2 are set to 1, destination device types are a mouse device and a keyboard device.

The reserved (Rev) field may have a field length of 2 bytes, and may indicate undefined data for subsequent extension.

The payload (Payload) may have a field length of n bytes (where n is a positive integer), may be based on a service requirement between devices, and may indicate self-defined data.

In embodiments of this application, the self-defined data may include information about an event detected by a Bluetooth accessory device (for example, information about an event of pressing a button on a keyboard by a user, and information about an event of pressing a button on a mouse by a user).

It may be understood that the structure of the Bluetooth routing protocol packet shown in FIG. 6D is merely an example. In some embodiments, the structure of the Bluetooth routing protocol packet may be another structure. This is not limited in embodiments of this application.

The following describes a diagram of a software architecture of a Bluetooth accessory device according to an embodiment of this application.

An operating system configured for the Bluetooth accessory device provided in embodiments of this application may include but is not limited to HarmonyOS^{®}, Linux^{®}, and a lightweight Internet of Things system kernel LiteOS^{®}.

In some embodiments, the operating system configured for the Bluetooth accessory device may be an embedded operating system, or no operating system is configured for the Bluetooth accessory device.

Refer to FIG. 7. FIG. 7 is an example of a diagram of a software architecture of a Bluetooth accessory device.

As shown in FIG. 7, the Bluetooth accessory device may include an application layer, a service layer, and a driver layer.

The application layer is an implementation module of a specific service function of the Bluetooth accessory device, and may include an event processing module.

The event processing module may be configured to receive information about an event sent by a Bluetooth data communication service module, and may be further configured to perform a corresponding action based on the information about the event. For example, in response to an event of pressing a button on a keyboard by a user, a button value corresponding to the button is sent to a host device based on a Bluetooth protocol of a human interface device (Human Interface Device, HID), or an action of switching a Bluetooth channel is performed.

The service layer is a module that provides a general capability of the Bluetooth accessory device, and may include an event monitoring module and a Bluetooth data communication service module.

For example, the event monitoring module may be configured to be responsible for monitoring all events of the Bluetooth accessory device (for example, an event of pressing a button by the user, an event of releasing a button by the user, an event of establishing a Bluetooth communication connection, and an event of disconnecting a Bluetooth communication connection), and may further collect information about the foregoing events.

The Bluetooth data communication service module may be configured to be responsible for encapsulation and parsing of route data, provide a transmitting/receiving interface of the route data, and the like.

The driver layer is a module for detecting and enabling hardware of the Bluetooth accessory device, and may include a button collection module and a Bluetooth SDK.

The button collection module may be configured to obtain a button pressing behavior of the user.

The Bluetooth SDK may provide a basic SDK of a Bluetooth chip.

It may be understood that FIG. 7 is merely an example, and should not impose any limitation on the software architecture of the Bluetooth accessory device in embodiments of this application. For example, in some other embodiments of this application, the software architecture of the Bluetooth accessory device may alternatively use a layered structure different from that in the example shown in FIG. 7, or each layer may further include more or fewer modules, a combination of a plurality of different modules, or the like. This is not limited in embodiments of this application.

Based on the foregoing software architectures of the host device and the Bluetooth accessory device, the following describes a specific procedure of a Bluetooth routing method provided in an embodiment of this application.

FIG. 8A to FIG. 8C show an example of a specific procedure of a Bluetooth routing method according to an embodiment of this application.

As shown in FIG. 8A to FIG. 8C, the method may be applied to a communication system including a host device, a Bluetooth accessory device A, and a Bluetooth accessory device B. The host device may include a Bluetooth route management service module, the Bluetooth accessory device A may include an event monitoring module and a Bluetooth data communication service module, and the Bluetooth accessory device B may include an event processing module and a Bluetooth data communication service module. Specific steps of the method are described in detail below.

First, in this embodiment of this application, Bluetooth route service connections need to be established between the host device and the Bluetooth accessory device A and between the host device and the Bluetooth accessory device B, and the Bluetooth accessory device A and the Bluetooth accessory device B need to register device types with the host device. Steps in the following phase 2 can continue to be performed only after the Bluetooth route service connections are established and the device types are registered, so as to perform Bluetooth route data communication between devices.

For example, a possible implementation of establishing the Bluetooth route service connections and registering the device types may be an implementation described in the following phase 1 (step S801 to step S806), which is described in detail below.

Phase 1: Establish the Bluetooth route service connections and register the device types

S801 to S803: The Bluetooth accessory device A establishes a Bluetooth route service connection 1 with the host device, and then the Bluetooth accessory device A may send a registration request 1 to the host device, where the request includes a device type of the Bluetooth accessory device A; and the host device stores a mapping relationship between a Bluetooth communication connection 1 and the device type of the Bluetooth accessory device A, where the Bluetooth communication connection 1 is a Bluetooth communication connection established between the Bluetooth accessory device A and the host device.

The Bluetooth route service connection 1 may be a service connection of a specific UUID established based on a Bluetooth protocol. Through the Bluetooth route service connection, the Bluetooth accessory device A may perform device registration (for example, perform Bluetooth routing device type registration) with the host device, and perform data communication with the host device.

After the Bluetooth accessory device A establishes the Bluetooth route service connection 1 with the host device, the Bluetooth data communication service module of the Bluetooth accessory device A may actively send the registration request 1 to the Bluetooth route management service module of the host device. The request may be a request of the Bluetooth accessory device A for registering a Bluetooth routing device type with the host device, and the request may include the device type of the Bluetooth accessory device A.

It may be easily understood that the registration request 1 is a registration packet. For a structure of the registration request 1, refer to the structure of the packet shown in FIG. 6D.

After the Bluetooth route management service module of the host device receives the registration request 1 sent by the Bluetooth accessory device A, the Bluetooth route management service module of the host device may obtain the device type of the Bluetooth accessory device A by parsing the registration request 1, and then record and store the mapping relationship between the Bluetooth communication connection 1 and the device type of the Bluetooth accessory device A.

It may be understood that, before the Bluetooth accessory device A establishes the Bluetooth route service connection 1 with the host device, the Bluetooth accessory device A further needs to establish the Bluetooth communication connection 1 with the host device first, where the Bluetooth communication connection 1 may be established through a Bluetooth device management module of the host device. In other words, on the basis that the Bluetooth accessory device A establishes the Bluetooth communication connection 1 with the host device, the Bluetooth accessory device A may establish the Bluetooth route service connection 1 with the host device.

S804 to S806: The Bluetooth accessory device B establishes a Bluetooth route service connection 2 with the host device, and then the Bluetooth accessory device B may send a registration request 2 to the host device, where the request includes a device type of the Bluetooth accessory device B; and the host device stores a mapping relationship between a Bluetooth communication connection 2 and the device type of the Bluetooth accessory device B, where the Bluetooth communication connection 2 is a Bluetooth communication connection established between the Bluetooth accessory device B and the host device.

The Bluetooth route service connection 2 may be a service connection of a specific UUID established based on a Bluetooth protocol. Through the Bluetooth route service connection, the Bluetooth accessory device B may perform device registration (for example, perform Bluetooth routing device type registration) with the host device, and perform data communication with the host device.

After the Bluetooth accessory device B establishes the Bluetooth route service connection 2 with the host device, the Bluetooth data communication service module of the Bluetooth accessory device B may actively send the registration request 2 to the Bluetooth route management service module of the host device, where the request may be a request of the Bluetooth accessory device B for registering a Bluetooth routing device type with the host device, and the request may include the device type of the Bluetooth accessory device B.

It may be easily understood that the registration request 2 is a registration packet. For a structure of the registration request 2, refer to the structure of the packet shown in FIG. 6D.

After the Bluetooth route management service module of the host device receives the registration request 2 sent by the Bluetooth accessory device B, the Bluetooth route management service module of the host device may obtain the device type of the Bluetooth accessory device B by parsing the registration request 2, and then record and store the mapping relationship between the Bluetooth communication connection 2 and the device type of the Bluetooth accessory device B.

It may be understood that, before the Bluetooth accessory device B establishes the Bluetooth route service connection 2 with the host device, the Bluetooth accessory device B further needs to establish the Bluetooth communication connection 2 with the host device first, where the Bluetooth communication connection 2 may be established through the Bluetooth device management module of the host device. In other words, on the basis that the Bluetooth accessory device B establishes the Bluetooth communication connection 2 with the host device, the Bluetooth accessory device B may establish the Bluetooth route service connection 2 with the host device.

It should be noted that a time sequence of performing step S801 to step S803 and step S804 to step S806 is not limited in embodiments of this application. For example, step S801 to step S803 may be performed before step S804 to step S806. For another example, step S801 to step S803 may be performed after step S804 to step S806. For another example, step S801 to step S803 and step S804 to step S806 may be performed simultaneously.

After the phase 1 (namely, a phase of establishing the Bluetooth route service connections and registering the device types) is completed, Bluetooth route data communication between devices may be performed through the established Bluetooth route service connections.

For example, a possible implementation of performing Bluetooth route data communication between the devices may be an implementation described in the following phase 2 (step S807 to step S821), which is described in detail below.

Phase 2: Perform Bluetooth route data communication between the devices

S807 to S810: The event monitoring module of the Bluetooth accessory device A detects that an event a occurs, and then the event monitoring module of the Bluetooth accessory device A may send data 1 to the Bluetooth data communication service module of the Bluetooth accessory device A, where the data may include information about the event a and a destination device type 1; and the Bluetooth data communication service module of the Bluetooth accessory device A may encapsulate the data 1, and then send encapsulated data 1 to the Bluetooth route management service module of the host device.

Specifically, the event monitoring module of the Bluetooth accessory device A may perform event monitoring in real time. After detecting that the event a (for example, an event of pressing a button of the Bluetooth accessory device A by a user) occurs, the event monitoring module may invoke a data sending interface provided by the Bluetooth data communication service module to send the data 1 to the Bluetooth data communication service module, where the data may include the information about the event a (for example, information about a button value corresponding to a button of the Bluetooth accessory device A pressed by the user) and the destination device type 1.

The data 1 may include one or more destination device types (for example, the destination device type 1), and the one or more destination device types may be preset and do not need to be manually set by the user. The one or more destination device types are device types corresponding to devices (namely, receivers of the data 1) that need to receive the data 1.

After receiving the data 1, the Bluetooth data communication service module of the Bluetooth accessory device A may encapsulate the data 1 to obtain data satisfying a Bluetooth protocol format, namely, the encapsulated data 1.

It may be easily understood that the encapsulated data 1 is a routing packet. For a structure of the encapsulated data 1, refer to the structure of the packet shown in FIG. 6D.

Further, the Bluetooth data communication service module of the Bluetooth accessory device A may send the encapsulated data 1 to the Bluetooth route management service module of the host device.

S811 and S812: The Bluetooth route management service module of the host device determines, based on the encapsulated data 1, that the destination device type 1 is the device type of the Bluetooth accessory device B, and determines, based on stored mapping relationships between device types and Bluetooth communication connections, that a Bluetooth communication connection corresponding to the destination device type 1 is the Bluetooth communication connection 2; and then the Bluetooth route management service module of the host device may send the encapsulated data 1 to the Bluetooth data communication service module of the Bluetooth accessory device B.

Specifically, it is assumed that the destination device type 1 is the device type of the Bluetooth accessory device B. After the Bluetooth route management service module of the host device receives the encapsulated data 1 sent by the Bluetooth accessory device A, because the encapsulated data 1 includes the destination device type 1, the Bluetooth route management service module of the host device may parse the encapsulated data 1 to obtain the destination device type 1 and determine that the destination device type 1 is the device type of the Bluetooth accessory device B. Further, because the Bluetooth route management service module of the host device records and stores the mapping relationship between the device type of the Bluetooth accessory device B and the Bluetooth communication connection 2 in the phase 1, the Bluetooth route management service module of the host device may determine, based on the stored mapping relationships between the device types and the Bluetooth communication connections, that the Bluetooth communication connection corresponding to the destination device type 1 is the Bluetooth communication connection 2. Further, the Bluetooth route management service module of the host device may determine that the encapsulated data 1 needs to be sent to the Bluetooth accessory device B through the Bluetooth communication connection 2. Then, the Bluetooth route management service module of the host device may send the encapsulated data 1 to the Bluetooth data communication service module of the Bluetooth accessory device B through the Bluetooth communication connection 2.

In some embodiments, for example, in a scenario in which only the Bluetooth accessory device A and the Bluetooth accessory device B are included, or in a scenario in which the event a is a general event (for example, an event of changing a Bluetooth communication connection) of all Bluetooth accessory devices, the data 1 in step S808 may alternatively include only the information about the event a, and does not include the destination device type 1.

In some embodiments, in step S812, the host device may alternatively send only the information about the event a included in the data 1 to the Bluetooth accessory device B.

S813 and S814: The Bluetooth data communication service module of the Bluetooth accessory device B parses the encapsulated data 1 to identify the information about the event a, and then the Bluetooth data communication service module of the Bluetooth accessory device B may send an event processing message to the event processing module of the Bluetooth accessory device B, where the message includes the information about the event a.

Specifically, after receiving the encapsulated data 1 sent by the Bluetooth route management service module of the host device, the Bluetooth data communication service module of the Bluetooth accessory device B may parse the encapsulated data 1, so as to identify the information about the event a included in the encapsulated data 1. Then, the Bluetooth data communication service module of the Bluetooth accessory device B may send the event processing message to the event processing module of the Bluetooth accessory device B, so as to notify the event processing module of the Bluetooth accessory device B to process the event a, where the message may include the information about the event a.

S815 and S816: The event processing module of the Bluetooth accessory device B performs an action corresponding to the event a, and after the action is completed, may send an event processing complete message to the Bluetooth data communication service module of the Bluetooth accessory device B.

Specifically, after receiving the event processing message sent by the Bluetooth data communication service module of the Bluetooth accessory device B, the event processing module of the Bluetooth accessory device B may process the event a, that is, perform the action corresponding to the event a. After the action is completed, the event processing complete message may be sent to the Bluetooth data communication service module of the Bluetooth accessory device B, so as to notify the Bluetooth data communication service module of the Bluetooth accessory device B that the event processing module of the Bluetooth accessory device B has completed processing of the event a.

The event processing complete message may include a result of processing the event a by the Bluetooth accessory device B.

S817: The Bluetooth data communication service module of the Bluetooth accessory device B sends response data to the Bluetooth route management service module of the host device, where the data includes the event processing complete message and a destination device type 2.

Specifically, after receiving the event processing complete message sent by the event processing module of the Bluetooth accessory device B, the Bluetooth data communication service module of the Bluetooth accessory device B may generate the response data, where the data may include the event processing complete message and the destination device type 2. Then, the Bluetooth data communication service module of the Bluetooth accessory device B may send the response data to the Bluetooth route management service module of the host device, so that the result of processing the event a by the Bluetooth accessory device B is fed back to the Bluetooth accessory device A through the host device.

The destination device type 2 may be a device type (namely, the device type of the Bluetooth accessory device A) corresponding to a sender of the data 1.

It may be easily understood that the response data is a routing packet. For a structure of the response data, refer to the structure of the packet shown in FIG. 6D.

S818 and S819: The Bluetooth route management service module of the host device determines, based on the response data, that the destination device type 2 is the device type of the Bluetooth accessory device A, and determines, based on the stored mapping relationships between the device types and the Bluetooth communication connections, that a Bluetooth communication connection corresponding to the destination device type 2 is the Bluetooth communication connection 1; and then the Bluetooth route management service module of the host device may send the response data to the Bluetooth data communication service module of the Bluetooth accessory device A.

Specifically, it may be understood that the destination device type 2 is the device type of the Bluetooth accessory device A. After the Bluetooth route management service module of the host device receives the response data sent by the Bluetooth accessory device B, because the response data includes the destination device type 2, the Bluetooth route management service module of the host device may parse the response data to obtain the destination device type 2 and determine that the destination device type 2 is the device type of the Bluetooth accessory device A. Further, because the Bluetooth route management service module of the host device records and stores the mapping relationship between the device type of the Bluetooth accessory device A and the Bluetooth communication connection 1 in the phase 1, the Bluetooth route management service module of the host device may determine, based on the stored mapping relationships between the device types and the Bluetooth communication connections, that the Bluetooth communication connection corresponding to the destination device type 2 is the Bluetooth communication connection 1. Further, the Bluetooth route management service module of the host device may determine that the response data needs to be sent to the Bluetooth accessory device A through the Bluetooth communication connection 1. Then, the Bluetooth route management service module of the host device may send the response data to the Bluetooth data communication service module of the Bluetooth accessory device A through the Bluetooth communication connection 1.

S820 and S821: The Bluetooth data communication service module of the Bluetooth accessory device A parses the response data to obtain the event processing complete message, and then the Bluetooth data communication service module of the Bluetooth accessory device A may send the event processing complete message to the event monitoring module of the Bluetooth accessory device A.

Specifically, after receiving the response data sent by the Bluetooth route management service module of the host device, the Bluetooth data communication service module of the Bluetooth accessory device A may parse the response data to obtain the event processing complete message. Then, the Bluetooth data communication service module of the Bluetooth accessory device A may send the event processing complete message to the event monitoring module of the Bluetooth accessory device A, so as to notify the event monitoring module of the Bluetooth accessory device A of the result of processing the event a by the Bluetooth accessory device B.

In the foregoing embodiment, when event processing is completed (that is, event processing is successful), the Bluetooth accessory device B may send the event processing complete message to the Bluetooth accessory device A through the host device. In some embodiments, when event processing fails, the Bluetooth accessory device B may alternatively send a corresponding message to the Bluetooth accessory device A through the host device to notify the Bluetooth accessory device A that event processing fails. In this way, the Bluetooth accessory device A may perform a corresponding operation based on the message, for example, re-send the data 1 to the Bluetooth accessory device B through the host device.

According to the method provided by the embodiment shown in FIG. 8A to FIG. 8C, when a plurality of Bluetooth accessory devices establish Bluetooth communication connections with the host device, data communication channels may be provided for the plurality of Bluetooth accessory devices based on a Bluetooth routing function of the host device. In this way, data communication may be performed between the plurality of Bluetooth accessory devices, so that the plurality of Bluetooth accessory devices can complete a task or implement a function in collaboration.

The following describes, with reference to different application scenarios, the communication method provided in embodiments of this application.

Embodiment 1: Bluetooth communication connections of a plurality of Bluetooth accessory devices are automatically switched from one host device to another host device by operating one Bluetooth accessory device (for example, pressing a Bluetooth switching button of one Bluetooth accessory device).

FIG. 9A to FIG. 9D show an example of a specific procedure of the communication method provided in an embodiment of this application in an application scenario of switching Bluetooth communication connections of a plurality of Bluetooth accessory devices.

As shown in FIG. 9A to FIG. 9D, the method may be applied to a communication system including a host device 100, a host device 200, a Bluetooth accessory device 300 (for example, a keyboard), a Bluetooth accessory device 400 (for example, a mouse), and a Bluetooth accessory device 500 (for example, a speaker). Specific steps of the method are described in detail below.

First, in an embodiment of this application, Bluetooth route service connections need to be established between the host device 100 and the Bluetooth accessory device 300, the Bluetooth accessory device 400, and the Bluetooth accessory device 500, and the Bluetooth accessory device 300, the Bluetooth accessory device 400, and the Bluetooth accessory device 500 need to register device types with the host device 100. Steps in the following phase 2 can continue to be performed only after the Bluetooth route service connections are established and the device types are registered, so as to switch Bluetooth communication connections of a plurality of Bluetooth accessory devices.

For example, a possible implementation of establishing the Bluetooth route service connections and registering the device types may be an implementation described in the following phase 1 (step S901 to step S909), which is described in detail below.

### Phase 1: Establish the Bluetooth route service connections and register the device types

S901 to S903: The Bluetooth accessory device 300 establishes a Bluetooth route service connection 1 with the host device 100, and then the Bluetooth accessory device 300 may send a registration request 1 to the host device 100, where the request includes a device type of the Bluetooth accessory device 300; and the host device 100 stores a mapping relationship between a Bluetooth communication connection 1 and the device type of the Bluetooth accessory device 300, where the Bluetooth communication connection 1 is a Bluetooth communication connection established between the Bluetooth accessory device 300 and the host device 100.

S904 to S906: The Bluetooth accessory device 400 establishes a Bluetooth route service connection 2 with the host device 100, and then the Bluetooth accessory device 400 may send a registration request 2 to the host device 100, where the request includes a device type of the Bluetooth accessory device 400; and the host device 100 stores a mapping relationship between a Bluetooth communication connection 2 and the device type of the Bluetooth accessory device 400, where the Bluetooth communication connection 2 is a Bluetooth communication connection established between the Bluetooth accessory device 400 and the host device 100.

S907 to S909: The Bluetooth accessory device 500 establishes a Bluetooth route service connection 3 with the host device 100, and then the Bluetooth accessory device 500 may send a registration request 3 to the host device 100, where the request includes a device type of the Bluetooth accessory device 500; and the host device 100 stores a mapping relationship between a Bluetooth communication connection 3 and the device type of the Bluetooth accessory device 500, where the Bluetooth communication connection 3 is a Bluetooth communication connection established between the Bluetooth accessory device 500 and the host device 100.

Step S901 to step S903, step S904 to step S906, and step S907 to step S909 are similar to step S801 to step S803 (or step S804 to step S806) in the phase 1 shown in FIG. 8A to FIG. 8C. For a specific execution process, refer to related text descriptions of step S801 to step S803 (or step S804 to step S806) in the phase 1 shown in FIG. 8A to FIG. 8C. Details are not described herein again.

After the phase 1 (namely, a phase of establishing the Bluetooth route service connections and registering the device types) is completed, the Bluetooth communication connections of the plurality of Bluetooth accessory devices may be switched based on the established Bluetooth route service connections.

For example, a possible implementation of switching the Bluetooth communication connections of the plurality of Bluetooth accessory devices may be an implementation described in the following phase 2 (step S910 to step S920), which is described in detail below.

### Phase 2: Switch the Bluetooth communication connections of the plurality of Bluetooth accessory devices

S910 and S911: The Bluetooth accessory device 300 detects an event that a user triggers switching of a Bluetooth communication connection from the host device 100 to the host device 200 (namely, a switching event), and then the Bluetooth accessory device 300 may send data 1 to the host device 100, where the data may include information about the switching event, the device type of the Bluetooth accessory device 400, and the device type of the Bluetooth accessory device 500.

It is assumed that the Bluetooth accessory device 300 is an example keyboard shown in FIG. 10. Refer to FIG. 10. It can be learned that the Bluetooth accessory device 300 has an F8 button, an F9 button, and an F10 button, and the three buttons (which may alternatively be referred to as Bluetooth switching buttons) may all be configured to support the Bluetooth accessory device 300 in performing Bluetooth pairing with another device and establishing a Bluetooth communication connection. In other words, the Bluetooth accessory device 300 may have three Bluetooth channels, the three buttons each may correspond to one Bluetooth channel, and the Bluetooth accessory device 300 may separately perform Bluetooth pairing with other three devices and establish Bluetooth communication connections through the three Bluetooth channels. Then, the user only needs to tap the F8 button, the F9 button, and the F10 button to switch a Bluetooth communication connection between the devices, and does not need to perform Bluetooth pairing again. This is convenient and quick.

It may be understood that, when an accessory device (for example, the Bluetooth accessory device 300) is in a working state, the accessory device can perform data communication (for example, Bluetooth data communication) with only one host device with which a communication connection (for example, a Bluetooth communication connection) is established. In this case, a host device that can perform data communication with the accessory device through an established communication connection may be referred to as a focus host device of the accessory device. For example, when the accessory device is a keyboard or a mouse, a host device currently operated or controlled by the accessory device may be referred to as a focus host device of the accessory device. For another example, when the accessory device is a speaker, a host device currently controlling the accessory device may be referred to as a focus host device of the accessory device.

It may be easily understood that, before the switching event is triggered, focus host devices of the Bluetooth accessory device 300, the Bluetooth accessory device 400, and the Bluetooth accessory device 500 are all the host device 100; and after the switching event is triggered, the focus host devices of the Bluetooth accessory device 300, the Bluetooth accessory device 400, and the Bluetooth accessory device 500 may be switched from the host device 100 to another host device (for example, the host device 200).

It should be noted that "switching a Bluetooth communication connection of a Bluetooth accessory device, or switching a Bluetooth communication connection of a Bluetooth accessory device from one host device to another host device, or switching a Bluetooth channel of a Bluetooth accessory device" in embodiments of this application may refer to changing a focus host device of the Bluetooth accessory device from one host device to another host device. To be specific, before switching, the Bluetooth accessory device may perform Bluetooth data communication with a host device (for example, the host device 100) through a Bluetooth communication connection established with the host device (for example, the host device 100); and after switching, the Bluetooth accessory device may perform Bluetooth data communication with another host device (for example, the host device 200) through a Bluetooth communication connection established with the another host device (for example, the host device 200).

For example, a Bluetooth communication connection corresponding to the F8 button is the Bluetooth communication connection established between the Bluetooth accessory device 300 and the host device 100 in the phase 1. It is assumed that the Bluetooth accessory device 300 has performed Bluetooth pairing with the host device 200 through the F9 button, and the Bluetooth accessory device 300 and the host device 100 currently maintain the Bluetooth communication connection. When the user wants to switch the current Bluetooth communication connection from the host device 100 to the host device 200 (that is, the Bluetooth accessory device 300 establishes a Bluetooth communication connection with the host device 200 for Bluetooth data communication), the Bluetooth accessory device 300 may detect an event that the user triggers switching of the Bluetooth communication connection from the host device 100 to the host device 200 (for example, an event of pressing, by the user, the F9 button shown in FIG. 10). Then, the Bluetooth accessory device 300 may send the data 1 to the host device 100 through the Bluetooth route service connection 1 established with the host device 100, where the data may include the information about the switching event, the device type of the Bluetooth accessory device 400, and the device type of the Bluetooth accessory device 500.

The information about the switching event may include device information of the host device 200, for example, a Bluetooth media access control (MAC) address of the host device 200. The Bluetooth MAC address of the host device 200 may be a complete Bluetooth MAC address, or may be a partial Bluetooth MAC address, for example, last three bits of the Bluetooth MAC address, so as to improve security.

The device type of the Bluetooth accessory device 400 and the device type of the Bluetooth accessory device 500 may be destination device types, which are preset and do not need to be manually set by the user.

It may be understood that there may be one or more destination device types. In embodiments of this application, an example in which there are only two destination device types is used for description. This shall not constitute any limitation.

S912 to S914: The host device 100 determines, based on the data 1, that the destination device types are the device type of the Bluetooth accessory device 400 and the device type of the Bluetooth accessory device 500, and determines, based on stored mapping relationships between device types and Bluetooth communication connections, that a Bluetooth communication connection corresponding to the device type of the Bluetooth accessory device 400 is the Bluetooth communication connection 2, and that a Bluetooth communication connection corresponding to the device type of the Bluetooth accessory device 500 is the Bluetooth communication connection 3; and then the host device 100 may separately send the data 1 to the Bluetooth accessory device 400 and the Bluetooth accessory device 500.

Specifically, after receiving the data 1 sent by the Bluetooth accessory device 300, the host device 100 may parse the data 1 and determine that the destination device types are the device type of the Bluetooth accessory device 400 and the device type of the Bluetooth accessory device 500. Further, in the phase 1, the host device 100 records and stores the mapping relationship between the device type of the Bluetooth accessory device 400 and the Bluetooth communication connection 2 and the mapping relationship between the device type of the Bluetooth accessory device 500 and the Bluetooth communication connection 3. Therefore, the host device 100 may determine, based on the stored mapping relationships between the device types and the Bluetooth communication connections, that a Bluetooth communication connection corresponding to the device type of the Bluetooth accessory device 400 is the Bluetooth communication connection 2, and that a Bluetooth communication connection corresponding to the device type of the Bluetooth accessory device 500 is the Bluetooth communication connection 3. Further, the host device 100 may determine that the data 1 needs to be sent to the Bluetooth accessory device 400 through the Bluetooth communication connection 2, and that the data 1 needs to be sent to the Bluetooth accessory device 500 through the Bluetooth communication connection 3. Then, the host device 100 may send the data 1 to the Bluetooth accessory device 400 through the Bluetooth communication connection 2, and send the data 1 to the Bluetooth accessory device 500 through the Bluetooth communication connection 3.

It should be noted that a time sequence of performing step S913 and step S914 is not limited in embodiments of this application. For example, step S913 may be performed before step S914. For another example, step S913 may be performed after step S914. For another example, step S913 and step S914 may be performed simultaneously.

S915 and S916: The Bluetooth accessory device 300 sends a Bluetooth broadcast message 1 to the host device 200, and then the Bluetooth accessory device 300 establishes the Bluetooth communication connection 1 with the host device 200.

Specifically, after sending the data 1 to the host device 100, the Bluetooth accessory device 300 may parse the data 1 and determine, based on the data 1, that a Bluetooth communication connection needs to be established with the host device 200. Further, the Bluetooth accessory device 300 may send the Bluetooth broadcast message 1 to the host device 200. After receiving the Bluetooth broadcast message 1 sent by the Bluetooth accessory device 300, the host device 200 may establish the Bluetooth communication connection 1 with the Bluetooth accessory device 300, that is, the Bluetooth accessory device 300 successfully switches a Bluetooth channel to the host device 200. In this way, the Bluetooth accessory device 300 and the host device 200 may perform Bluetooth data communication through the established Bluetooth communication connection 1.

Step S915 and step S916 may be performed after step S911, or may be performed at time between step S911 and step S914. This is not limited in embodiments of this application.

S917 and S918: The Bluetooth accessory device 400 sends a Bluetooth broadcast message 2 to the host device 200, and then the Bluetooth accessory device 400 establishes a Bluetooth communication connection 2 with the host device 200.

Specifically, after receiving the data 1 sent by the host device 100, the Bluetooth accessory device 400 may parse the data 1 and determine, based on the data 1, that the Bluetooth communication connection needs to be established with the host device 200. Further, the Bluetooth accessory device 400 may send the Bluetooth broadcast message 2 to the host device 200. After receiving the Bluetooth broadcast message 2 sent by the Bluetooth accessory device 400, the host device 200 may establish the Bluetooth communication connection 2 with the Bluetooth accessory device 400, that is, the Bluetooth accessory device 400 successfully switches a Bluetooth channel to the host device 200. In this way, the Bluetooth accessory device 400 and the host device 200 may perform Bluetooth data communication through the established Bluetooth communication connection 2.

Step S917 and step S918 may be performed at time after step S913. This is not limited in embodiments of this application.

S919 and S920: The Bluetooth accessory device 500 sends a Bluetooth broadcast message 3 to the host device 200, and then the Bluetooth accessory device 500 establishes a Bluetooth communication connection 3 with the host device 200.

Specifically, after receiving the data 1 sent by the host device 100, the Bluetooth accessory device 500 may parse the data 1 and determine, based on the data 1, that the Bluetooth communication connection needs to be established with the host device 200. Further, the Bluetooth accessory device 500 may send the Bluetooth broadcast message 3 to the host device 200. After receiving the Bluetooth broadcast message 3 sent by the Bluetooth accessory device 500, the host device 200 may establish the Bluetooth communication connection 3 with the Bluetooth accessory device 400, that is, the Bluetooth accessory device 500 successfully switches a Bluetooth channel to the host device 200. In this way, the Bluetooth accessory device 500 and the host device 200 may perform Bluetooth data communication through the established Bluetooth communication connection 3.

Step S919 and step S920 may be performed at time after step S914. This is not limited in embodiments of this application.

In embodiments of this application, before step S910 is performed, the Bluetooth accessory device 300, the Bluetooth accessory device 400, and the Bluetooth accessory device 500 may all perform Bluetooth pairing with the host device 200 and do not maintain Bluetooth communication connections with the host device 200. In this case, the Bluetooth broadcast message 1, the Bluetooth broadcast message 2, and the Bluetooth broadcast message 3 may be respectively referred to as a Bluetooth direct advertising message 1, a Bluetooth direct advertising message 2, and a Bluetooth direct advertising message 3. Before the Bluetooth communication connections with the host device 200 are established, Bluetooth pairing does not need to be performed again. In some embodiments, the Bluetooth accessory device 300, the Bluetooth accessory device 400, and the Bluetooth accessory device 500 may all maintain Bluetooth communication connections with a plurality of host devices, for example, maintain Bluetooth communication connections with the host device 100 and the host device 200 at the same time. In this case, the Bluetooth accessory devices may switch Bluetooth communication connections from the host device 100 to the host device 200 without sending Bluetooth broadcast messages.

In some embodiments, before step S910 is performed, if neither the Bluetooth accessory device 400 nor the Bluetooth accessory device 500 has performed Bluetooth pairing with the host device 200, Bluetooth pairing needs to be performed before a Bluetooth communication connection is established, and the Bluetooth communication connection can be established only after pairing succeeds.

It may be easily understood that, after establishing the Bluetooth communication connections with the host device 200, the Bluetooth accessory device 300, the Bluetooth accessory device 400, and the Bluetooth accessory device 500 may also establish Bluetooth route service connections with the host device 200, and register device types with the host device 200. For a specific execution process similar to step S901 to step S909 in the phase 1 shown in FIG. 9A to FIG. 9D, refer to the related text descriptions of step S901 to step S909. Details are not described herein again. In some embodiments, after the Bluetooth accessory device 300, the Bluetooth accessory device 400, and the Bluetooth accessory device 500 establish the Bluetooth route service connections with the host device 200 and register the device types with the host device 200, the Bluetooth accessory device 400 and the Bluetooth accessory device 500 may further send, to the Bluetooth accessory device 300 through the host device 200, a message indicating that the switching event is processed. In this way, the Bluetooth accessory device 300 may learn results of processing the switching event by the Bluetooth accessory device 400 and the Bluetooth accessory device 500. For a specific execution process of sending, by the Bluetooth accessory device 400 and the Bluetooth accessory device 500 to the Bluetooth accessory device 300 through the host device 200, the message indicating that the switching event is processed, which is similar to the specific execution process of step S816 to step S821 shown in FIG. 8A to FIG. 8C, refer to the related text descriptions of step S816 to step S821. Details are not described herein again.

It may be understood that, when a Bluetooth accessory device has a Bluetooth multi-connection function, the Bluetooth accessory device may maintain Bluetooth communication connections with a plurality of host devices at the same time (but can perform Bluetooth data communication with only one of the host devices). In this case, after a switching event is triggered, the Bluetooth accessory device may only need to switch Bluetooth channels, and does not need to re-establish the Bluetooth communication connections. The Bluetooth accessory device may alternatively maintain a Bluetooth communication connection with only one host device (that is, when a Bluetooth communication connection is established with one host device, a Bluetooth communication connection established with another host device may be disconnected). In this case, after the switching event is triggered, the Bluetooth accessory device needs to re-establish a Bluetooth communication connection.

According to the method provided by the embodiment shown in FIG. 9A to FIG. 9D, Bluetooth communication connections of a plurality of Bluetooth accessory devices may be automatically switched from one host device to another host device by operating one Bluetooth accessory device (for example, by pressing one Bluetooth switching button of the Bluetooth accessory device). The solution is simple, and both a registration mechanism and a routing mechanism can be imperceptible to the user. Automatic collaboration between a plurality of devices can be implemented with one operation. This is convenient and quick, simplifies user operations, and improves user experience.

It should be noted that, the embodiment shown in FIG. 9A to FIG. 9D is merely described by using an example in which Bluetooth communication connections of two Bluetooth accessory devices, namely, the Bluetooth accessory device 300 and the Bluetooth accessory device 400, are automatically switched from one host device to another host device by operating the Bluetooth accessory device 300. The Bluetooth accessory device 300 may also enable Bluetooth communication connections of more Bluetooth accessory devices to be automatically switched from one host device to another host device. A quantity of Bluetooth accessory devices is not limited in embodiments of this application. In addition, the Bluetooth accessory device 400 or the Bluetooth accessory device 500 may also implement automatic switching of a Bluetooth communication connection of another Bluetooth accessory device from one host device to another host device in a similar manner. Details are not described herein again. In addition, after Bluetooth accessory devices establish Bluetooth communication connections with the host device 200, Bluetooth communication connections of a plurality of Bluetooth accessory devices may also be switched from the host device 200 to the host device 100 by operating one Bluetooth accessory device. A specific process is similar to the specific process of switching the Bluetooth communication connection from the host device 100 to the host device 200. Details are not described herein again.

Embodiment 2: One Bluetooth accessory device (for example, a keyboard) is used to control another Bluetooth accessory device (for example, a mouse) to perform DPI adjustment.

FIG. 11A and FIG. 11B show an example of a specific procedure of a communication method provided in an embodiment of this application in an application scenario in which one Bluetooth accessory device (for example, a keyboard) is used to control another Bluetooth accessory device (for example, a mouse) to perform DPI adjustment.

As shown in FIG. 11A and FIG. 11B, the method may be applied to a communication system including a host device 100, a Bluetooth accessory device 300 (for example, a keyboard), and a Bluetooth accessory device 400 (for example, a mouse). Specific steps of the method are described in detail below.

First, in this embodiment of this application, Bluetooth route service connections need to be established between the host device 100 and the Bluetooth accessory device 300 and between the host device 100 and the Bluetooth accessory device 400, and the Bluetooth accessory device 300 and the Bluetooth accessory device 400 need to register device types with the host device 100. Steps in the following phase 2 can continue to be performed only after the Bluetooth route service connections are established and the device types are registered, so that the Bluetooth accessory device 300 is used to control the Bluetooth accessory device 400 to adjust DPI.

For example, a possible implementation of establishing the Bluetooth route service connections and registering the device types may be an implementation described in the following phase 1 (step S1101 to step S1106), which is described in detail below.

### Phase 1: Establish the Bluetooth route service connections and register the device types

S1101 to S1103: The Bluetooth accessory device 300 establishes a Bluetooth route service connection 1 with the host device 100, and then the Bluetooth accessory device 300 may send a registration request 1 to the host device 100, where the request includes a device type of the Bluetooth accessory device 300; and the host device 100 stores a mapping relationship between a Bluetooth communication connection 1 and the device type of the Bluetooth accessory device 300, where the Bluetooth communication connection 1 is a Bluetooth communication connection established between the Bluetooth accessory device 300 and the host device 100.

S1104 to S1106: The Bluetooth accessory device 400 establishes a Bluetooth route service connection 2 with the host device 100, and then the Bluetooth accessory device 400 may send a registration request 2 to the host device 100, where the request includes a device type of the Bluetooth accessory device 400; and the host device 100 stores a mapping relationship between a Bluetooth communication connection 2 and the device type of the Bluetooth accessory device 400, where the Bluetooth communication connection 2 is a Bluetooth communication connection established between the Bluetooth accessory device 400 and the host device 100.

Step S1101 to step S1103 and step S1104 to step S1106 are similar to step S801 to step S803 (or step S804 to step S806) in the phase 1 shown in FIG. 8A to FIG. 8C. For a specific execution process, refer to related text descriptions of step S801 to step S803 (or step S804 to step S806) in the phase 1 shown in FIG. 8A to FIG. 8C. Details are not described herein again.

After the phase 1 (namely, a phase of establishing the Bluetooth route service connections and registering the device types) is completed, the Bluetooth accessory device 300 may be used to control the Bluetooth accessory device 400 through the established Bluetooth route service connections to adjust the DPI.

For example, a possible implementation of controlling, through the Bluetooth accessory device 300, the Bluetooth accessory device 400 to adjust the DPI may be an implementation described in the following phase 2 (step S1107 to step S1111), which is described in detail below.

### Phase 2: Control, through the Bluetooth accessory device 300, the Bluetooth accessory device 400 to adjust the DPI

S1107 and S1108: The Bluetooth accessory device 300 detects an event of triggering DPI adjustment by a user, and then the Bluetooth accessory device 300 may send data 2 to the host device 100, where the data may include information about the DPI adjustment event and the device type of the Bluetooth accessory device 400.

It is assumed that the Bluetooth accessory device 300 is a keyboard shown in FIG. 10 as an example, and the Bluetooth accessory device 400 is a mouse.

Refer to FIG. 10. It can be seen that, the Bluetooth accessory device 300 has a Dpi button (which may also be referred to as a DPI button), and the button may be used to support the user in controlling, through the Bluetooth accessory device 300, the Bluetooth accessory device 400 to adjust the DPI.

When the user wants to control, through the Bluetooth accessory device 300, the Bluetooth accessory device 400 to adjust the DPI, the Bluetooth accessory device 300 may detect the event of triggering the DPI adjustment by the user (for example, an event of pressing, by the user, the Dpi button shown in FIG. 10), and then the Bluetooth accessory device 300 may send the data 2 to the host device 100 through the Bluetooth route service connection 1 established with the host device 100, where the data may include the information about the DPI adjustment event and the device type of the Bluetooth accessory device 400.

The information about the DPI adjustment event may include a button value of the Dpi button.

In embodiments of this application, DPI may be adjusted in a polling manner, that is, the Bluetooth accessory device 300 is used to control the Bluetooth accessory device 400 to adjust the DPI. A value of the DPI that can be adjusted may be a preset value set. For example, it is assumed that the value set is { 100, 200, 300, 400, ..., 16,000}. A value of DPI corresponding to an event of pressing the Dpi button by the user for the first time is 100. A value of DPI corresponding to an event of pressing the Dpi button for the second time is 200, and the like. After a value of DPI corresponding to an event of pressing the Dpi button by the user is 16,000, if the user presses the Dpi button again, a value of DPI corresponding to the event of pressing the Dpi button by the user this time returns to 100. It may be easily understood that, each time the user presses the Dpi button of the Bluetooth accessory device 300, a value of the DPI of the Bluetooth accessory device 400 may be adjusted once. In other words, the value of the DPI of the Bluetooth accessory device 400 is adjusted to a value of DPI corresponding to each event of pressing the Dpi button, where the value of the DPI corresponding to each event of pressing the Dpi button by the user (namely, each value in the value set) may be preset by the Bluetooth accessory device 400 and stored in the Bluetooth accessory device 400.

In the foregoing embodiment, the event of pressing the Dpi button by the user is used as an example to trigger the DPI adjustment. In other words, a pressing event triggers the DPI adjustment, and a releasing event no longer triggers the DPI adjustment. In some embodiments, an event of releasing the Dpi button by the user may alternatively trigger the DPI adjustment. In other words, a pressing event does not trigger the DPI adjustment, and a releasing event triggers the DPI adjustment.

In the foregoing embodiment, a single Dpi button is used as an example to trigger the DPI adjustment. In some embodiments, the Dpi button may be a pair of buttons, where one button is used to increase the DPI, for example, each time the user presses the button, the value of the DPI of the Bluetooth accessory device 400 may be increased once; and the other button is used to decrease the DPI, for example, each time the user presses the button, the value of the DPI of the Bluetooth accessory device 400 may be decreased once.

In some embodiments, to reduce a quantity of buttons on the Bluetooth accessory device 300, a button combination may be defined to control, through the Bluetooth accessory device 300, the Bluetooth accessory device 400 to adjust the DPI. In this case, the information about the DPI adjustment event may include a button value of a button combination pressed by the user.

For example, a button combination Fn+Home may be defined to increase the DPI, and a button combination Fn+End may be defined to decrease the DPI. It may be easily understood that, each time the user presses the button combination Fn+Home of the Bluetooth accessory device 300, the value of the DPI of the Bluetooth accessory device 400 may be increased once; and each time the user presses the button combination Fn+End of the Bluetooth accessory device 300, the value of the DPI of the Bluetooth accessory device 400 may be decreased once. An increased/decreased value of the DPI each time may be preset.

S1109 and S1110: The host device 100 determines, based on the data 2, that the destination device type is the device type of the Bluetooth accessory device 400, and determines, based on stored mapping relationships between device types and Bluetooth communication connections, that a Bluetooth communication connection corresponding to the device type of the Bluetooth accessory device 400 is the Bluetooth communication connection 2; and then the host device 100 may send the data 2 to the Bluetooth accessory device 400.

Specifically, after receiving the data 2 sent by the Bluetooth accessory device 300, the host device 100 may parse the data 2 and determine that the destination device type is the device type of the Bluetooth accessory device 400. Further, in the phase 1, the host device 100 records and stores the mapping relationship between the device type of the Bluetooth accessory device 400 and the Bluetooth communication connection 2. Therefore, the host device 100 may determine, based on the stored mapping relationships between the device types and the Bluetooth communication connections, that the Bluetooth communication connection corresponding to the device type of the Bluetooth accessory device 400 is the Bluetooth communication connection 2. Further, the host device 100 may determine that the data 2 needs to be sent to the Bluetooth accessory device 400 through the Bluetooth communication connection 2. Then, the host device 100 may send the data 2 to the Bluetooth accessory device 400 through the Bluetooth communication connection 2.

S1111: The Bluetooth accessory device 400 performs an action corresponding to the DPI adjustment event.

Specifically, after receiving the data 2 sent by the host device 100, the Bluetooth accessory device 400 may parse the data 2, and perform the action corresponding to the DPI adjustment event based on the information about the DPI adjustment event included in the data 2, that is, perform corresponding setting on the DPI.

For example, when the user presses the Dpi button of the Bluetooth accessory device 300, the information about the DPI adjustment event indicates to adjust the DPI of the Bluetooth accessory device 400 to a specified value. In this case, the Bluetooth accessory device 400 may perform an action of adjusting a value of the current DPI to the specified value, to complete adjustment setting of the DPI.

For another example, when the user presses a button combination (for example, the button combination Fn+Home) that is for increasing the DPI and that is of the Bluetooth accessory device 300, the information about the DPI adjustment event indicates to increase the DPI of the Bluetooth accessory device 400. In this case, the Bluetooth accessory device 400 may perform an action of increasing the DPI, to complete increasing setting of the DPI.

For another example, when the user presses a button combination (for example, the button combination Fn+End) that is for decreasing the DPI and that is of the Bluetooth accessory device 300, the information about the DPI adjustment event indicates to decrease the DPI of the Bluetooth accessory device 400. In this case, the Bluetooth accessory device 400 may perform an action of decreasing the DPI, to complete decreasing setting of the DPI.

In some embodiments, after completing the action corresponding to the DPI adjustment event, the Bluetooth accessory device 400 may further send, to the Bluetooth accessory device 300 through the host device 100, a message indicating that the DPI adjustment event is processed. In this way, the Bluetooth accessory device 300 may learn a result of processing the DPI adjustment event by the Bluetooth accessory device 400. For a specific execution process of sending, by the Bluetooth accessory device 400 to the Bluetooth accessory device 300 through the host device 100, the message indicating that the DPI adjustment event is processed, which is similar to the specific execution process of step S816 to step S821 shown in FIG. 8A to FIG. 8C, refer to the related text descriptions of step S816 to step S821. Details are not described herein again.

According to the method provided in an embodiment shown in FIG. 11A and FIG. 11B, one Bluetooth accessory device (for example, a keyboard) may be directly used to control another Bluetooth accessory device (for example, a mouse) to perform DPI adjustment, and the user does not need to install a related application on a host device to perform DPI adjustment on the Bluetooth accessory device, and does not need to add a button on the Bluetooth accessory device to perform DPI adjustment. This can reduce costs and can also make a simpler appearance design.

Embodiment 3: One Bluetooth accessory device (for example, a keyboard) is used to control another Bluetooth accessory device (for example, a mouse) to perform light effect adjustment.

FIG. 12A and FIG. 12B show an example of a specific procedure of a communication method provided in an embodiment of this application in an application scenario in which one Bluetooth accessory device (for example, a keyboard) is used to control another Bluetooth accessory device (for example, a mouse) to perform light effect adjustment.

As shown in FIG. 12A and FIG. 12B, the method may be applied to a communication system including a host device 100, a Bluetooth accessory device 300 (for example, a keyboard), and a Bluetooth accessory device 400 (for example, a mouse). Specific steps of the method are described in detail below.

First, in this embodiment of this application, Bluetooth route service connections need to be established between the host device 100 and the Bluetooth accessory device 300 and between the host device 100 and the Bluetooth accessory device 400, and the Bluetooth accessory device 300 and the Bluetooth accessory device 400 need to register device types with the host device 100. Steps in the following phase 2 can continue to be performed only after the Bluetooth route service connections are established and the device types are registered, so that the Bluetooth accessory device 300 is used to control the Bluetooth accessory device 400 to adjust a light effect.

For example, a possible implementation of establishing the Bluetooth route service connections and registering the device types may be an implementation described in the following phase 1 (step S1201 to step S1206), which is described in detail below.

### Phase 1: Establish the Bluetooth route service connections and register the device types

S1201 to S1203: The Bluetooth accessory device 300 establishes a Bluetooth route service connection 1 with the host device 100, and then the Bluetooth accessory device 300 may send a registration request 1 to the host device 100, where the request includes a device type of the Bluetooth accessory device 300; and the host device 100 stores a mapping relationship between a Bluetooth communication connection 1 and the device type of the Bluetooth accessory device 300, where the Bluetooth communication connection 1 is a Bluetooth communication connection established between the Bluetooth accessory device 300 and the host device 100.

S1204 to S1206: The Bluetooth accessory device 400 establishes a Bluetooth route service connection 2 with the host device 100, and then the Bluetooth accessory device 400 may send a registration request 2 to the host device 100, where the request includes a device type of the Bluetooth accessory device 400; and the host device 100 stores a mapping relationship between a Bluetooth communication connection 2 and the device type of the Bluetooth accessory device 400, where the Bluetooth communication connection 2 is a Bluetooth communication connection established between the Bluetooth accessory device 400 and the host device 100.

Step S1201 to step S1203 and step S1204 to step S1206 are similar to step S801 to step S803 (or step S804 to step S806) in the phase 1 shown in FIG. 8A to FIG. 8C. For a specific execution process, refer to related text descriptions of step S801 to step S803 (or step S804 to step S806) in the phase 1 shown in FIG. 8A to FIG. 8C. Details are not described herein again.

After the phase 1 (namely, a phase of establishing the Bluetooth route service connections and registering the device types) is completed, the Bluetooth accessory device 300 may be used to control the Bluetooth accessory device 400 through the established Bluetooth route service connections to adjust the light effect.

For example, a possible implementation of controlling, through the Bluetooth accessory device 300, the Bluetooth accessory device 400 to adjust the light effect may be an implementation described in the following phase 2 (step S1207 to step S1211), which is described in detail below.

### Phase 2: Control, through the Bluetooth accessory device 300, the Bluetooth accessory device 400 to adjust the light effect

S 1207 and S1208: The Bluetooth accessory device 300 detects an event of triggering light effect adjustment by a user, and then the Bluetooth accessory device 300 may send data 3 to the host device 100, where the data may include information about the light effect adjustment event and the device type of the Bluetooth accessory device 400.

It is assumed that the Bluetooth accessory device 300 is a keyboard shown in FIG. 10 as an example, and the Bluetooth accessory device 400 is a mouse.

Refer to FIG. 10. It can be seen that, the Bluetooth accessory device 300 has a light up button and a light down button. The two buttons may support the user in controlling, through the Bluetooth accessory device 300, the Bluetooth accessory device 400 to adjust the light effect. The light up button may support the user in controlling, through the Bluetooth accessory device 300, the Bluetooth accessory device 400 to increase brightness of the light effect, and the light down button may support the user in controlling, through the Bluetooth accessory device 300, the Bluetooth accessory device 400 to decrease the brightness of the light effect.

When the user wants to control, through the Bluetooth accessory device 300, the Bluetooth accessory device 400 to adjust the light effect, the Bluetooth accessory device 300 may detect the event of triggering the light effect adjustment by the user (for example, an event of pressing, by the user, the light up button shown in FIG. 10, or an event of pressing, by the user, the light down button shown in FIG. 10), and then the Bluetooth accessory device 300 may send the data 3 to the host device 100 through the Bluetooth route service connection 1 established with the host device 100, where the data may include the information about the light effect adjustment event and the device type of the Bluetooth accessory device 400.

When the event of triggering the light effect adjustment by the user is the event of pressing, by the user, the light up button shown in FIG. 10, the information about the light effect adjustment event may include a button value of the light up button. When the event of triggering the light effect adjustment by the user is the event of pressing, by the user, the light down button shown in FIG. 10, the information about the light effect adjustment event may include a button value of the light down button.

In some embodiments, to reduce a quantity of buttons on the Bluetooth accessory device 300, a button combination may be defined to control, through the Bluetooth accessory device 300, the Bluetooth accessory device 400 to adjust the light effect. In this case, the information about the light effect adjustment event may include a button value of a button combination pressed by the user.

For example, a button combination Fn+Page Up may be defined to increase the brightness of the light effect, and a button combination Fn+Page Down may be defined to reduce the brightness of the light effect.

It may be easily understood that, each time the user presses the button combination Fn+Page Up or the light up button of the Bluetooth accessory device 300, a value of the brightness of the light effect of the Bluetooth accessory device 400 may be increased once; and each time the user presses the button combination Fn+Page Down or the light down button of the Bluetooth accessory device 300, the value of the brightness of the light effect of the Bluetooth accessory device 400 may be decreased once. An increased/decreased value of the brightness of the light effect each time may be preset.

S1209 and S1210: The host device 100 determines, based on the data 3, that a destination device type is the device type of the Bluetooth accessory device 400, and determines, based on stored mapping relationships between device types and Bluetooth communication connections, that a Bluetooth communication connection corresponding to the device type of the Bluetooth accessory device 400 is the Bluetooth communication connection 2; and then the host device 100 may send the data 3 to the Bluetooth accessory device 400.

Specifically, after receiving the data 3 sent by the Bluetooth accessory device 300, the host device 100 may parse the data 3 and determine that the destination device type is the device type of the Bluetooth accessory device 400. Further, in the phase 1, the host device 100 records and stores the mapping relationship between the device type of the Bluetooth accessory device 400 and the Bluetooth communication connection 2. Therefore, the host device 100 may determine, based on the stored mapping relationships between the device types and the Bluetooth communication connections, that the Bluetooth communication connection corresponding to the device type of the Bluetooth accessory device 400 is the Bluetooth communication connection 2. Further, the host device 100 may determine that the data 3 needs to be sent to the Bluetooth accessory device 400 through the Bluetooth communication connection 2. Then, the host device 100 may send the data 3 to the Bluetooth accessory device 400 through the Bluetooth communication connection 2.

S1211: The Bluetooth accessory device 400 performs an action corresponding to the light effect adjustment event.

Specifically, after receiving the data 3 sent by the host device 100, the Bluetooth accessory device 400 may parse the data 3, and perform the action corresponding to the light effect adjustment event based on the information about the light effect adjustment event included in the data 3, that is, perform corresponding setting on the light effect.

For example, when the user presses the light up button or the button combination Fn+Page Up of the Bluetooth accessory device 300, the information about the light effect adjustment event indicates to increase the brightness of the light effect of the Bluetooth accessory device 400. In this case, the Bluetooth accessory device 400 may perform an action of increasing the brightness of the light effect, to complete increasing setting of the brightness of the light effect.

For another example, when the user presses the light down button or the button combination Fn+Page Down of the Bluetooth accessory device 300, the information about the light effect adjustment event indicates to decrease the brightness of the light effect of the Bluetooth accessory device 400. In this case, the Bluetooth accessory device 400 may perform an action of decreasing the brightness of the light effect, to complete decreasing setting of the brightness of the light effect.

In some embodiments, the Bluetooth accessory device 300 may alternatively be provided with a button for switching a light effect mode (for example, a steady-on mode, a breathing mode, a colorful mode, a wave mode, a colorful loop mode, a trigger mode, and the like shown in FIG. 4B), for example, a single button or a button combination. In this way, the Bluetooth accessory device 300 may also adjust the light effect mode of the Bluetooth accessory device 400 in a manner similar to the manner of adjusting the brightness of the light effect. In other words, the Bluetooth accessory device 300 may send, to the Bluetooth accessory device 400 through the host device 100, a button value of the single button or the button combination for switching the light effect mode, and the Bluetooth accessory device 400 may switch the light effect mode of the Bluetooth accessory device 400 based on the button value of the single button or the button combination for switching the light effect mode.

In some embodiments, after completing the action corresponding to the light effect adjustment event, the Bluetooth accessory device 400 may further send, to the Bluetooth accessory device 300 through the host device 100, a message indicating that the light effect adjustment event is processed. In this way, the Bluetooth accessory device 300 may learn a result of processing the light effect adjustment event by the Bluetooth accessory device 400. For a specific execution process of sending, by the Bluetooth accessory device 400 to the Bluetooth accessory device 300 through the host device 100, the message indicating that the light effect adjustment event is processed, which is similar to the specific execution process of step S816 to step S821 shown in FIG. 8A to FIG. 8C, refer to the related text descriptions of step S816 to step S821. Details are not described herein again.

According to the method provided in an embodiment shown in FIG. 12A and FIG. 12B, one Bluetooth accessory device (for example, a keyboard) may be directly used to control another Bluetooth accessory device (for example, a mouse) to perform light effect adjustment, and the user does not need to install a related application on a host device to perform light effect adjustment on the Bluetooth accessory device, and does not need to add a button on the Bluetooth accessory device to perform light effect adjustment. This can reduce costs and can also make a simpler appearance design.

Embodiment 4: one Bluetooth accessory device (for example, a keyboard) and another Bluetooth accessory device (for example, a mouse) implement a button combination function in collaboration.

FIG. 13A to FIG. 13C show an example of a specific procedure of a communication method according to an embodiment of this application in an application scenario in which one Bluetooth accessory device (for example, a keyboard) and another Bluetooth accessory device (for example, a mouse) implement a button combination function in collaboration.

As shown in FIG. 13A to FIG. 13C, the method may be applied to a communication system including a host device 100, a Bluetooth accessory device 300 (for example, a keyboard), and a Bluetooth accessory device 400 (for example, a mouse). Specific steps of the method are described in detail below.

First, in this embodiment of this application, Bluetooth route service connections need to be established between the host device 100 and the Bluetooth accessory device 300 and between the host device 100 and the Bluetooth accessory device 400, and the Bluetooth accessory device 300 and the Bluetooth accessory device 400 need to register device types with the host device 100. Steps in the following phase 2 can continue to be performed only after the Bluetooth route service connections are established and the device types are registered, so as to implement the button combination function in collaboration through the Bluetooth accessory device 300 and the Bluetooth accessory device 400.

For example, a possible implementation of establishing the Bluetooth route service connections and registering the device types may be an implementation described in the following phase 1 (step S1301 to step S1306), which is described in detail below.

### Phase 1: Establish the Bluetooth route service connections and register the device types

S1301 to S1303: The Bluetooth accessory device 300 establishes a Bluetooth route service connection 1 with the host device 100, and then the Bluetooth accessory device 300 may send a registration request 1 to the host device 100, where the request includes a device type of the Bluetooth accessory device 300; and the host device 100 stores a mapping relationship between a Bluetooth communication connection 1 and the device type of the Bluetooth accessory device 300, where the Bluetooth communication connection 1 is a Bluetooth communication connection established between the Bluetooth accessory device 300 and the host device 100.

S1304 to S1306: The Bluetooth accessory device 400 establishes a Bluetooth route service connection 2 with the host device 100, and then the Bluetooth accessory device 400 may send a registration request 2 to the host device 100, where the request includes a device type of the Bluetooth accessory device 400; and the host device 100 stores a mapping relationship between a Bluetooth communication connection 2 and the device type of the Bluetooth accessory device 400, where the Bluetooth communication connection 2 is a Bluetooth communication connection established between the Bluetooth accessory device 400 and the host device 100.

Step S1301 to step S1303 and step S1304 to step S1306 are similar to step S801 to step S803 (or step S804 to step S806) in the phase 1 shown in FIG. 8A to FIG. 8C. For a specific execution process, refer to related text descriptions of step S801 to step S803 (or step S804 to step S806) in the phase 1 shown in FIG. 8A to FIG. 8C. Details are not described herein again.

After the phase 1 (namely, a phase of establishing the Bluetooth route service connections and registering the device types) is completed, the Bluetooth accessory device 300 and the Bluetooth accessory device 400 may implement the button combination function in collaboration through the established Bluetooth route service connections.

For example, a possible implementation of implementing the button combination function in collaboration through the Bluetooth accessory device 300 and the Bluetooth accessory device 400 may be an implementation described in the following phase 2 (step S1307 to step S1320), which is described in detail below.

Phase 2: The Bluetooth accessory device 300 and the Bluetooth accessory device 400 implement the button combination function in collaboration.

S1307 and S1308: The Bluetooth accessory device 400 detects an event of pressing a button 1 by a user, and then the Bluetooth accessory device 300 may send data 4 to the host device 100, where the data may include information about the event of pressing the button 1 and the device type of the Bluetooth accessory device 300.

Specifically, it is assumed that the Bluetooth accessory device 400 is a mouse, and the Bluetooth accessory device 300 is a keyboard. The Bluetooth accessory device 400 may detect the event of pressing the button 1 by the user, where the button 1 may be a button of the Bluetooth accessory device 400, for example, a side button of the Bluetooth accessory device 400. Then, the Bluetooth accessory device 400 may send the data 4 to the host device 100, where the data may include the information about the event of pressing the button 1 and the device type of the Bluetooth accessory device 300.

The information about the event of pressing the button 1 may include a button value of the button 1 and press status indication information.

S1309 and S1310: The host device 100 determines, based on the data 4, that a destination device type is the device type of the Bluetooth accessory device 300, and determines, based on stored mapping relationships between device types and Bluetooth communication connections, that a Bluetooth communication connection corresponding to the device type of the Bluetooth accessory device 300 is the Bluetooth communication connection 1; and then the host device 100 may send the data 4 to the Bluetooth accessory device 300.

Specifically, after receiving the data 4 sent by the Bluetooth accessory device 400, the host device 100 may parse the data 4 and determine that the destination device type is the device type of the Bluetooth accessory device 300. Further, in the phase 1, the host device 100 records and stores the mapping relationship between the device type of the Bluetooth accessory device 300 and the Bluetooth communication connection 1. Therefore, the host device 100 may determine, based on the stored mapping relationships between the device types and the Bluetooth communication connections, that the Bluetooth communication connection corresponding to the device type of the Bluetooth accessory device 300 is the Bluetooth communication connection 1. Further, the host device 100 may determine that the data 4 needs to be sent to the Bluetooth accessory device 300 through the Bluetooth communication connection 1. Then, the host device 100 may send the data 4 to the Bluetooth accessory device 300 through the Bluetooth communication connection 1.

S1311: The Bluetooth accessory device 300 stores a pressed state of the button 1.

Specifically, after receiving the data 4 sent by the host device 100, the Bluetooth accessory device 300 may parse the data 4, and determine that the button 1 is in the pressed state based on the information that is about the event of pressing the button 1 and that is included in the data 4. Further, the Bluetooth accessory device 300 may store the pressed state of the button 1 (which may also be referred to as storing the event of pressing the button 1).

S1312 to S1315: The Bluetooth accessory device 300 detects an event of pressing a button 2 by the user, next, the Bluetooth accessory device 300 may convert the pressed state of the button 1 and the event of pressing the button 2 into an event of pressing a button combination 1, and then the Bluetooth accessory device 300 may send a button value of the button combination 1 to the host device 100; and the host device 100 responds to a function corresponding to the button value of the button combination 1.

Specifically, after step S1311 is performed, the Bluetooth accessory device 300 may detect the event of pressing the button 2 by the user, where the button 2 may be a button of the Bluetooth accessory device 300. Then, the Bluetooth accessory device 300 may convert the pressed state of the button 1 (which may also be referred to as the event of pressing the button 1) and the event of pressing the button 2 into the event of pressing the button combination 1. The button combination 1 may be a button combination of the Bluetooth accessory device 300, for example, a button combination Fn+Fx. For example, it is assumed that the button combination 1 is Fn+F1, the event of pressing the button 1 may be converted into an event of pressing a button Fn, and the event of pressing the button 2 is an event of pressing a button F1.

Further, the Bluetooth accessory device 300 may send the button value of the button combination 1 to the host device 100. After receiving the button value of the button combination 1 sent by the Bluetooth accessory device 300, the host device 100 may respond to the function corresponding to the button value of the button combination 1. For example, the host device 100 responds to the button value of the button combination Fn+Fx to adjust background light of a display.

In this way, the Bluetooth accessory device 300 and the Bluetooth accessory device 400 may implement the button combination function in collaboration. When it is difficult for the user to perform a one-hand operation, the user does not need to frequently switch between the Bluetooth accessory device 300 and the Bluetooth accessory device 400, so as to reduce user fatigue. In addition, in the conventional technology, a function of the button 1 is defined on the Bluetooth accessory device 400. After detecting that the user presses the button 1, the Bluetooth accessory device 400 may send the button value of the button 1 to the host device 100. The host device 100 may respond to a function corresponding to the button value of the button 1. In this way, one button of the Bluetooth accessory device 400 can implement only one function. It can be seen that, through implementation of this solution, after the user presses the button 1, one or more button combinations may be formed by pressing a button of the Bluetooth accessory device 300, so as to implement a plurality of functions.

In some embodiments, the Bluetooth accessory device 300 may change a function of a single button on the Bluetooth accessory device 300 after storing the pressed state of the button 1. For example, after the button 1 is pressed, Q, W, E, R, and T may be respectively converted into Y, U, I, O, and P, A, S, D, F, and G may be respectively converted into H, J, K, L, and ;, Z, X, C, V, and B may be respectively converted into N, M, ,, ., and /, Caps may be converted into Enter, and the like. It may be easily understood that, in this case, it is assumed that the button 2 is a button Q. The button combination 1 is a button Y.

In this way, fewer buttons may also cover functions of all buttons, and one-button-based multi-function is implemented. A quantity of buttons of the Bluetooth accessory device 300 is reduced, and a size of the Bluetooth accessory device 300 is reduced without changing a button size or cutting button functions of the Bluetooth accessory device 300. In this way, user requirements can still be met.

S1316 and S1317: The Bluetooth accessory device 400 detects an event of releasing the button 1 by the user, and then the Bluetooth accessory device 400 may send data 5 to the host device 100, where the data may include information about the event of releasing the button 1 and the device type of the Bluetooth accessory device 300.

Specifically, after detecting the event of pressing the button 1 by the user, the Bluetooth accessory device 400 may further detect the event of releasing the button 1 by the user, and then the Bluetooth accessory device 400 may send the data 5 to the host device 100, where the data may include the information about the event of releasing the button 1 and the device type of the Bluetooth accessory device 300.

The information about the event of releasing the button 1 may include the button value of the button 1 and releasing status indication information.

S1318 and S1319: The host device 100 determines, based on the data 5, that the destination device type is the device type of the Bluetooth accessory device 300, and determines, based on the stored mapping relationships between the device types and the Bluetooth communication connections, that the Bluetooth communication connection corresponding to the device type of the Bluetooth accessory device 300 is the Bluetooth communication connection 1; and then the host device 100 may send the data 5 to the Bluetooth accessory device 300.

Specifically, after receiving the data 5 sent by the Bluetooth accessory device 400, the host device 100 may parse the data 5 and determine that the destination device type is the device type of the Bluetooth accessory device 300. Further, in the phase 1, the host device 100 records and stores the mapping relationship between the device type of the Bluetooth accessory device 300 and the Bluetooth communication connection 1. Therefore, the host device 100 may determine, based on the stored mapping relationships between the device types and the Bluetooth communication connections, that the Bluetooth communication connection corresponding to the device type of the Bluetooth accessory device 300 is the Bluetooth communication connection 1. Further, the host device 100 may determine that the data 5 needs to be sent to the Bluetooth accessory device 300 through the Bluetooth communication connection 1. Then, the host device 100 may send the data 5 to the Bluetooth accessory device 300 through the Bluetooth communication connection 1.

S1320: The Bluetooth accessory device 300 clears the pressed state of the button 1.

Specifically, after receiving the data 5 sent by the host device 100, the Bluetooth accessory device 300 may parse the data 5, and determine that the button 1 is in a released state based on the information that is about the event of releasing the button 1 and that is included in the data 5. Further, the Bluetooth accessory device 300 may clear the pressed state of the button 1.

It may be understood that, after the Bluetooth accessory device 300 clears the pressed state of the button 1, the Bluetooth accessory device 300 cannot collaborate with the Bluetooth accessory device 400 to implement the button combination function. For example, if the user wants to implement the function corresponding to Fn+Fx, the user needs to press the button Fn and the button Fx of the Bluetooth accessory device 300.

It may be understood that, after the Bluetooth accessory device 300 clears the pressed state of the button 1, the Bluetooth accessory device 300 may reset a function that is of a single button and that is changed when the button 1 is in the pressed state, for example, reset functions of Q, W, E, R, and T converted into Y, U, I, O, and P, reset functions of A, S, D, F, and G converted into H, J, K, L, and ;, reset functions of Z, X, C, V, and B converted into N, M, ,, ., and /, and reset a function of Caps converted into Enter. In other words, the host device 100 responds to a function corresponding to a button value of a button that is of the Bluetooth accessory device 300 and that is pressed by the user.

In the foregoing embodiment, in step S1320, an implementation of clearing the pressed state of the button 1 by the Bluetooth accessory device 300 is to delete the recorded pressed state of the button 1. In some embodiments, the clearing the pressed state of the button 1 by the Bluetooth accessory device 300 may alternatively have another possible implementation. For example, the Bluetooth accessory device 300 may make different marks in the pressed or released state of the button 1. For example, the pressed state is marked with a number 1, and the released state is marked with a number 0. In this case, the Bluetooth accessory device 300 sets the originally marked number 1 to the number 0, to indicate that the button 1 is in the released state, that is, the user releases the button 1.

According to the method provided by an embodiment shown in FIG. 13A to FIG. 13C, button state information of the Bluetooth accessory device 400 (for example, a mouse) may be synchronized to the Bluetooth accessory device 300 (for example, a keyboard). On the one hand, a button on the Bluetooth accessory device 400 and a button on the Bluetooth accessory device 300 may form a button combination (for example, a side button on the Bluetooth accessory device 400 and a button Fx on the Bluetooth accessory device 300 may form a button combination having a same function as that of Fn+Fx on the Bluetooth accessory device 400), and the user does not need to frequently switch between the mouse and the keyboard, so as to reduce fatigue of the user. On the other hand, a button on the Bluetooth accessory device 300 may implement different functions based on different button states of the Bluetooth accessory device 400. For example, when a button on the Bluetooth accessory device 400 is pressed, a function of a button on the Bluetooth accessory device 300 may be changed (for example, Q, W, E, R, and T on the Bluetooth accessory device 300 is respectively converted into Y, U, I, O, and P). One-button-based multi-function is implemented. A quantity of buttons of the Bluetooth accessory device 300 is reduced, and a size of the Bluetooth accessory device 300 is reduced. In this way, user requirements can still be met.

In the foregoing embodiments, one Bluetooth accessory device communicates with another Bluetooth accessory device through a host device. In other words, Bluetooth accessory devices are used as secondary devices, and the two secondary devices communicate with each other through one host device. In some embodiments, a host device may alternatively be used as a secondary device to establish a Bluetooth route service connection with another host device (namely, an intermediate host device) and register a device type with the another host device, so that communication may be performed through the intermediate host device when a Bluetooth communication connection is not directly established between the host device and the another host device and between the host device and a Bluetooth accessory device. This is convenient and improves user experience.

For example, refer to FIG. 14. FIG. 14 is a diagram of performing communication through an intermediate host device (for example, a mobile phone) when a Bluetooth accessory device (for example, a Bluetooth band) does not directly establish a Bluetooth communication connection with a host device (for example, a tablet). The Bluetooth band, the tablet, and the mobile phone are used as an example. The Bluetooth band and the tablet may be used as secondary devices, and the mobile phone may be used as an intermediate host device. The Bluetooth band and the tablet separately establish Bluetooth route service connections to the mobile phone, and register device types with the mobile phone. Based on a Bluetooth routing function of the mobile phone, the tablet may communicate with the band, for example, obtain related information of the band, or perform related settings on the band.

For example, refer to FIG. 15. FIG. 15 is a diagram of performing communication through an intermediate host device (for example, a personal computer) when a host device (for example, a mobile phone) does not directly establish a Bluetooth communication connection with another host device (for example, a tablet). The mobile phone, the tablet, and the personal computer are used as an example. The mobile phone and the tablet may be used as secondary devices, and the personal computer may be used as an intermediate host device. The mobile phone and the tablet separately establish Bluetooth route service connections to the personal computer, and register device types with the personal computer. Based on a Bluetooth routing function of the personal computer, the mobile phone may communicate with the tablet.

In embodiments shown in FIG. 8A to FIG. 8C, FIG. 9A to FIG. 9D, FIG. 11A and FIG. 11B, FIG. 12A and FIG. 12B, and FIG. 13A to FIG. 13C, that a communication connection established between a host device and a Bluetooth accessory device is a Bluetooth communication connection is used as an example, and is not limited thereto. The communication connection may alternatively be a wired connection, or another wireless connection (for example, a Wi-Fi connection), or a combination of a wired connection and a wireless connection. This is not limited in embodiments of this application.

Embodiment 5: A host device sends, to another host device through a Bluetooth accessory device, device information of another Bluetooth accessory device, so that the another host device automatically establishes a Bluetooth communication connection with the another Bluetooth accessory device.

FIG. 16A and FIG. 16B show an example of a specific procedure of a communication method provided in an embodiment of this application in an application scenario in which a plurality of Bluetooth accessory devices separately establish Bluetooth communication connections with a plurality of host devices.

As shown in FIG. 16A and FIG. 16B, the method may be applied to a communication system including a host device 100, a host device 200, a Bluetooth accessory device 300 (for example, a keyboard), and a Bluetooth accessory device 400 (for example, a mouse). Specific steps of the method are described in detail below.

S1601 and S1602: The Bluetooth accessory device 400 establishes a Bluetooth communication connection 1 with the host device 100 through a Bluetooth channel 1 of the Bluetooth accessory device 400, and the Bluetooth accessory device 400 establishes a Bluetooth communication connection 1' with the host device 200 through a Bluetooth channel 2 of the Bluetooth accessory device 400.

The Bluetooth accessory device 400 may be a device having a Bluetooth multi-connection function. In this way, the Bluetooth accessory device 400 may sequentially establish Bluetooth communication connections with a plurality of host devices through a plurality of Bluetooth channels.

For example, the Bluetooth accessory device 400 may establish the Bluetooth communication connection 1 with the host device 100 through the Bluetooth channel 1 of the Bluetooth accessory device 400.

For another example, the Bluetooth accessory device 400 may establish the Bluetooth communication connection 1' with the host device 200 through the Bluetooth channel 2 of the Bluetooth accessory device 400.

It should be noted that a time sequence of performing step S1601 and step S1602 is not limited in embodiments of this application. For example, step S1601 may alternatively be performed after step S1602.

S1603: The Bluetooth accessory device 300 establishes a Bluetooth communication connection 2 with the host device 100 through a Bluetooth channel 1 of the Bluetooth accessory device 300.

The Bluetooth accessory device 300 may be a device having a Bluetooth multi-connection function. In this way, the Bluetooth accessory device 300 may sequentially establish Bluetooth communication connections with a plurality of host devices through a plurality of Bluetooth channels.

Specifically, after the Bluetooth accessory device 400 establishes the Bluetooth communication connections with the plurality of host devices (for example, the host device 100 and the host device 200) (for example, after step S1601 and step S1602 are performed), the Bluetooth accessory device 300 may first establish a Bluetooth communication connection with one of the plurality of host devices.

For example, the Bluetooth accessory device 300 establishes the Bluetooth communication connection with the host device 100. After a user triggers the Bluetooth accessory device 300 to send a Bluetooth broadcast message through the Bluetooth channel 1, the host device 100 may discover the Bluetooth accessory device 300 based on the Bluetooth broadcast message. Further, the host device 100 may perform Bluetooth pairing with the Bluetooth accessory device and establish the Bluetooth communication connection 2. In this way, the Bluetooth accessory device 300 may establish the Bluetooth communication connection 2 with the host device 100 through the Bluetooth channel 1 of the Bluetooth accessory device 300.

After the Bluetooth accessory device 300 establishes the Bluetooth communication connection 2 with the host device 100 through the Bluetooth channel 1 of the Bluetooth accessory device 300, the host device 100 may send, through the Bluetooth accessory device 400, device information of the Bluetooth accessory device 300 (for example, a Bluetooth MAC address of the Bluetooth accessory device 300) to another host device (for example, the host device 200) that establishes a Bluetooth communication connection with the Bluetooth accessory device 400, so that the another host device that establishes the Bluetooth communication connection with the Bluetooth accessory device 400 obtains the device information of the Bluetooth accessory device 300, and may further automatically perform Bluetooth pairing with the Bluetooth accessory device 300 based on the device information of the Bluetooth accessory device 300 and establish a Bluetooth communication connection. In this way, Bluetooth communication connections between the Bluetooth accessory device and a plurality of host devices can be established without a need of the user to perform a plurality of connection operations. This improves user experience.

A possible implementation of the foregoing solution may be an implementation described in step S1604 to step S1611. Details are described below.

S1604: The host device 100 sends a message 1 to the Bluetooth accessory device 300, where the message indicates the Bluetooth accessory device 300 to open a channel other than the Bluetooth channel 1 to send the Bluetooth broadcast message.

Specifically, after the Bluetooth accessory device 300 establishes the Bluetooth communication connection 2 with the host device 100, the host device 100 may send the message 1 to the Bluetooth accessory device 300, where the message may indicate the Bluetooth accessory device 300 to open the channel (for example, the Bluetooth channel 2) other than the Bluetooth channel 1 to send the Bluetooth broadcast message.

In this way, the Bluetooth accessory device 300 may send the Bluetooth broadcast message through the channel other than the Bluetooth channel 1, so that another device discovers the Bluetooth accessory device 300. After the another device discovers the Bluetooth accessory device 300, the Bluetooth accessory device 300 may perform Bluetooth pairing with the another device through the channel other than the Bluetooth channel 1 and establish a Bluetooth communication connection.

S1605: The host device 100 obtains the Bluetooth MAC address of the Bluetooth accessory device 300.

Step S1605 may be performed simultaneously with step S1604, or may be performed before or after step S1604. This is not limited in embodiments of this application.

It may be easily understood that each Bluetooth channel of the Bluetooth accessory device 300 may correspond to one Bluetooth MAC address, and the Bluetooth MAC address of the Bluetooth accessory device 300 may include a Bluetooth MAC address corresponding to the channel other than the Bluetooth channel 1 of the Bluetooth accessory device 300.

S1606: The host device 100 sends a message 2 to the Bluetooth accessory device 400, where the message includes the Bluetooth MAC address of the Bluetooth accessory device 300, and the message indicates the Bluetooth accessory device 400 to send the Bluetooth MAC address of the Bluetooth accessory device 300 to a device, other than the host device 100, that establishes a Bluetooth communication connection with the Bluetooth accessory device 400.

Specifically, after the host device 100 obtains the Bluetooth MAC address of the Bluetooth accessory device 300, the host device 100 may send the message 2 to the Bluetooth accessory device 400, where the message may include the Bluetooth MAC address of the Bluetooth accessory device 300, and the message may indicate the Bluetooth accessory device 400 to send the Bluetooth MAC address of the Bluetooth accessory device 300 to the another device (for example, the host device 200), other than the host device 100, that establishes the Bluetooth communication connection with the Bluetooth accessory device 400. Therefore, the device, other than the host device 100, that establishes the Bluetooth communication connection with the Bluetooth accessory device 400 may automatically perform Bluetooth pairing with the Bluetooth accessory device 300 based on the Bluetooth MAC address of the Bluetooth accessory device 300 and establish a Bluetooth communication connection.

S1607 and S1608: The Bluetooth accessory device 400 determines, based on the message 2, that the Bluetooth MAC address of the Bluetooth accessory device 300 needs to be sent to the host device 200, and then the Bluetooth accessory device 400 may send the Bluetooth MAC address of the Bluetooth accessory device 300 to the host device 200.

Specifically, after receiving the message 2 sent by the host device 100, the Bluetooth accessory device 400 may obtain the Bluetooth MAC address of the Bluetooth accessory device 300 included in the message 2. Further, because devices that establish Bluetooth communication connections with the Bluetooth accessory device 400 are the host device 100 and the host device 200, the Bluetooth accessory device 400 may determine that the Bluetooth MAC address of the Bluetooth accessory device 300 needs to be sent to the host device 200. Further, the Bluetooth accessory device 400 may send the Bluetooth MAC address of the Bluetooth accessory device 300 to the host device 200, so that the host device 200 may automatically perform Bluetooth pairing with the Bluetooth accessory device 300 based on the Bluetooth MAC address of the Bluetooth accessory device 300 and establish a Bluetooth communication connection.

S1609: The Bluetooth accessory device 300 sends the Bluetooth broadcast message to the host device 200.

Specifically, after the Bluetooth accessory device 300 receives the message 1 sent by the host device 100, the Bluetooth accessory device 300 may open a channel other than the Bluetooth channel 1 to send the Bluetooth broadcast message to one or more host devices. The Bluetooth channel 2 of the Bluetooth accessory device 300 and the host device 200 are used as an example. The Bluetooth accessory device 300 may send the Bluetooth broadcast message to the host device 200 through the Bluetooth channel 2 of the Bluetooth accessory device 300.

The Bluetooth broadcast message may be a Bluetooth pairing broadcast message, and the Bluetooth broadcast message may include the Bluetooth MAC address of the Bluetooth accessory device 300.

S1610: The host device 200 determines, based on the Bluetooth broadcast message and the Bluetooth MAC address of the Bluetooth accessory device 300, to perform Bluetooth pairing with the Bluetooth accessory device 300 and establish the Bluetooth communication connection.

Specifically, after the host device 200 receives the Bluetooth broadcast message sent by the Bluetooth accessory device 300 and the Bluetooth MAC address of the Bluetooth accessory device 300 sent by the Bluetooth accessory device 400, the host device 200 may determine, based on the Bluetooth broadcast message sent by the Bluetooth accessory device 300 and the Bluetooth MAC address of the Bluetooth accessory device 300 sent by the Bluetooth accessory device 400, that it is necessary to perform Bluetooth pairing with the Bluetooth accessory device 300 and establish the Bluetooth communication connection. Further, the host device 200 may automatically perform Bluetooth pairing with the Bluetooth accessory device 300, and after Bluetooth pairing is completed, the host device 200 may establish the Bluetooth communication connection with the Bluetooth accessory device 300.

S1611: The Bluetooth accessory device 300 establishes a Bluetooth communication connection 2' with the host device 200 through a channel other than the Bluetooth channel 1.

Specifically, after the host device 200 performs Bluetooth pairing with the Bluetooth accessory device 300 and completes Bluetooth pairing, the Bluetooth accessory device 300 may establish the Bluetooth communication connection 2' with the host device 200 through the channel (for example, the Bluetooth channel 2 of the Bluetooth accessory device 300) other than the Bluetooth channel 1.

It may be understood that, in embodiments of this application, that two Bluetooth accessory devices establish Bluetooth communication connections with two host devices is merely used as an example, and a specific process of establishing Bluetooth communication connections between more Bluetooth accessory devices and more host devices is similar. Details are not described herein again.

According to the method provided by an embodiment shown in FIG. 16A and FIG. 16B, a host device (for example, the host device 100) may send, through a Bluetooth accessory device (for example, the Bluetooth accessory device 400) that establishes a Bluetooth communication connection with the host device, device information (such as a Bluetooth MAC address) of another Bluetooth accessory device (for example, the Bluetooth accessory device 300) to another host device (for example, the host device 200) that establishes a Bluetooth communication connection with the Bluetooth accessory device, so that one or more host devices obtain device information of a Bluetooth accessory device that does not establish a Bluetooth communication connection with the host devices. In this way, the one or more host devices may actively perform Bluetooth pairing with the Bluetooth accessory device based on the device information of the Bluetooth accessory device and establish a Bluetooth communication connection, to simplify user operations, and improve user experience.

All or some of the foregoing embodiments may be implemented by using software, hardware, firmware, or any combination thereof. When software is used to implement the foregoing embodiments, all or some of embodiments may be implemented in a form of a computer program product. The computer program product includes one or more computer instructions. When the computer program instructions are loaded and executed on a computer, procedures or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (SSD)), or the like.

Persons of ordinary skill in the art may understand that all or some of the procedures of the methods in embodiments may be implemented by a computer program instructing relevant hardware. The program may be stored in a computer-readable storage medium. When the program runs, the procedures of the method embodiments may be included. The foregoing storage medium includes any medium that can store program code, such as a ROM, a random access memory RAM, a magnetic disk, or an optical disc.

The foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof.

## Claims

1. A communication system, wherein the communication system comprises a first host device (100), a first accessory device (400), and a second accessory device (300);
the first accessory device (400) is configured to establish a first communication connection with the first host device (100);
the second accessory device (300) is configured to establish a second communication connection with the first host device (100);
the second accessory device (300) is further configured to send a first message to the first host device (100), wherein the first message comprises a device type of the second accessory device (300);
the first accessory device (400) is further configured to: in response to a first event triggered by a user, send first data to the first host device (100) through the first communication connection, wherein the first data comprises information about the first event, and wherein the first data further comprises device information of one or more accessory devices, the device information of the one or more accessory devices comprises device information of the second accessory device (300), and the device information of the second accessory device (300) is used by the first host device (100) to determine to send the information about the first event to the second accessory device (300), and wherein the device information of the second accessory device (300) comprises the device type of the second accessory device (300);
the first host device (100) is configured to store a mapping relationship between the second communication connection and the device type of the second accessory device (300), and determine, based on the device type of the second accessory device (300) and the mapping relationship between the second communication connection and the device type of the second accessory device (300), to send the information about the first event to the second accessory device (300) through the second communication connection; and
the second accessory device (300) is further configured to: receive the information about the first event sent by the first host device (100), and perform a response operation based on the information about the first event.

2. The communication system according to claim 1, wherein the communication system further comprises a second host device (200), the first event is an event of changing a focus host device from the first host device (100) to the second host device (200), the information about the first event comprises device information of the second host device (200);
the second accessory device (300) is specifically configured to change the focus host device from the first host device (100) to the second host device (200) based on the device information of the second host device (200).

3. The communication system according to claim 1, wherein the first accessory device (300) is a keyboard, the second accessory device (400) is a mouse, the first event is an event of pressing a button for adjusting dots per inch, DPI, the information about the first event comprises a button value of the button for adjusting the DPI;
the second accessory device (400) is specifically configured to adjust DPI of the second accessory device (400) based on the button value of the button for adjusting the DPI.

4. The communication system according to claim 3, wherein the button for adjusting the DPI comprises a DPI button, a button combination for increasing the DPI, or a button combination for decreasing the DPI;
the second accessory device (400) is specifically configured to:
when the button for adjusting the DPI is the DPI button, increase or decrease the DPI of the second accessory device (400) based on the button value of the DPI button;
or
when the button for adjusting the DPI is the button combination for increasing the DPI, increase the DPI of the second accessory device (400) based on the button value of the button combination for increasing the DPI;
or
when the button for adjusting the DPI is the button combination for decreasing the DPI, decrease the DPI of the second accessory device (400) based on the button value of the button combination for decreasing the DPI.

5. The communication system according to claim 1, wherein the first accessory device (300) is a keyboard, the second accessory device (400) is a mouse, the first event is an event of pressing a button for adjusting a light effect, the information about the first event comprises a button value of the button for adjusting the light effect;
the second accessory device (400) is specifically configured to adjust a light effect of the second accessory device (400) based on the button value of the button for adjusting the light effect.

6. The communication system according to claim 5, wherein the button for adjusting the light effect comprises a light up button for increasing brightness, a light down button for decreasing brightness, a button combination for increasing brightness, or a button combination for decreasing brightness;
the second accessory device (400) is specifically configured to:
when the button for adjusting the light effect is the light up button or the button combination for increasing the brightness, increase brightness of the light effect of the second accessory device (400) based on a button value of the light up button or a button value of the button combination for increasing the brightness;
or
when the button for adjusting the light effect is the light down button or the button combination for decreasing the brightness, decrease brightness of the light effect of the second accessory device (400) based on a button value of the light down button or a button value of the button combination for decreasing the brightness.

7. The communication system according to claim 1, wherein the first accessory device (400) is a mouse, the second accessory device (300) is a keyboard, the first event is an event of pressing a first button by the user;
the second accessory device (300) is specifically configured to:
convert the event of pressing the first button by the user and an event of pressing a second button by the user into an event of pressing a third button by the user, wherein the event of pressing the second button by the user is detected by the second accessory device (300) after the second accessory device (300) receives the information about the first event sent by the first host device (100); and
send a button value of the third button to the first host device (100);
the first host device (100) is further configured to respond to a function corresponding to the button value of the third button.

8. The communication system according to any one of claims 1 to 7, wherein the second accessory device (300) is further configured to send a second message to the first accessory device (400) through the first host device (100), wherein the second message is used to notify the first accessory device (400) of a result of performing the response operation by the second accessory device (300).

9. The communication system according to any one of claims 1 to 8, wherein both the first communication connection and the second communication connection are Bluetooth communication connections.

10. A communication method, applied to a second accessory device (300), wherein the method comprises:
establishing, by the second accessory device (300), a first communication connection with a first host device (100);
sending, by the second accessory device (300), a first message to the first host device (100) through the first communication connection, wherein the first message comprises a device type of the second accessory device (300), and the first message is used by the first host device (100) to store a mapping relationship between the first communication connection and the device type of the second accessory device (300);
receiving, by the second accessory device (300) through the first communication connection, information about a first event sent by the first host device (100), wherein the information about the first event is included in first data, the first data comprises device information of one or more accessory devices including device information of the second accessory device (300), the information about the first event is sent by a first accessory device (400) to the first host device (100) after the first accessory device (400) detects the first event triggered by a user, and the first host device (100) determines, based on the device type of the second accessory device (300) and the mapping relationship, to send the information about the first event to the second accessory device (300) through the first communication connection; and
performing, by the second accessory device (300), a response operation based on the information about the first event.

11. A communication method, applied to a first host device (100), wherein the method comprises:
establishing, by the first host device (100), a first communication connection with a first accessory device (400);
establishing, by the first host device (100), a second communication connection with a second accessory device (300);
receiving, by the first host device (100) through the second communication connection, a first message sent by the second accessory device (300), wherein the first message comprises a device type of the second accessory device (300);
storing, by the first host device (100), a mapping relationship between the second communication connection and the device type of the second accessory device (300);
receiving, by the first host device (100) through the first communication connection, first data sent by the first accessory device (400), wherein the first data comprises information about a first event and device information of one or more accessory devices, the device information of the one or more accessory devices comprises device information of the second accessory device (300), and the first data is sent by the first accessory device (400) after the first accessory device (400) detects the first event triggered by a user; and
determining, by the first host device (100), based on the device type of the second accessory device (300) and the mapping relationship between the second communication connection and the device type of the second accessory device (300), to send the information about the first event to the second accessory device (300) through the second communication connection; and
sending, by the first host device (100), the information about the first event to the second accessory device (300) through the second communication connection, wherein the information about the first event is used by the second accessory device (300) to perform a response operation based on the information about the first event.

12. An electronic device, wherein the electronic device comprises one or more processors and one or more memories, the one or more memories are coupled to the one or more processors, the one or more memories are configured to store computer program code, the computer program code comprises computer instructions, and when the one or more processors execute the computer instructions, the electronic device is enabled to perform the method according to claim 10 or 11.

## Patentansprüche

1. Kommunikationssystem, wobei das Kommunikationssystem eine erste Hostvorrichtung (100), eine erste Zusatzvorrichtung (400) und eine zweite Zusatzvorrichtung (300) umfasst;
die erste Zusatzvorrichtung (400) dazu konfiguriert ist, eine erste Kommunikationsverbindung mit der ersten Hostvorrichtung (100) herzustellen;
die zweite Zusatzvorrichtung (300) dazu konfiguriert ist, eine zweite Kommunikationsverbindung mit der ersten Hostvorrichtung (100) herzustellen;
die zweite Zusatzvorrichtung (300) ferner dazu konfiguriert ist, eine erste Nachricht an die erste Hostvorrichtung (100) zu senden, wobei die erste Nachricht einen Vorrichtungstyp der zweiten Zusatzvorrichtung (300) umfasst;
die erste Zusatzvorrichtung (400) ferner dazu konfiguriert ist: als Reaktion auf ein erstes Ereignis, das durch einen Benutzer ausgelöst wird, erste Daten über die erste Kommunikationsverbindung an die erste Hostvorrichtung (100) zu senden, wobei die ersten Daten Informationen über das erste Ereignis umfassen, und wobei die ersten Daten ferner Vorrichtungsinformationen einer oder mehrerer Zusatzvorrichtungen umfassen, die Vorrichtungsinformationen der einen oder mehreren Zusatzvorrichtungen Vorrichtungsinformationen der zweiten Zusatzvorrichtung (300) umfassen und die Vorrichtungsinformationen der zweiten Zusatzvorrichtung (300) durch die erste Hostvorrichtung (100) verwendet werden, um zu bestimmen, die Informationen über das erste Ereignis an die zweite Zusatzvorrichtung (300) zu senden, und wobei die Vorrichtungsinformationen der zweiten Zusatzvorrichtung (300) den Vorrichtungstyp der zweiten Zusatzvorrichtung (300) umfassen;
die erste Hostvorrichtung (100) dazu konfiguriert ist, eine Zuordnungsbeziehung zwischen der zweiten Kommunikationsverbindung und dem Vorrichtungstyp der zweiten Zusatzvorrichtung (300) zu speichern und basierend auf dem Vorrichtungstyp der zweiten Zusatzvorrichtung (300) und der Zuordnungsbeziehung zwischen der zweiten Kommunikationsverbindung und dem Vorrichtungstyp der zweiten Zusatzvorrichtung (300) zu bestimmen, die Informationen über das erste Ereignis über die zweite Kommunikationsverbindung an die zweite Zusatzvorrichtung (300) zu senden; und
die zweite Zusatzvorrichtung (300) dazu konfiguriert ist: die Informationen über das erste Ereignis zu empfangen, die durch die erste Hostvorrichtung (100) gesendet werden, und eine Antwortoperation basierend auf den Informationen über das erste Ereignis durchzuführen.

2. Kommunikationssystem nach Anspruch 1, wobei das Kommunikationssystem ferner eine zweite Hostvorrichtung (200) umfasst, das erste Ereignis ein Ereignis zum Wechseln einer Fokus-Hostvorrichtung von der ersten Hostvorrichtung (100) zu der zweiten Hostvorrichtung (200) ist, die Informationen über das erste Ereignis Vorrichtungsinformationen der zweiten Hostvorrichtung (200) umfassen;
die zweite Zusatzvorrichtung (300) insbesondere dazu konfiguriert ist, die Fokus-Hostvorrichtung von der ersten Hostvorrichtung (100) zu der zweite Hostvorrichtung (200) basierend auf den Vorrichtungsinformationen der zweiten Hostvorrichtung (200) zu wechseln.

3. Kommunikationssystem nach Anspruch 1, wobei die erste Zusatzvorrichtung (300) eine Tastatur ist, die zweite Zusatzvorrichtung (400) eine Maus ist, das erste Ereignis ein Ereignis des Drückens einer Taste zum Einstellen von Dots per Inch, DPI, bzw. Punkte pro Zoll ist, die Informationen über das erste Ereignis einen Tastenwert der Taste zum Einstellen des DPI umfasst;
die zweite Zusatzvorrichtung (400) insbesondere dazu konfiguriert ist, die DPI der zweiten Zusatzvorrichtung (400) basierend auf dem Tastenwert der Taste zum Einstellen der DPI einzustellen.

4. Kommunikationssystem nach Anspruch 3, wobei die Taste zum Einstellen der DPI eine DPI-Taste, eine Tastenkombination zum Erhöhen der DPI oder eine Tastenkombination zum Verringern der DPI umfasst;
die zweite Zusatzvorrichtung (400) insbesondere dazu konfiguriert ist:
wenn die Taste zum Einstellen der DPI die DPI-Taste ist, die DPI der zweiten Zusatzvorrichtung (400) basierend auf dem Tastenwert der DPI-Taste zu erhöhen oder zu verringern;
oder
wenn die Taste zum Einstellen der DPI die Tastenkombination zum Erhöhen der DPI ist, die DPI der zweiten Zusatzvorrichtung (400) basierend auf dem Tastenwert der Tastenkombination zum Erhöhen der DPI zu erhöhen;
oder
wenn die Taste zum Einstellen der DPI die Tastenkombination zum Verringern der DPI ist, die DPI der zweiten Zusatzvorrichtung (400) basierend auf dem Tastenwert der Tastenkombination zum Verringern der DPI zu verringern.

5. Kommunikationssystem nach Anspruch 1, wobei die erste Zusatzvorrichtung (300) eine Tastatur ist, die zweite Zusatzvorrichtung (400) eine Maus ist, das erste Ereignis ein Ereignis des Drückens einer Taste zum Einstellen eines Lichteffekts ist, die Informationen über das erste Ereignis einen Tastenwert der Taste zum Einstellen des Lichteffekts umfasst;
die zweite Zusatzvorrichtung (400) insbesondere dazu konfiguriert ist, einen Lichteffekt der zweiten Zusatzvorrichtung (400) basierend auf dem Tastenwert der Taste zum Einstellen des Lichteffekts einzustellen.

6. Kommunikationssystem nach Anspruch 5, wobei die Taste zum Einstellen des Lichteffekts eine Licht-Heller-Taste zum Erhöhen der Helligkeit, eine Licht-Dunkler-Taste zum Verringern der Helligkeit, eine Tastenkombination zum Erhöhen der Helligkeit oder eine Tastenkombination zum Verringern der Helligkeit umfasst;
die zweite Zusatzvorrichtung (400) insbesondere dazu konfiguriert ist:
wenn die Taste zum Einstellen des Lichteffekts die Licht-Heller-Taste oder die Tastenkombination zum Erhöhen der Helligkeit ist, eine Helligkeit des Lichteffekts der zweiten Zusatzvorrichtung (400) basierend auf einem Tastenwert der Licht-Heller-Taste oder einem Tastenwert der Tastenkombination zum Erhöhen der Helligkeit zu erhöhen;
oder
wenn die Taste zum Einstellen des Lichteffekts die Licht-Dunkler-Taste oder die Tastenkombination zum Verringern der Helligkeit ist, eine Helligkeit des Lichteffekts der zweiten Zusatzvorrichtung (400) basierend auf einem Tastenwert der Licht-Dunkler-Taste oder einem Tastenwert der Tastenkombination zum Verringern der Helligkeit zu verringern.

7. Kommunikationssystem nach Anspruch 1, wobei die erste Zusatzvorrichtung (400) eine Maus ist, die zweite Zusatzvorrichtung (300) eine Tastatur ist und das erste Ereignis ein Ereignis des Drückens einer ersten Taste durch den Benutzer ist;
die zweite Zusatzvorrichtung (300) insbesondere dazu konfiguriert ist:
das Ereignis des Drückens der ersten Taste durch den Benutzer und ein Ereignis des Drückens einer zweiten Taste durch den Benutzer in ein Ereignis des Drückens einer dritten Taste durch den Benutzer umzuwandeln, wobei das Ereignis des Drückens der zweiten Taste durch den Benutzer durch die zweite Zusatzvorrichtung (300) erfasst wird, nachdem die zweite Zusatzvorrichtung (300) die durch die erste Hostvorrichtung (100) gesendeten Informationen über das erste Ereignis empfangen hat; und
einen Tastenwert der dritten Taste an die erste Hostvorrichtung (100) zu senden;
die erste Hostvorrichtung (100) ferner dazu konfiguriert ist, auf eine Funktion entsprechend dem Tastenwert der dritten Taste zu reagieren.

8. Kommunikationssystem nach einem der Ansprüche 1 bis 7, wobei die zweite Zusatzvorrichtung (300) ferner dazu konfiguriert ist, eine zweite Nachricht über die erste Hostvorrichtung (100) an die erste Zusatzvorrichtung (400) zu senden, wobei die zweite Nachricht verwendet wird, um die erste Zusatzvorrichtung (400) über ein Ergebnis des Durchführens der Antwortoperation durch die zweite Zusatzvorrichtung (300) zu benachrichtigen.

9. Kommunikationssystem nach einem der Ansprüche 1 bis 8, wobei sowohl die erste Kommunikationsverbindung als auch die zweite Kommunikationsverbindung Bluetooth-Kommunikationsverbindungen sind.

10. Kommunikationsverfahren, das auf eine zweite Zusatzvorrichtung (300) angewendet wird, wobei das Verfahren Folgendes umfasst:
Herstellen einer ersten Kommunikationsverbindung mit einer ersten Hostvorrichtung (100) durch die zweite Zusatzvorrichtung (300);
Senden einer ersten Nachricht durch die zweite Zusatzvorrichtung (300) über die erste Kommunikationsverbindung an die erste Hostvorrichtung (100), wobei die erste Nachricht einen Vorrichtungstyp der zweiten Zusatzvorrichtung (300) umfasst, und
die erste Nachricht durch die erste Hostvorrichtung (100) verwendet wird, um eine Zuordnungsbeziehung zwischen der ersten Kommunikationsverbindung und dem Vorrichtungstyp der zweiten Zusatzvorrichtung (300) zu speichern;
Empfangen von Informationen über ein erstes Ereignis, das durch die erste Hostvorrichtung (100) gesendet wird, durch die zweite Zusatzvorrichtung (300) über die erste Kommunikationsverbindung, wobei die Informationen über das erste Ereignis in ersten Daten enthalten sind, die ersten Daten Vorrichtungsinformationen von einer oder mehreren Zusatzvorrichtungen, die Vorrichtungsinformationen der zweiten Zusatzvorrichtung (300) beinhalten, umfassen, die Informationen über das erste Ereignis durch eine erste Zusatzvorrichtung (400) an die erste Hostvorrichtung (100) gesendet werden, nachdem die erste Zusatzvorrichtung (400) das durch einen Benutzer ausgelöste erste Ereignis erfasst hat, und die erste Hostvorrichtung (100) basierend auf dem Vorrichtungstyp der zweiten Zusatzvorrichtung (300) und der Zuordnungsbeziehung bestimmt, die Informationen über das erste Ereignis über die erste Kommunikationsverbindung an die zweite Zusatzvorrichtung (300) zu senden; und
Durchführen einer Antwortoperation durch die zweite Zusatzvorrichtung (300) basierend auf den Informationen über das erste Ereignis.

11. Kommunikationsverfahren, das auf eine erste Hostvorrichtung (100) angewendet wird, wobei das Verfahren Folgendes umfasst:
Herstellen einer ersten Kommunikationsverbindung mit einer ersten Zusatzvorrichtung (400) durch die erste Hostvorrichtung (100);
Herstellen einer zweiten Kommunikationsverbindung mit einer zweiten Zusatzvorrichtung (300) durch die erste Hostvorrichtung (100);
Empfangen einer ersten Nachricht, die durch die zweite Zusatzvorrichtung (300) gesendet wird, durch die erste Hostvorrichtung (100) über die zweite Kommunikationsverbindung, wobei die erste Nachricht einen Vorrichtungstyp der zweiten Zusatzvorrichtung (300) umfasst;
Speichern einer Zuordnungsbeziehung zwischen der zweiten Kommunikationsverbindung und dem Vorrichtungstyp der zweiten Zusatzvorrichtung (300) durch die erste Hostvorrichtung (100);
Empfangen erster Daten, die durch die erste Zusatzvorrichtung (400) gesendet werden, durch die erste Hostvorrichtung (100) über die erste Kommunikationsverbindung, wobei die ersten Daten Informationen über ein erstes Ereignis und Vorrichtungsinformationen einer oder mehrerer Zusatzvorrichtungen umfassen, die Vorrichtungsinformationen der einen oder mehreren Zusatzvorrichtungen Vorrichtungsinformationen der zweiten Zusatzvorrichtung (300) umfassen und die ersten Daten durch die erste Zusatzvorrichtung (400) gesendet werden, nachdem die erste Zusatzvorrichtung (400) das durch einen Benutzer ausgelöste erste Ereignis erfasst hat; und
Bestimmen durch die erste Hostvorrichtung (100) basierend auf dem Vorrichtungstyp der zweiten Zusatzvorrichtung (300) und der Zuordnungsbeziehung zwischen der zweiten Kommunikationsverbindung und dem Vorrichtungstyp der zweiten Zusatzvorrichtung (300), die Informationen über das erste Ereignis an die zweite Zusatzvorrichtung (300) über die zweite Kommunikationsverbindung zu senden; und
Senden der Informationen über das erste Ereignis durch die erste Hostvorrichtung (100) über die zweite Kommunikationsverbindung an die zweite Zusatzvorrichtung (300), wobei die Informationen über das erste Ereignis durch die zweite Zusatzvorrichtung (300) verwendet werden, um eine Antwortoperation basierend auf den Informationen über das erste Ereignis durchzuführen.

12. Elektronische Vorrichtung, wobei die elektronische Vorrichtung einen oder mehrere Prozessoren und einen oder mehrere Speicher umfasst, der eine oder die mehreren Speicher an den einen oder die mehreren Prozessoren gekoppelt sind, der eine oder die mehreren Speicher dazu konfiguriert sind, einen Computerprogrammcode zu speichern, der Computerprogrammcode Computeranweisungen umfasst, und, wenn der eine oder die mehreren Prozessoren die Computeranweisungen ausführen, die elektronische Vorrichtung in die Lage versetzt wird, das Verfahren nach Anspruch 10 oder 11 durchzuführen.

## Revendications

1. Système de communication, dans lequel le système de communication comprend un premier dispositif hôte (100), un premier dispositif accessoire (400) et un second dispositif accessoire (300) ;
le premier dispositif accessoire (400) est configuré pour établir une première connexion de communication avec le premier dispositif hôte (100) ;
le second dispositif accessoire (300) est configuré pour établir une seconde connexion de communication avec le premier dispositif hôte (100) ;
le second dispositif accessoire (300) est en outre configuré pour envoyer un premier message au premier dispositif hôte (100), dans lequel le premier message comprend un type de dispositif du second dispositif accessoire (300) ;
le premier dispositif accessoire (400) est en outre configuré pour : en réponse à un premier événement déclenché par un utilisateur, envoyer des premières données au premier dispositif hôte (100) à travers la première connexion de communication, dans lequel les premières données comprennent des informations concernant le premier événement, et dans lequel les premières données comprennent en outre des informations de dispositif d'un ou plusieurs dispositifs accessoires, les informations de dispositif des un ou plusieurs dispositifs accessoires comprennent les informations de dispositif du second dispositif accessoire (300), et les informations de dispositif du second dispositif accessoire (300) sont utilisées par le premier dispositif hôte (100) pour déterminer d'envoyer les informations concernant le premier événement au second dispositif accessoire (300), et dans lequel les informations de dispositif du second dispositif accessoire (300) comprennent le type de dispositif du second dispositif accessoire (300) ;
le premier dispositif hôte (100) est configuré pour stocker une relation de mappage entre la seconde connexion de communication et le type de dispositif du second dispositif accessoire (300), et pour déterminer, sur la base du type de dispositif du second dispositif accessoire (300) et de la relation de mappage entre la seconde connexion de communication et le type de dispositif du second dispositif accessoire (300), d'envoyer les informations concernant le premier événement au second dispositif accessoire (300) à travers la seconde connexion de communication ; et
le second dispositif accessoire (300) est en outre configuré pour : recevoir les informations concernant le premier événement envoyées par le premier dispositif hôte (100) et réaliser une opération de réponse sur la base des informations concernant le premier événement.

2. Système de communication selon la revendication 1, dans lequel le système de communication comprend en outre un second dispositif hôte (200), le premier événement est un événement de changement d'un dispositif hôte principal du premier dispositif hôte (100) au second dispositif hôte (200), les informations concernant le premier événement comprennent les informations de dispositif du second dispositif hôte (200) ;
le second dispositif accessoire (300) est spécifiquement configuré pour changer le dispositif hôte principal du premier dispositif hôte (100) au second dispositif hôte (200) sur la base des informations de dispositif du second dispositif hôte (200) .

3. Système de communication selon la revendication 1, dans lequel le premier dispositif accessoire (300) est un clavier, le second dispositif accessoire (400) est une souris, le premier événement est un événement d'appui sur un bouton destiné à régler les points par pouce, DPI, les informations concernant le premier événement comprennent une valeur de bouton du bouton destiné à régler les DPI ;
le second dispositif accessoire (400) est spécifiquement configuré pour régler les DPI du second dispositif accessoire (400) sur la base de la valeur de bouton du bouton destiné à régler les DPI.

4. Système de communication selon la revendication 3, dans lequel le bouton destiné à régler les DPI comprend un bouton DPI, une combinaison de boutons destinés à augmenter les DPI ou une combinaison de boutons destinés à diminuer les DPI ;
le second dispositif accessoire (400) est spécifiquement configuré pour :
lorsque le bouton destiné à régler les DPI est le bouton DPI, augmenter ou diminuer les DPI du second dispositif accessoire (400) sur la base de la valeur de bouton du bouton DPI ;
ou
lorsque le bouton destiné à régler les DPI est la combinaison de boutons destinés à augmenter les DPI, augmenter les DPI du second dispositif accessoire (400) sur la base de la valeur de bouton de la combinaison de boutons destinés à augmenter les DPI ;
ou
lorsque le bouton destiné à régler les DPI est la combinaison de boutons destinés à diminuer les DPI, diminuer les DPI du second dispositif accessoire (400) sur la base de la valeur de bouton de la combinaison de boutons destinés à diminuer DPI.

5. Système de communication selon la revendication 1, dans lequel le premier dispositif accessoire (300) est un clavier, le second dispositif accessoire (400) est une souris, le premier événement est un événement d'appui sur un bouton destiné à régler un effet lumineux, les informations concernant le premier événement comprennent une valeur de bouton du bouton destiné à régler l'effet lumineux ;
le second dispositif accessoire (400) est spécifiquement configuré pour régler un effet lumineux du second dispositif accessoire (400) sur la base de la valeur de bouton du bouton destiné à régler l'effet lumineux.

6. Système de communication selon la revendication 5, dans lequel le bouton destiné à régler l'effet lumineux comprend un bouton d'augmentation de lumière destiné à augmenter la luminosité, un bouton de réduction de lumière destiné à diminuer la luminosité, une combinaison de boutons destinés à augmenter la luminosité ou une combinaison de boutons destinés à diminuer la luminosité ;
le second dispositif accessoire (400) est spécifiquement configuré pour :
lorsque le bouton destiné à régler l'effet lumineux est le bouton d'augmentation de lumière ou la combinaison de boutons destinés à augmenter la luminosité, augmenter la luminosité de l'effet lumineux du second dispositif accessoire (400) sur la base d'une valeur de bouton du bouton d'augmentation de lumière ou d'une valeur de bouton de la combinaison de boutons destinés à augmenter la luminosité ;
ou
lorsque le bouton destiné à régler l'effet lumineux est le bouton de réduction de lumière ou la combinaison de boutons destinés à réduire la luminosité, diminuer la luminosité de l'effet lumineux du second dispositif accessoire (400) sur la base d'une valeur de bouton du bouton de réduction de lumière ou d'une valeur de bouton de la combinaison de boutons destinés à diminuer la luminosité.

7. Système de communication selon la revendication 1, dans lequel le premier dispositif accessoire (400) est une souris, le second dispositif accessoire (300) est un clavier, le premier événement est un événement d'appui sur un premier bouton par l'utilisateur ;
le second dispositif accessoire (300) est spécifiquement configuré pour :
convertir l'événement d'appui sur le premier bouton par l'utilisateur et un événement d'appui sur un deuxième bouton par l'utilisateur en un événement d'appui sur un troisième bouton par l'utilisateur, dans lequel l'événement d'appui sur le deuxième bouton par l'utilisateur est détecté par le second dispositif accessoire (300) après que le second dispositif accessoire (300) a reçu les informations concernant le premier événement envoyées par le premier dispositif hôte (100) ; et
envoyer une valeur de bouton du troisième bouton au premier dispositif hôte (100) ;
le premier dispositif hôte (100) est en outre configuré pour répondre à une fonction correspondant à la valeur de bouton du troisième bouton.

8. Système de communication selon l'une quelconque des revendications 1 à 7, dans lequel le second dispositif accessoire (300) est en outre configuré pour envoyer un second message au premier dispositif accessoire (400) à travers le premier dispositif hôte (100), dans lequel le second message est utilisé pour notifier au premier dispositif accessoire (400) un résultat de réalisation de l'opération de réponse par le second dispositif accessoire (300).

9. Système de communication selon l'une quelconque des revendications 1 à 8, dans lequel la première connexion de communication et la seconde connexion de communication sont toutes deux des connexions de communication Bluetooth.

10. Procédé de communication, appliqué à un second dispositif accessoire (300), dans lequel le procédé comprend :
l'établissement, par le second dispositif accessoire (300), d'une première connexion de communication avec un premier dispositif hôte (100) ;
l'envoi, par le second dispositif accessoire (300), d'un premier message au premier dispositif hôte (100) à travers la première connexion de communication, dans lequel le premier message comprend un type de dispositif du second dispositif accessoire (300), et le premier message est utilisé par le premier dispositif hôte (100) pour stocker une relation de mappage entre la première connexion de communication et le type de dispositif du second dispositif accessoire (300) ;
la réception, par le second dispositif accessoire (300), à travers la première connexion de communication, d'informations concernant un premier événement envoyées par le premier dispositif hôte (100), dans lequel les informations concernant le premier événement sont incluses dans des premières données, les premières données comprennent des informations de dispositif d'un ou plusieurs dispositifs accessoire, y compris des informations de dispositif du second dispositif accessoire (300), les informations concernant le premier événement sont envoyées par un premier dispositif accessoire (400) au premier dispositif hôte (100) après que le premier dispositif accessoire (400) a détecté le premier événement déclenché par un utilisateur, et le premier dispositif hôte (100) détermine, sur la base du type de dispositif du second dispositif accessoire (300) et de la relation de mappage, d'envoyer les informations concernant le premier événement au second dispositif accessoire (300) à travers la première connexion de communication ; et la réalisation, par le second dispositif accessoire (300), d'une opération de réponse sur la base des informations concernant le premier événement.

11. Procédé de communication, appliqué à un premier dispositif hôte (100), dans lequel le procédé comprend :
l'établissement, par le premier dispositif hôte (100), d'une première connexion de communication avec un premier dispositif accessoire (400) ;
l'établissement, par le premier dispositif hôte (100), d'une seconde connexion de communication avec un second dispositif accessoire (300) ;
la réception, par le premier dispositif hôte (100) à travers la seconde connexion de communication, d'un premier message envoyé par le second dispositif accessoire (300), dans lequel le premier message comprend un type de dispositif du second dispositif accessoire (300) ;
le stockage, par le premier dispositif hôte (100), d'une relation de mappage entre la seconde connexion de communication et le type de dispositif du second dispositif accessoire (300) ;
la réception, par le premier dispositif hôte (100) à travers la première connexion de communication, de premières données envoyées par le premier dispositif accessoire (400), dans lequel les premières données comprennent des informations concernant un premier événement et des informations de dispositif d'un ou plusieurs dispositifs accessoires, les informations de dispositif des un ou plusieurs dispositifs accessoires comprennent les informations de dispositif du second dispositif accessoire (300), et les premières données sont envoyées par le premier dispositif accessoire (400) après que le premier dispositif accessoire (400) a détecté le premier événement déclenché par un utilisateur ; et
la détermination, par le premier dispositif hôte (100), sur la base du type de dispositif du second dispositif accessoire (300) et de la relation de mappage entre la seconde connexion de communication et le type de dispositif du second dispositif accessoire (300), d'envoyer les informations concernant le premier événement au second dispositif accessoire (300) à travers la seconde connexion de communication ; et
l'envoi, par le premier dispositif hôte (100), des informations concernant le premier événement au second dispositif accessoire (300) à travers la seconde connexion de communication, dans lequel les informations concernant le premier événement sont utilisées par le second dispositif accessoire (300) pour réaliser une opération de réponse sur la base des informations concernant le premier événement.

12. Dispositif électronique, dans lequel le dispositif électronique comprend un ou plusieurs processeurs et une ou plusieurs mémoires, les une ou plusieurs mémoires sont couplées aux un ou plusieurs processeurs, les une ou plusieurs mémoires sont configurées pour stocker un code de programme informatique, le code de programme informatique comprend des instructions informatiques, et lorsque les un ou plusieurs processeurs exécutent les instructions informatiques, le dispositif électronique est activé pour réaliser le procédé selon la revendication 10 ou 11.
